(19) **Europäisches Patentamt**
**European Patent Office**
**Office européen des brevets**

(11) **EP 2 884 731 A1**

(12) **EUROPEAN PATENT APPLICATION**

(43) Date of publication:
**17.06.2015 Bulletin 2015/25**

(21) Application number: **14197175.4**

(22) Date of filing: **10.12.2014**

(51) Int Cl.:
***H04N 1/60*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **11.12.2013 JP 2013255737**

(71) Applicant: **Seiko Epson Corporation**
**Shinjuku-ku**
**Tokyo (JP)**

(72) Inventor: **Okumura, Yoshio**
**Suwa-shi, Nagano 392-8502 (JP)**

(74) Representative: **Miller Sturt Kenyon**
**9 John Street**
**London WC1N 2ES (GB)**

(54) **Lookup table generation method, lookup table generation apparatus and color conversion apparatus**

(57) A lookup table generation method includes generating a lookup table which defines a correlation between usage amounts of first color materials used by a printing machine in formation of printed matter and usage amounts of second color materials used by an image forming apparatus in formation of a color reproduction image, in which the lookup table is generated to define the correlation so as to exhibit first output properties in relation to a first region including colors contained in a specific image in an input color space which is represented by colors of the first color materials, and to define the correlation so as to exhibit second output properties, which differ from the first output properties, in relation to a second region, which is different from the first region, in the input color space.

FIG. 2

EP 2 884 731 A1

**Description**

BACKGROUND

1. Technical Field

The present invention relates to a lookup table generation method, a lookup table generation apparatus and a color conversion apparatus.

2. Related Art

Before using a main printing machine, in order to check the shade and the like of printed matter which is formed by the main printing machine, a proof is formed using a print proof machine and the proof is checked. When using an offset printing machine or a gravure printing machine for the main printing machine, the printed matter is formed using four types of color material such as CMYK (cyan, magenta, yellow, and black) only. Using the same CMYK color materials as the main printing machine in the print proof machine for a Direct Digital Color Proof (DDCP) is also carried out. Meanwhile, in addition to the CMYK inks, there is an ink jet printer which uses some or all inks such as light cyan (Ic), light magenta (Im), light black (Ik), light light black (IIk), red (R), orange (Or), and green (Gr), for example. The ink jet printer is capable of printing a high image quality photographic image.

Note that, a technology which optimizes an ink amount of grid points of a Lookup Table (LUT) in order to optimize image quality elements such as color reproduction is disclosed in JP-T-2007-516663.

In JP-A-2007-137021, it is disclosed that a LUT which defines the ink amounts of chromatic color inks of CMYlclm (cyan, magenta, yellow, light cyan, light magenta) and three level concentrations of K1, K2, and K3 inks and a LUT which defines the ink amounts of the chromatic color inks of CMYclm and the two level concentrations K1 and K2 inks be used separately.

When only the same CMYK color materials as the main printing machine are used for the color materials of the print proof machine, high image quality photographic printing such as that obtained using the ink jet printer described above cannot be performed.

The technology described in JP-T-2007-516663 assumes that an input image is defined using a three-dimensional color space in which corresponding chromatic values are clear such as an sRGB color space or a L*a*b* color space, and is not intended for use with an input image of a device-dependent color space such as a four-dimensional color space of the CMYK color materials which are used in the formation of the printed matter by the main printing machine. Therefore, the technology is not designed to establish image quality with an understanding of the characteristics of an input image such as a CMYK image, and does not include the technical concept of optimizing the precision of color reproduction limited to a specific image.

The technology described in JP-A-2007-137021 has a demerit in that it is necessary to hold a plurality of LUTs and it takes time to create the LUTs. In the same manner as described above, the technology assumes that an input image is defined using a three-dimensional color space in which corresponding chromatic values are clear such as an sRGB color space, and is not intended for use with an input image of a device-dependent color space such as a four-dimensional color space of the CMYK color materials which are used in the formation of the printed matter by the main printing machine. Therefore, the technology is not designed to establish image quality with an understanding of the characteristics of an input image such as a CMYK image, and does not include the technical concept of optimizing the precision of color reproduction limited to a specific image.

When the color materials of the print proof machine are matched to the fewer color materials of the main printing machine, it is possible to obtain high-precision color reproduction; however, the diversity of image quality which can be obtained by using multiple colors of ink separately cannot be realized. Therefore, both photographic image quality and proof image quality with one print proof machine cannot be obtained.

Note that, problems such as the one described above are not limited to technology which generates LUTs for an offset printing machine and a gravure printing machine, and the problems are present in the same manner in relation to various technologies.

SUMMARY

An advantage of some aspects of the invention is to realize high-precision color reproduction in relation to colors of a specific image using one lookup table which defines a correlation between color material usage amounts which are matched to color materials of a printing machine, and color material usage amounts which are matched to color materials of an image forming apparatus.

According to an aspect of the invention, there is provided a lookup table generation method which includes generating a lookup table which defines a correlation between usage amounts of first color materials used by a printing machine in formation of printed matter and usage amounts of second color materials used by an image forming apparatus in formation of a color reproduction image. The lookup table is generated to define the correlation so as to exhibit first output properties in relation to a first region including colors contained in a specific image in an input color space which is represented by colors of the first color materials, and to define the correlation so as to exhibit second output properties, which differ from the first output properties, in relation to a second region, which is different from the first region, in the input color space.

In other words, the correlation between the usage amounts of the first color materials which are used by the printing machine and the usage amounts of the second color materials which are used by the image forming apparatus are defined in the generated lookup table. In the single lookup table, the correlation is defined so as to exhibit the first output properties in relation to the first region including the colors contained in the specific image in the input color space, and the correlation is defined so as to exhibit the second output properties, which differ from the first output properties, in relation to the second region, which differs from the first region, in the input color space. In this case, high-precision color reproduction in relation to colors of a specific image using one lookup table which defines a correlation between color material usage amounts which are matched to color materials of a printing machine, and color material usage amounts which are matched to color materials of an image forming apparatus can be realized.

A color conversion apparatus according to another aspect of the invention includes a memory unit which stores a lookup table which defines a correlation between usage amounts of first color materials used by a printing machine in formation of printed matter and usage amounts of second color materials used by an image forming apparatus in formation of a color reproduction image, in which the lookup table is generated to define the correlation so as to exhibit first output properties in relation to a first region including colors contained in a specific image in an input color space which is represented by colors of the first color materials, and to define the correlation so as to exhibit second output properties, which differ from the first output properties, in relation to a second region, which is different from the first region, in the input color space; and a color conversion unit which refers to the lookup table and performs color conversion.

In other words, the correlation between the usage amounts of the first color materials which are used by the printing machine and the usage amounts of the second color materials which are used by the image forming apparatus are defined in the lookup table which is stored in the memory unit. In the single lookup table, the correlation is defined so as to exhibit the first output properties in relation to the first region including the colors contained in the specific image in the input color space, and the correlation is defined so as to exhibit the second output properties, which differ from the first output properties, in relation to the second region, which differs from the first region, in the input color space. In this case, high-precision color reproduction in relation to colors of a specific image using one lookup table which defines a correlation between color material usage amounts which are matched to color materials of a printing machine, and color material usage amounts which are matched to color materials of an image forming apparatus can be realized.

Here, the first color materials may be color materials which are used by the printing machine in the formation of the printed matter, and examples thereof include, in addition to color materials which are a combination of four colors such as CMYK, color materials which are a combination of five or more colors, and color materials which are a combination of three or less colors. The second color materials may be color materials which are used by the image forming apparatus in the formation of the color reproduction image, and examples thereof include, in addition to color materials which are a combination of five or more colors, color materials which are a combination of four or less colors.

Examples of the first region including the colors contained in the specific image include a skin-color region, a gray region, and a color chart region. The first region may be a collection of discrete portions.

The term "output properties" refers to the overall output tendencies in the region. For example, the first and the second output properties exhibited in the first and the second regions contained in the input color space may each be represented by at least one of the color differences between the chromatic values of the first color materials and the chromatic values of the second color materials in a predetermined observation light source, index values which indicate granularity of the color reproduction image, and index values which indicate tonality of the color reproduction image. In this case, an example which favorably realizes high-precision color reproduction in relation to the colors of the specific image can be provided. Note that, the observation light source may be configured by a plurality of light sources.

Incidentally, grid points used in conversion of colors contained in the specific image, of a plurality of grid points in the input color space, may be specified based on color distribution of the specific image, and the correlation relating to the specified grid points may be defined so as to exhibit the first output properties in relation to the first region. In this case, the generation of the lookup table can be simplified.

Colors contained in the specified image may be extracted from the specified image, of the plurality of grid points in the input color space, the extracted grid points used in the conversion of the colors may be specified, and the correlation relating to the specified grid points may be defined so as to exhibit the first output properties in relation to the first region. In this case, the generation of the lookup table can be further simplified.

For each of the colors contained in the specified image, of the plurality of grid points in the input color space, one or more grid points used in the conversion of the colors may be extracted, redundancy of the extracted grid points may be eliminated, and the correlation relating to grid points after redundancy elimination may be defined so as to exhibit the first output properties in relation to the first region. In this case, the generation of the lookup table can be further simplified.

The correlation relating to N2 second grid points, which are fewer than N1 first grid points provided in the lookup table, may be defined, and the correlation relating to the N1 first grid points may be defined based on the correlation relating to the second grid points. When the number N1 of first grid points provided in the lookup table is great, there is a case in which it takes too much time to suddenly define the correlation in relation to all the number N1 of first grid points. In this case, the correlation may be defined in relation to the number N2 of second grid points, which is fewer than the N1 number of first grid points, and thus, the generation of the lookup table can be simplified.

For each of a plurality of observation light sources under which the printed matter is observed, target chromatic values in the observation light source of the first color materials which are formed on the printed matter may be associated with the second grid points. In addition, the usage amounts of the second color materials may be predicted for the second grid points based on evaluation values which evaluate similarity to target chromatic values which are associated in the second grid points for the plurality of observation light sources such that chromatic values of the second color materials which are formed on the color reproduction image are similar to the target chromatic values for each of the observation light sources. In addition, the usage amounts of the predicted second color materials may be associated with the second grid points, and a correlation of the lookup table relating to the N1 grid points may be defined based on the correlation between the usage amounts of the first and the second color materials for the second grid points. In this case, a lookup table capable of more faithfully reproducing the shade changes which are visible on the printed matter obtained using the printing machine under the plurality of observation light sources can be generated.

A correlation of the lookup table relating to the first grid points may be defined by performing an interpolation operation using the correlation between the usage amounts of the first and the second color materials relating to the plurality of second grid points which surround the first grid points in the input color space. In this case, the generation of the lookup table can be further simplified.

The first color materials may include a third color material and a fourth color material. In addition, the second grid point may be provided in the color space which is represented by the fourth color material for each usage amount of the third color material corresponding to the first grid points. In addition, a correlation of the lookup table relating to the first grid points may be defined by performing an interpolation operation using the correlation between the usage amounts of the first and the second color materials relating to the plurality of second grid points which surround the first grid points in the input color space which is represented by the fourth color material in relation to each usage amount of the third color material. Since the interpolation operation is performed in a color space of fewer dimensions than the input color space which is represented by the colors of the first color materials. In this case, the generation of the lookup table can be further simplified. Note that a non-chromatic ink such as the K ink or the like is an example of the third color material. Note that a chromatic inks such as the CMY inks or the like are examples of the fourth color material.

Note that, performing an interpolation operation using the correlation relating to the second grid points provided in the color space which is represented only by the fourth color material in relation to fewer levels than the Ng levels when there are Ng levels of usage amount of the third color material is included in the aspect described above.

Furthermore, a number of third grid points which are included in the second grid points and correspond to usage amounts of the third color material may be provided in the input color space for each usage amount of the third color material corresponding to the first grid points. In addition, the correlation relating to each of the third grid points may be defined. Since the total number of the third grid points provided in the input color space is set to a number corresponding to the usage amounts of the third color materials. In this case, the generation of the lookup table can be further simplified. Naturally, performing an interpolation operation using the correlation relating to the second grid points provided in the color space which is represented only by the fourth color material in relation to fewer levels than the Ng levels of the usage amounts of the third color material is included in the aspect described above.

When usage amounts of the third color material corresponding to the first grid points include first usage amounts and second usage amounts which are greater than the first usage amounts, the number of the third grid points corresponding to the first usage amounts of the third color materials may be greater than the number of the third grid points corresponding to the second usage amounts of the third color materials. When the usage amounts of the third color material are the comparatively small first usage amounts, the gamut of the color space represented by the colors of the fourth color material becomes wider. Meanwhile, when the usage amounts of the third color material are the comparatively large second usage amounts, the gamut of the color space represented by the colors of the fourth color material becomes narrower. Therefore, when the number of the third grid points corresponding to the first usage amounts of the third color materials is greater than the number of the third grid points corresponding to the second usage amounts of the third color materials, since the total number of the third grid points provided in the input color space is set to a more appropriate number, it is possible to further simplify the generation of the lookup table.

It is possible to apply the invention to a lookup table, a computer-readable medium onto which a lookup table is recorded, an image forming system equipped with a lookup table, a lookup table generation apparatus provided with a means corresponding to the lookup table generation method, an image forming system provided with an image forming apparatus, a program which causes a computer to realize the functions of each component of the apparatuses or systems described above, a computer-readable medium onto which the program is recorded, and the like. The apparatuses and systems described above may be configured using a plurality of distributed portions.

BRIEF DESCRIPTION OF THE DRAWINGS

Embodiments of the invention will now be described by way of example only with reference to the accompanying drawings, wherein like numbers reference like elements.

Fig. 1 is a diagram schematically exemplifying a configuration of a proof system.
Fig. 2 is a diagram schematically exemplifying a structure of a lookup table.
Fig. 3 is a diagram schematically exemplifying a data structure of the lookup table.
Fig. 4 is a diagram schematically exemplifying a specific image.
Fig. 5 is a block diagram schematically exemplifying a configuration of a computer.
Fig. 6A is a diagram schematically exemplifying a data structure of a few grid point lookup table, and Fig. 6B is a diagram schematically exemplifying a data structure of a partial lookup table.
Fig. 7 is a diagram schematically illustrating an arrangement example of color material amount prediction grid points of a few grid point lookup table.
Fig. 8 is a flow chart exemplifying a lookup table generation process.
Fig. 9 is a flow chart exemplifying a unique color reference grid point extraction process.
Fig. 10 is a flow chart exemplifying a process which generates the final lookup table.
Fig. 11 is a diagram schematically exemplifying a setting screen.
Fig. 12 is a diagram schematically exemplifying the extraction of unique color reference grid points.
Fig. 13 is a diagram schematically illustrating an arrangement example of color material amount prediction grid points for usage amounts of third color materials.
Fig. 14 is a diagram schematically exemplifying a structure of a print color profile.
Fig. 15 is a diagram schematically exemplifying a data structure of the print color profile.
Fig. 16 is a diagram for schematically illustrating an example of a generation method of the print color profile.
Fig. 17 is a diagram illustrating a computation example for calculating a chromatic value based on spectral reflectance.
Fig. 18 is a diagram schematically exemplifying the flow of a process which optimizes an ink amount set.
Fig. 19 is a diagram schematically exemplifying the ink amount set being optimized.
Fig. 20 is a flow chart exemplifying a color reproduction image output control process which is performed by an image forming apparatus.
Fig. 21 is a diagram schematically exemplifying a structure of a spectral reflectance database.
Fig. 22A is a diagram schematically exemplifying a Spectral Neugebauer Model, and Fig. 22B is a diagram schematically exemplifying a Murray-Davies Model.
Figs. 23A to 23C is a diagram schematically exemplifying a Cellular Yule-Nielsen Spectral Neugebauer Model.
Fig. 24 is a diagram schematically exemplifying the interpolation of grid points of a lookup table from grid points of an original lookup table.
Fig. 25 is a diagram schematically exemplifying a smoothing process.
Fig. 26 is a diagram schematically exemplifying the changing of granularity of a color reproduction image.
Fig. 27 is a diagram schematically exemplifying the calculation of a granularity index value.
Fig. 28 is a diagram schematically exemplifying the changing of tone of the color reproduction image.

DESCRIPTION OF EXEMPLARY EMBODIMENTS

Hereinafter, description will be given of the embodiments of the invention. Naturally, the embodiments described hereinafter merely serve to exemplify the invention, and not all the characteristics indicated in the embodiments are necessarily required for the solution to the invention.

(1) Outline of Proof System:

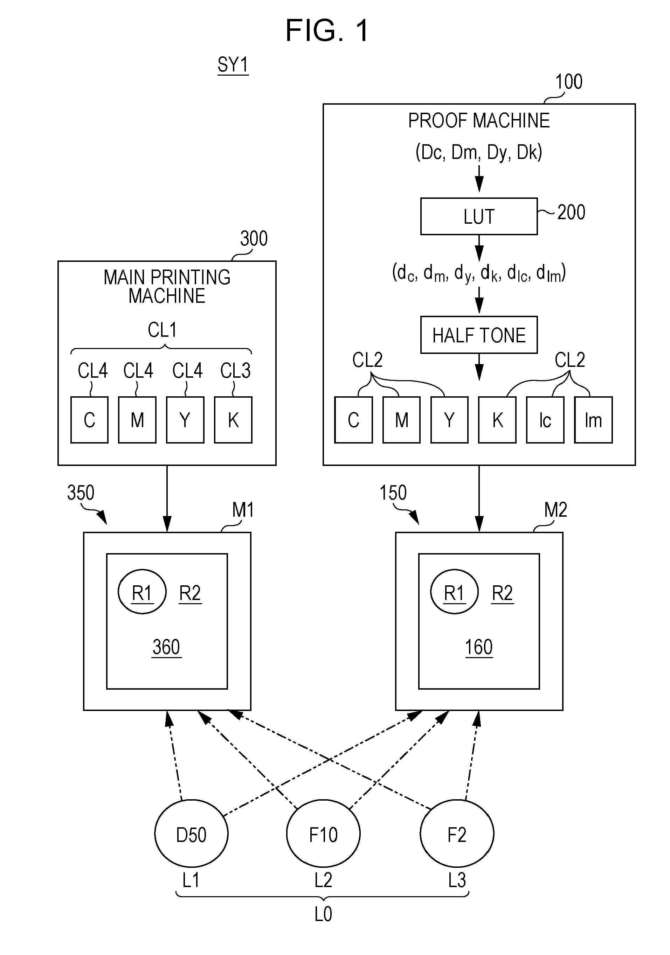

Fig. 1 schematically exemplifies a proof system SY1 in which a proof 150 of printed matter 350 which is formed by a main printing machine (printing machine) 300, is formed using a proof machine (an image forming apparatus) 100. The cost of directly forming the printed matter using the main printing machine to check the shade and the like is expensive. Therefore, the proof machine 100 forms a color reproduction image 160 of the printed matter 350 in order to enable the checking of the shade of a printed image 360 on the printed matter 350, even if the printed matter 350 is not formed.

Examples of the main printing machine (the printing machine) 300 include an offset printing machine, a gravure printing machine and the like. The main printing machine 300 illustrated in Fig. 1 forms the printed image 360 on a target printed matter M1 using first color materials CL1 of CMYK (cyan, magenta, yellow, and black). Note that examples of the first color materials CL1 include a K color material (a third color material CL3), and CMY color materials (a fourth color material CL4) which can be matched to and replace the color material CL3 color (K).

Examples of the proof machine (the image forming apparatus) 100 include an ink jet printer, a wire dot printer, a laser printer, a line printer, a copier, a facsimile machine, a multifunction machine combining a portion of these, or the like. The proof machine 100 illustrated in Fig. 1 forms the color reproduction image 160 on a target printed matter M2 using second color materials CL2 of CMYKlclm. Light cyan (lc) is a color with a hue of the same group as cyan, and with a higher lightness than cyan. Light magenta (lm) is a color with a hue of the same group as magenta, and with a higher lightness than magenta. Naturally, the second color materials CL2 may be CMYKROrGr color materials or the like. Red (R), orange (Or), and green (Gr) are colors which can replace CMY. The proof machine 100 illustrated in Fig. 1 converts usage amounts $D_c$, $D_m$, Dy, and $D_k$ of the first color materials CL1 of CMYK into usage amounts $d_c$, $d_m$, dy, $d_k$, $d_{lc}$, and $d_{lm}$ of the second color materials CL2 of CMYKlclm according to the Lookup Table (LUT) 200, and forms the color reproduction image 160 according to the obtained usage amounts $d_c$, $d_m$, dy, $d_k$, $d_{lc}$, and $d_{lm}$. When converting the ink usage amounts into dots on the target printed matter M2, the proof machine 100 reduces the number of tones of tone data by subjecting the tone data that indicates the usage amounts $d_c$, $d_m$, dy, $d_k$, $d_{lc}$, and $d_{lm}$ to a predetermined half tone process such as a dithering method, an error diffusion method, or a concentration pattern method, and ejects ink droplets according to the obtained multi-value data to form ink dots on the target printed matter M2. The multi-value data is data that indicates the formation state of the dots, and may be binary data that indicates whether or not to form a dot, and may be multi-value data of three or more tones which can correspond to dots of different sizes such as large, medium, and small dots. The binary data can be data in which 1 and 0 are caused to correspond to dot formation and no dot, respectively. Four value data can be data in which 3, 2, 1, and 0 are caused to correspond to large dot formation, medium dot formation, small dot formation, and no dot, respectively. The obtained color reproduction image is expressed by the formation state of the dots on the target printed matter M2.

The shades of the printed image 360 and the color reproduction image 160 change depending on the type of observation light source L0. Here, the reference numeral L0 is used when referring collectively to the light sources L1 to L3. Standardized examples of the observation light source L0 include a D50 light source, a D55 light source, a D65 light source, a D75 light source, an A light source, an F2 light source, an F7 light source, an F10 light source, an F11 light source, and the like. The change in the shade also depends on the type of the color material.

For example, in the printing industry, the D50 light source, which exhibits a spectral distribution which is not present in actual lighting, is the standard light source. Since the printing performance is inspected under the D50 light source, it is important as a proof machine of a printing machine to guarantee the color precision when inspection is carried out using the standard D50 light source. Meanwhile, in an environment in which the printed matter produced by the main printing machine and the color reproduction image produced by the proof machine are actually inspected, it is assumed that a light source different from the D50 light source will be used, and it is assumed that the environment will contain a mixture of a plurality of light sources. An example of the environment contains a combination of the D65 light source and the A light source. Therefore, even if the shades of the printed image 360 and the color reproduction image 160 match under the D50 light source L1, there is a case in which the shades of the printed image 360 and the color reproduction image 160 will not match under the different light sources L2 and L3. Since the D50 light source exhibits a spectral distribution which is not present in actual lighting, even if a reduction in the color difference between both of the images 360 and 160, that is, the realization of a quantitatively high color precision is pursued, there is a case in which the pursuit does not lead to an improvement in the color precision under naked-eye observation, that is, the realization of subjectively high color precision. The present technology is viable for obtaining both "the realization of quantitatively high color precision" and "the realization of subjectively high color precision".

Note that, there are Direct Digital Color Proofers (DDCP) which use only the same CMYK color materials as the main printing machine. When the same CMYK color materials are used in the print proof machine as in the main printing machine, it is possible to realize high precision color reproduction; however, it is not possible to obtain a color reproduction image reflecting the intent of the user such as a color reproduction image of a high image quality such as photographic image quality, which is a characteristic of an ink jet printer that uses more colors of ink. The DDCP machine is expensive.

The DDCP machine is capable of faithfully reproducing the printed image which is formed by the main printing machine; however, the DDCP machine is not designed to establish an image quality or to switch the target of the metameric matching according to the image content which the user wishes to output, with an understanding of the characteristics of the printed image which is formed using the CMYK color materials.

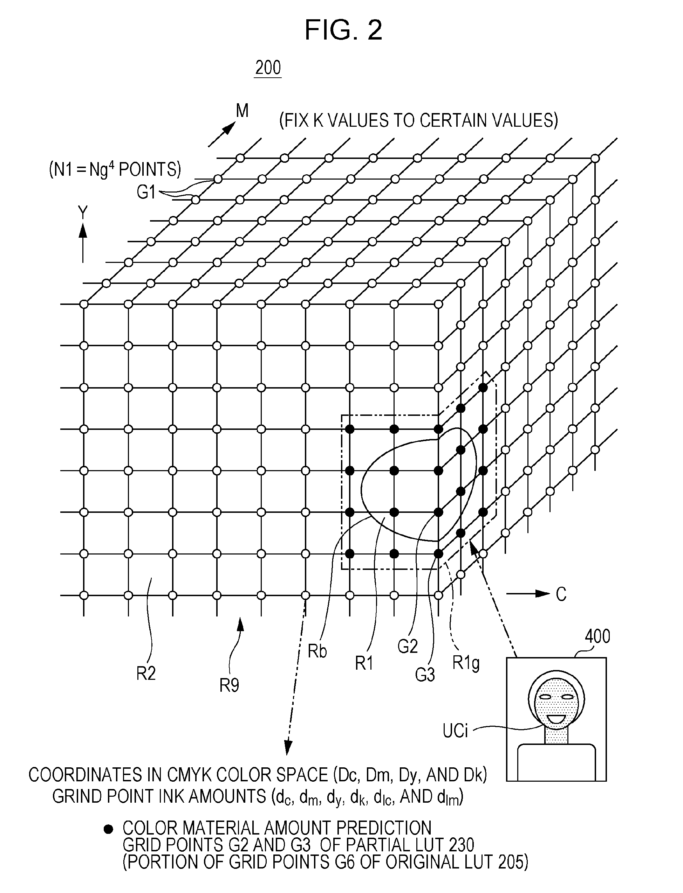

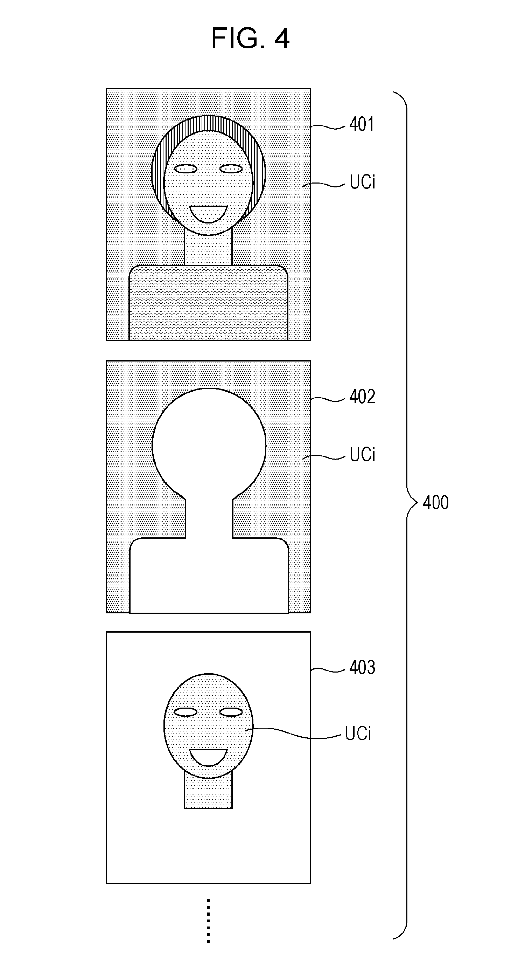

The present technology solves the problems with the DDCP machine which is described above, and may obtain the high image quality color reproduction image 160 according to the image content which the user wishes to output by analyzing the color distribution of a specific image 400 illustrated in Figs. 2, 4 and the like to generate a LUT 200. For example, it is possible to obtain the color reproduction image 160 which improves the appearance of the photographic image which the user wishes to output using a single LUT 200, while obtaining a metameric matching function which is favorable for a proof machine such as an ink jet proof machine. The metameric matching in a skin-color region is extremely favorable under the F10 and the F2 light sources, matched to the photographic image, and the metameric matching in the remaining regions is extremely favorable under the D50 light source.

Note that the LUT 200, which defines the correlation between the usage amounts $D_c$, $D_m$, Dy, and $D_k$ of the first color materials CL1 and the usage amounts $d_c$, $d_m$, dy, $d_k$, $d_{lc}$, and $d_{lm}$ of the second color materials CL2, can be said to be a color conversion LUT in that the LUT 200 converts CMYK four-dimensional color space data, which is main printing machine dependent, into CMYKlclm color space data, which is proof machine dependent. The LUT 200 can be said to be a color separation LUT in that the LUT 200 converts the usage proportions of CMY and K, converts the usage proportions of C and Ic, and converts the usage proportions of M and Im.

(2) Outline of Structure of Lookup Table:

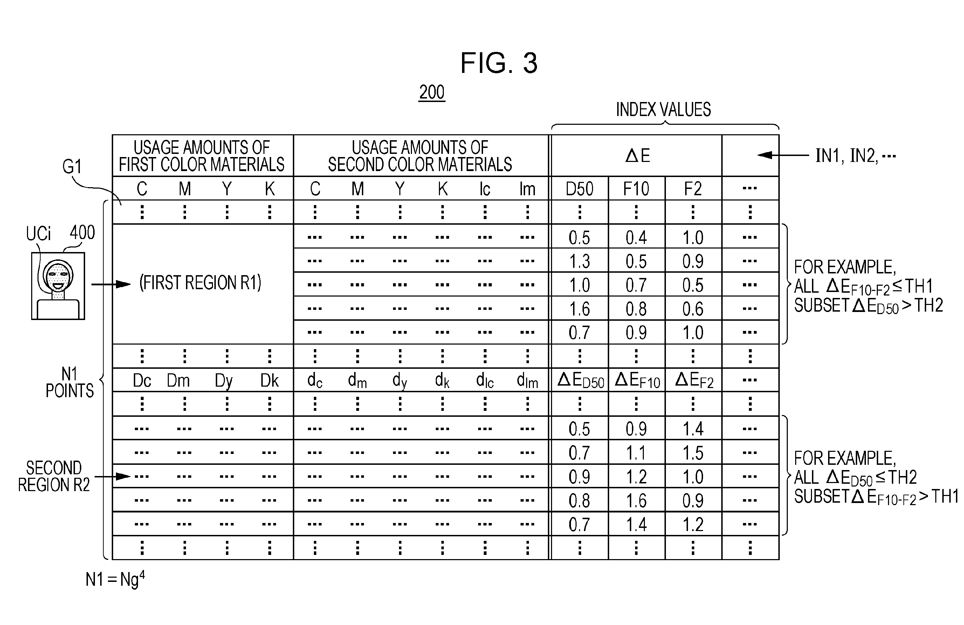

Fig. 2 schematically exemplifies the structure of the LUT 200. Fig. 3 schematically exemplifies the index values which are associated with grid points (input points) G1, and exemplifies the data structure of the LUT 200. Note that the index values shown in the LUT 200 are schematic values and do not limit the output characteristics. The index values need not be included in the data of the LUT 200.

The present technology enables the generation of the LUT 200 which is specialized for the specific image 400 by allowing unique color reference grid points G2 and G3, which reproduce the colors of the specific image 400 (unique colors UCi) with high precision and which are comparatively high-density, to coexist. As a result, the present technology may realize a proof such as an ink jet proof which is closer in appearance to the colors of the main printing machine.

Since the input of the LUT 200 is the four-dimensional CMYK, the input cannot be illustrated in the drawings. Therefore, the LUT 200 is schematically illustrated in a three-dimensional shape in which one dimension is fixed as one point, and in Fig. 2, the grid points (the first grid points) G1 of the LUT 200 are illustrated in three-dimensional space of CMY in which the K values are fixed to a certain value. For example, in regard to the usage amounts of CMYK, when grid points of Ng levels (where Ng is an integer of 2 or greater) are provided (in other words, when there are Ng possible values for a color), the grid point number is $Ng^4$. When Ng = 17, the grid point number (in other words, the number of grid points) is N1 = $17^4$ = 83521. Since the usage amounts of K are present in Ng levels, Ng CMY three-dimensional color spaces as illustrated in Fig. 2 are present.

Note that "grid point" is a general term that refers to an input point which is defined in the LUT, and there are no special limits to the arrangement thereof as long as the arrangement corresponds to a coordinate in the input color space. Therefore, the plurality of grid points need not only be arranged uniformly in the input color space, but the plurality of grid points may be arranged in a non-uniform manner, as long as the positions in the input color space are different for each of CMYK.

As illustrated in Fig. 2, the coordinates (the positions) of the grid points G1 in the CMYK color space indicate the usage amounts $D_c$, $D_m$, Dy, and $D_k$ of the first color materials CL1. The ink amounts of the grid points (the usage amounts of the second color materials CL2) $d_c$, $d_m$, dy, $d_k$, $d_{lc}$, and $d_{lm}$ are stored in the grid points G1. In this manner, in each of the grid points G1, the LUT 200 defines the correlation between the usage amounts of the CMYK color materials CL1 and the usage amounts of the CMYKlclm color materials CL2.

In the present LUT 200, the correlation is defined relating to the first region R1 including the unique colors UCi contained in the specific image 400 in the CMYK color space (the input color space) which is represented by the colors of the first color materials CL1 so as to exhibit first output properties, and the correlation is defined relating to the second region R2 in the CMYK color space (the input color space) so as to exhibit second output properties, which differ from the first output properties. The first and the second regions R1 and R2 in the LUT 200 are regions which differ from each other (non-overlapping regions). The first region R1 refers to the range of colors contained in the image content which the user wishes to output, and is a region in which subjectively high color precision is realized. A plurality of the first regions R1 may be provided in the LUT 200, and each region R1 may exhibit different output properties. The second region R2 illustrated in Fig. 2 and the like is a region obtained by subtracting the first region R1 from a comprehensive region R9 which includes the entire CMYK color space, and is a region which faithfully reproduces the colors of the printed image 360 which is formed by the main printing machine 300, that is, is a region which realizes quantitatively high color precision. The properties refer to the overall tendencies. The first and the second output properties are output properties that differ from each other. The colors of the first region R1 exemplified in Fig. 3 are converted to the usage amounts $d_c$, $d_m$, dy, $d_k$, $d_{lc}$, and $d_{lm}$ in which color differences $\Delta E_{F10\text{-}F2}$ between the printed image 360 formed by the main printing machine and the color reproduction image 160 formed by the proof machine fall within a predetermined range (for example, 1.0 or less) in an observation light source in which the F10 light source and the F2 light source are mixed uniformly. The colors of the second region R2 exemplified in Fig. 3 are converted to the usage amounts $d_c$, $d_m$,

dy, $d_k$, $d_{lc}$, and $d_{lm}$ in which color differences $\Delta E_{D50}$ between the printed image 360 and the color reproduction image 160 fall within a predetermined range (for example, 1.0 or less) in the D50 light source. In the example of Fig. 3, the output properties are represented by the color differences between the chromatic values of the first color materials and the chromatic values of the second color materials in a predetermined observation light source. The chromatic values are represented using L*, a*, and b*, which is defined by the International Commission on Illumination (CIE) L*a*b* color space. When the chromatic values of the first color materials are represented by $L_D$, $a_D$, and $b_D$, and the chromatic values of the second color materials are represented by $L_d$, $a_d$, and $b_d$, the color differences $\Delta E$ may be calculated using $\Delta E = \{(L_d - L_D)^2 + (a_d - a_D)^2 + (b_d - b_D)^2\}^{1/2}$, and may be calculated based on a CIE DE2000 color difference formula ($\Delta E_{2000}$).

From the above description, different properties of the optimal color reproduction properties in relation to the colors contained in the specific image 400 and the color reproduction in relation to the colors which are not contained in the specific image 400 are held in the single LUT 200 which converts the usage amounts of the first color materials CL1 of CMYK to the usage amounts of the second color materials CL2 which are used by the proof machine 100.

Note that, since the grid points G1 are discretely arranged in the input color space, as illustrated in Fig. 2, a boundary portion Rb of the region R1 does not necessarily match the positions of the grid points G1. In Fig. 2, the grid points which are used for converting the colors in the region R1 using an interpolation operation are represented using the reference numerals G2 and G3, and the grid points in the region R1 are represented using the reference numeral G2. The grid points G3 fall outside of the region R1; however, the grid points G3 are adjacent grid points needed for interpolating the output values $d_c$, $d_m$, dy, $d_k$, $d_{lc}$, and $d_{lm}$. The reference numeral R1g represents a range of the grid points G2 and G3 which are used in the conversion of the colors of the first region R1.

Fig. 4 schematically exemplifies the specific image 400. The specific image 400 is an image for analyzing the color distribution which is prepared in advance based on a standardized image, and is an image which the user can select as an image for which the user wishes to obtain high color precision. The specific image 400 includes a portrait image 401, a gray image 402, a skin-color image 403, and the like. Examples of the portrait image 401 include a standardized image such as Standard Color Image Data (SCID). The SCID refers to a standard image data set which is internationally standardized (ISO12640, JISX9201) in order to standardize work in printing and the like and to evaluate encoding properties, and includes photographic data and the like which is denoted using the color material amounts of CMYK. The gray image 402 may be an image obtained by extracting a gray region from the SCID, for example. The skin-color image 403 may be an image obtained by extracting a skin-color region from the SCID, for example.

The first region R1 which is set based on the colors of the specific image 400 may be a region which is a portion in the input color space, and may be exemplified by a skin-color region, a gray region, a color chart region, an ink saving region, another special color region, or the like. Examples of the first region R1 include not only a collective region which is not separated, but also discrete regions. The skin-color region and the gray region are typical examples of color regions which the human eye is sensitive to. The color chart region is a color region for forming a color chart, and may be a discrete region. The ink saving region is a region for saving the usage amounts of the second color materials CL2. The special color region refers collectively to color regions which the human eye is sensitive to.

The output properties exhibited in the regions R1 and R2 are quantified by at least one of the color differences $\Delta E$ between the chromatic values of the first color materials CL1 and the chromatic values of the second color materials CL2 in a predetermined observation light source, granularity index values (set to IN1) which indicate the granularity of the color reproduction image 160, tone index values (set to IN2) which indicate the tonality of the color reproduction image 160, and the like. The index values $\Delta E$, IN1, IN2, and the like will be referred to collectively as the image quality quantitative indexes IN.

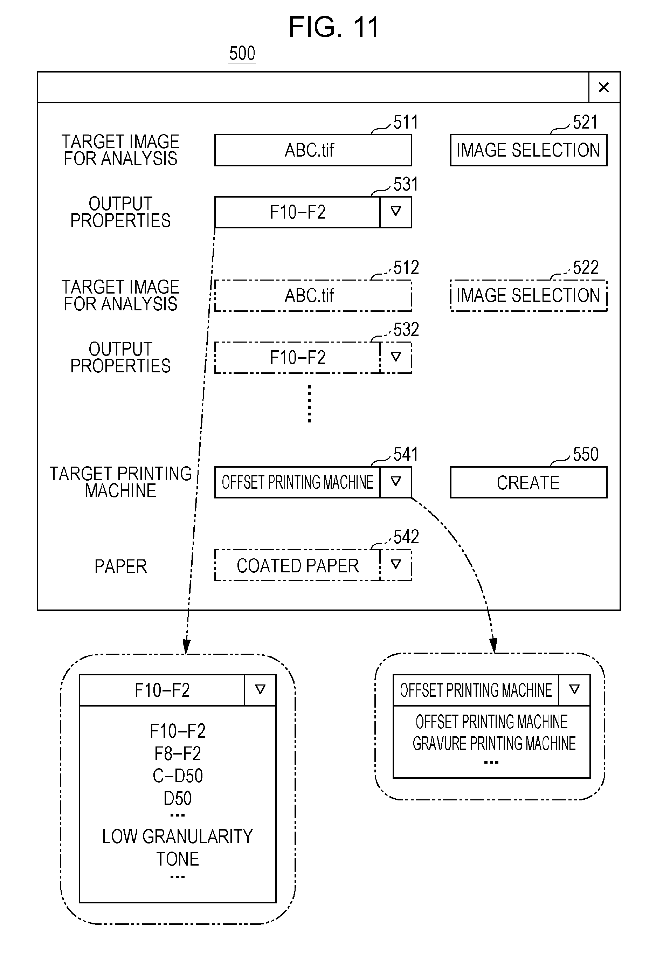

In the example of a setting screen 500 illustrated in Fig. 11, "F10-F2", "F8-F2", "C-D50", "D50", "low granularity", "tone", and the like are illustrated as the output properties. For example, in "F10-F2", the output properties are set such that the appearance is considered to be important, and the color differences $\Delta E_{F10-F2}$ between the chromatic values of the printed image 360 and the chromatic values of the color reproduction image 160 fall within a predetermined range (for example, a positive threshold of 1.0 or the like or less) under an observation light source, which refers to a fluorescent lamp in which the F10 light source and the F2 light source are combined in a 1:1 ratio. Naturally, in the observation light source in which the appearance is considered to be important, the output properties may be set such that the color differences between the chromatic values of both the images 360 and 160 fall within a predetermined range under an observation light source such as a light source in which the D50 light source, the F10 light source, and the F2 light source are combined in a 1:1:1 ratio. For example, in "F8-F2", the output properties are set such that the precision of the colors of a natural image is considered to be important, and the color differences $\Delta E_{F8-F2}$ between the chromatic values of both the images 360 and 160 fall within a predetermined range (for example, a positive threshold of 1.0 or the like or less) under an observation light source, which refers to a fluorescent lamp in which the F8 and the F2 light sources are combined in a 1:1 ratio. For example, in "C-D50", the output properties are set such that the precision of the colors other than those of a natural image is considered to be important, and the color differences $\Delta E_{C-D50}$ between the chromatic values of both the images 360 and 160 fall within a predetermined range (for example, a positive threshold of 1.0 or the like or less) under an observation light source in which the C and the D50 light sources are combined in a 1:1 ratio. For example, in "D50", the output properties are set such that the color differences $\Delta E_{D50}$ between the chromatic values of both the images 360 and 160 fall within a predetermined range (for example, a positive threshold of 1.0 or the like or less) under the D50 light source. For example, in "low granularity", the output properties are set such that the granularity index value IN1 of the color reproduction image 160 falls within a predetermined range (for example, a positive threshold or less). For example, in "tone", the output properties are set such that the tone index value IN2 of the color reproduction image 160 falls within a predetermined range (for example, a positive threshold or less).

(3) Outline of Lookup Table Generation Apparatus and Color Conversion Apparatus:

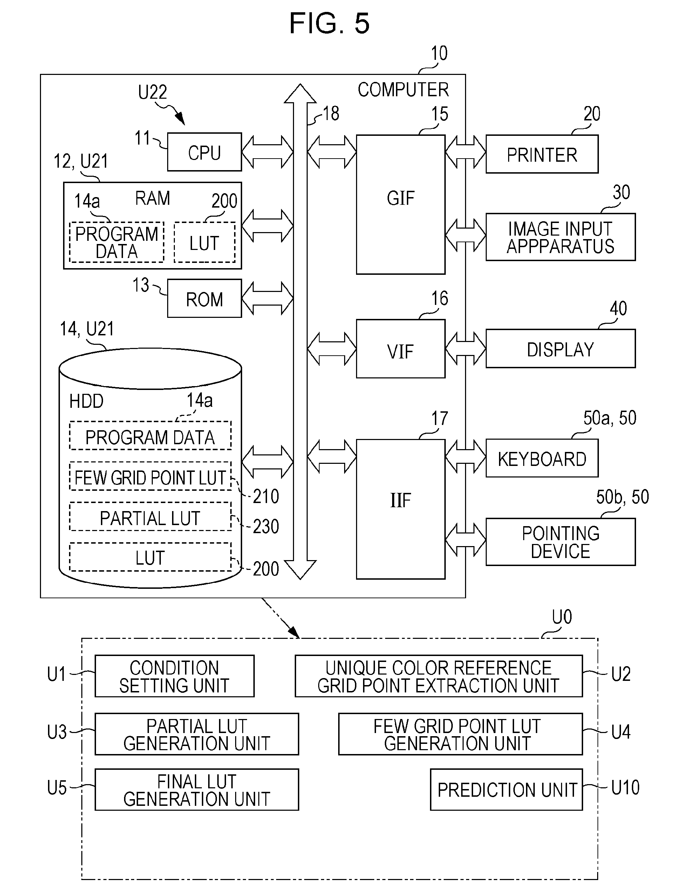

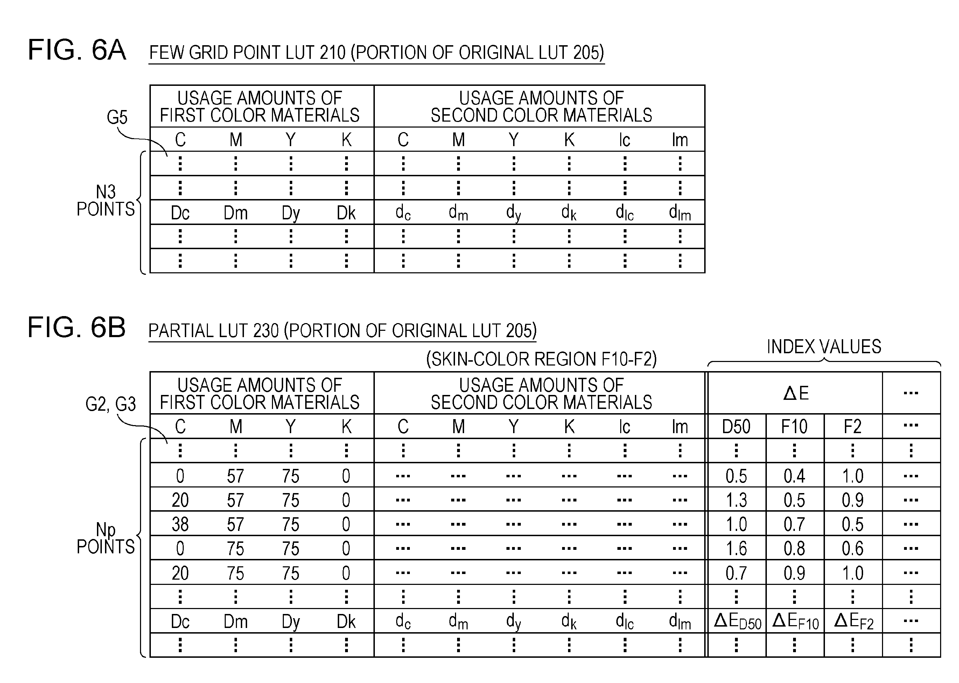

Fig. 5 exemplifies a configuration of a computer 10 including a lookup table (LUT) generation apparatus U0. In the computer 10, a Central Processing Unit (CPU) 11, Random Access Memory (RAM) 12, Read Only memory (ROM) 13, a Hard Disk Drive (HDD) 14, a general interface (GIF) 15, a video interface (VIF) 16, an input interface (IIF) 17, and the like are connected to a bus 18 so as to be capable of inputting and outputting data between each other. Program data 14a and the like for executing various programs including an Operating System (OS) and a LUT generation program is stored in the HDD 14. A few grid point LUT 210 (refer to Fig. 6A), a partial LUT 230 (refer to Fig. 6B), a final LUT 200, and the like, which are generated using a LUT generation process are also stored in the HDD 14. The CPU 11 reads the program data 14a into the RAM 12, as appropriate, and controls the entire computer 10 according to the program data 14a. The LUT generation program causes the computer 10 to realize functions corresponding to each component U1 to U5 and U10 of the LUT generation apparatus U0, and causes the computer 10 to function as the LUT generation apparatus U0.

A printer 20, which is an image output apparatus, an image input apparatus 30 such as a color measurement machine or a scanner, and the like are connected to the GIF 15. It is possible to adopt Universal Serial Bus (USB) or the like as the GIF 15. The printer 20 may be the proof machine 100, and may not be the proof machine 100. A display 40, which is an image output apparatus, or the like is connected to the VIF 16. A keyboard 50a, which is an operation input apparatus 50, a pointing device 50b, which is similarly an operation input apparatus 50, and the like are connected to the IIF 17. It is possible to use a mouse or the like as the pointing device 50b.

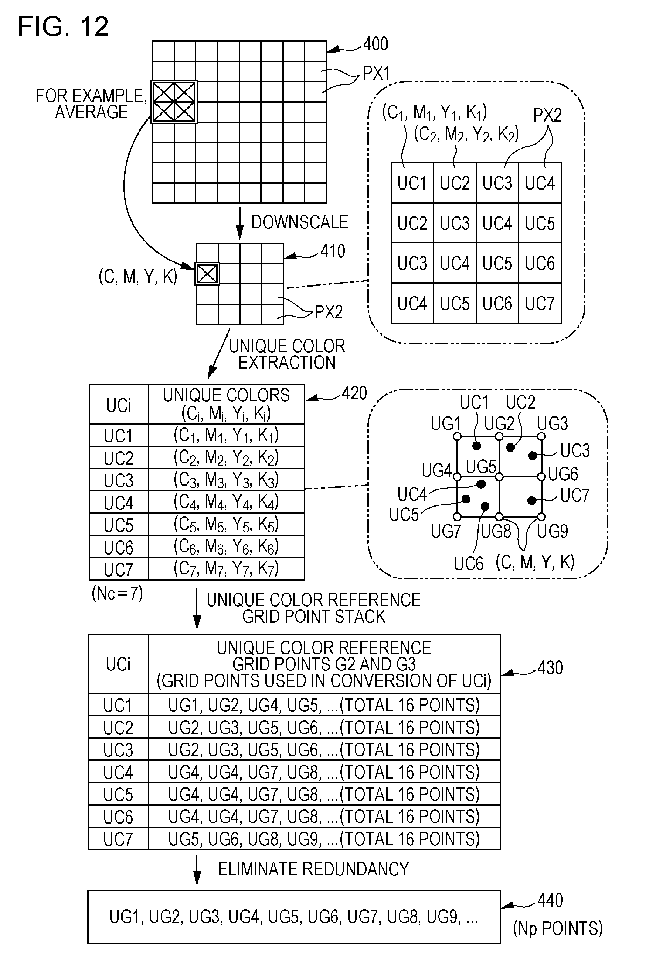

The LUT generation apparatus U0 illustrated in Fig. 5 is provided with the condition setting unit U1, the unique color reference grid point extraction unit U2, the partial LUT generation unit U3, the few grid point LUT generation unit U4, the final LUT generation unit U5, and the prediction unit U10, and the LUT generation apparatus U0 generates the LUT 200. The condition setting unit U1 receives the selection input of the specific image 400, the color distribution of which will be analyzed, and receives the input of the output properties which are associated with the region R1 containing the colors which are contained in the specific image 400. The unique color reference grid point extraction unit U2 specifies the unique color reference grid points G2 and G3 which are used in the conversion of the unique color UCi contained in the specific image 400 among the plurality of grid points G1 in the CMYK color space based on the color distribution (a unique color list 420 illustrated in Fig. 12) of the specific image 400. In relation to the grid points G2 and G3, which are the unique color reference grid points and are the color material amount prediction grid points, the partial LUT generation unit U3 generates the partial LUT 230 by associating the usage amounts of the second color materials CL2 which are predicted by the prediction unit U10 with the usage amounts of the first color materials CL1. In relation to the color material amount prediction grid points G5 (refer to Fig. 6A) in the few grid point LUT 210 which has less grid points than the final LUT 200, the few grid point LUT generation unit U4 generates the few grid point LUT 210 by associating the usage amounts of the second color materials CL2 which are predicted by the prediction unit U10 with the usage amounts of the first color materials CL1. The few grid point LUT 210 and the partial LUT 230 are original LUTs 205 for generating the final LUT 200. The final LUT generation unit U5 generates the final LUT 200 which defines the correlation between the usage amounts of the first and the second color materials CL1 and CL2 based on the second color materials CL2 which are associated with the color material amount prediction grid points (the second grid points) G2, G3, and G5 of the original LUT 205. The LUT 200 is stored in the HDD 14. The prediction unit U10 predicts the usage amounts of the second color materials CL2 such that the chromatic values (for example, L*a*b* values) of the second color materials CL2 which are formed on the color reproduction image 160 are similar to the target chromatic values for each observation light source L0 based on evaluation values I (described later) which evaluate the similarity of the target chromatic values (for example, L*a*b* values) which are associated with the usage amounts (for example, $D_c$, $D_m$, Dy, and $D_k$) of the first color materials CL1 in the observation light sources L0.

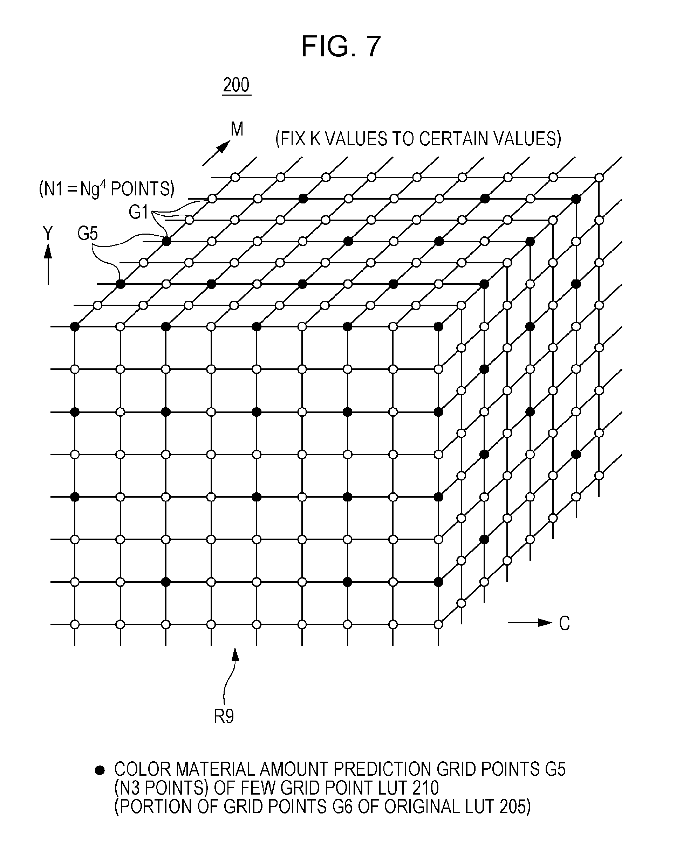

Fig. 6A schematically exemplifies the data structure of the few grid point LUT 210 which is generated by the few grid point LUT generation unit U4. Fig. 6B schematically exemplifies the data structure of the partial LUT 230 which is generated by the partial LUT generation unit U3. Fig. 7 schematically illustrates an arrangement example of the color material amount prediction grid points G5 of the few grid point LUT 210. Note that, the positions of the color material amount prediction grid points G5 may match the positions of the grid points G1 of the final LUT 200; however, since the interpolation operation is performed in order to predict the color material amounts of the grid points G1, the positions of the color material amount prediction grid points G5 need not match the positions of the grid points G1 of the final LUT 200. The color material usage amounts and the index values illustrated in Fig. 6B are schematic values and do not limit the region R1 and the output properties. Naturally, the index values need not be included in the data of the partial LUT 230.

The few grid point LUT 210 illustrated in Figs. 6A and 7 defines the correlation between the usage amounts of the color materials CL1 and CL2 across the entire CMYK color space, and includes N3 of the color material amount prediction grid points (third grid points) G5, which is less than the number of the grid point G1 of the final LUT 200, which is $N1 = Ng^4$. For example, when Ng = 17, the grid point number is $N1 = 17^4 = 83521$. It takes an extremely large amount of labor to prepare $17^4$ color patches, measure the colors of the color patches, and for the $17^4$ grid points G1, to obtain the color material amounts of cmyklclm such that the shades of the printed image 360 and the color reproduction image 160 match. Therefore, a configuration may be adopted in which the number N2 of color patches, which will be subjected to color measurement, is reduced to be less than the final grid point number N1 to predict the color material amounts cmyklclm in the N2 color material amount prediction grid points (second grid points) G2, G3, and G5, and obtain the color material amounts of cmyklclm in the final N1 grid points G1 using an interpolation operation. Hereinafter, description will be given according to this concept.

The color material amount prediction grid points G2, G3, and G5 which configure the original LUT 205 include the grid points G5 of the few grid point LUT 210, and the grid points G2 and G3 of the partial LUT 230. As illustrated in Fig. 7, the grid points G5 of the few grid point LUT 210 are arranged scattered across the comprehensive region R9. The grid points G2 and G3 of the partial LUT 230 are arranged densely in the first region R1 and the vicinity thereof. This is in order to subject the unique colors UCi contained in the specific image 400, which is selected by the user, to color conversion at particularly good precision.

The few grid point LUT 210 defines a correlation in relation to the color material amount prediction grid points (the third grid points) G5 which are arranged at a lower density than the grid points G2 and G3 of the partial LUT 230 and the grid points G1 of the final LUT 200 such that the shades of the printed image 360 and the color reproduction image 160 match under a predetermined observation light source. For example, when matching the shades of the printed image 360 and the color reproduction image 160 as faithfully as possible under the D50 light source, the few grid point LUT 210 which defines the correlation such that the color differences $\Delta E_{D50}$ between the chromatic values of the printed image 360 and the chromatic values of the color reproduction image 160 fall within a predetermined range (for example, a positive threshold of 1.0 or the like or less) may be prepared.

Naturally, the observation light source in which the shades are matched may be a light source other than the D50 light source, and may be a combination of a plurality of light sources. Detailed description will be given later of the generation method of the few grid point LUT.

The partial LUT 230 illustrated in Fig. 6B defines the correlations between the usage amounts of the color materials CL1 and CL2 in relation to the respective Np unique color reference grid points G2 and G3, where Np is a number lower than the grid point number N1 of the final LUT 200. The grid points G2 and G3 are arranged at a higher density than the grid points G5 of the few grid point LUT 210. The partial LUT 230 also defines the correlation between the usage amounts of the color materials CL1 and CL2 in relation to the adjacent grid points G3 outside of the region R1 of the partial LUT 230, and this is in order to convert all of the colors in the region R1 using an interpolation operation. Therefore, the partial LUT 230 which includes the grid points G2 and G3 defines the correlation between the usage amounts of the color materials CL1 and CL2 in relation to the first region R1 contained in the input color space.

The partial LUT 230 defines the correlation in relation to the first region R1 including the unique colors UCi contained in the specific image 400 in the CMYK color space such that the first output properties are exhibited. The few grid point LUT 210 defines the correlation in relation to the second region R2 which is different from the first region R1 in the CMYK color space so as to exhibit the second output properties which are different from the first output properties. When generating the LUT 200, based on the partial LUT 230, in relation to the first region R1 in the CMYK color space, the correlation is defined to exhibit the first output properties, and based on the few grid point LUT 210, in relation to the second region R2 in the CMYK color space, the correlation is defined to exhibit the second output properties.

The computer 10 illustrated in Fig. 5 reads the LUT 200 which is stored in the HDD 14 into the RAM 12, and is capable of executing the color conversion from the usage amounts $D_c$, $D_m$, Dy, and $D_k$ of the first color materials CL1 to the usage amounts $d_c$, $d_m$, dy, $d_k$, $d_{lc}$, $d_{lm}$ of the second color materials CL2 by referring to the LUT 200 that was read. In this case, a color conversion apparatus is included in the computer 10; the HDD 14 and the RAM 12 configure a storage unit U21; and the computer 10 which executes the color conversion program contained in the program data 14a configures a color conversion unit U22. Naturally, the color conversion apparatus may be included in a different computer from the LUT generation apparatus U0.

(4) Generation Example of Lookup Table:

Next, description will be given of the generation example of the LUT 200 according to the LUT generation method of the present technology.

(4-1) Overall Flow of Lookup Table generation Process:

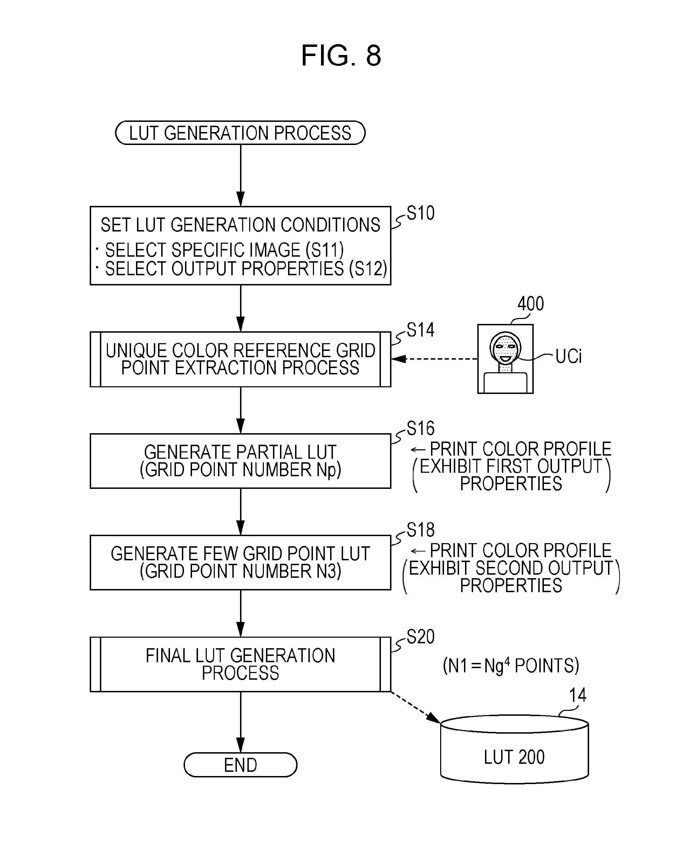

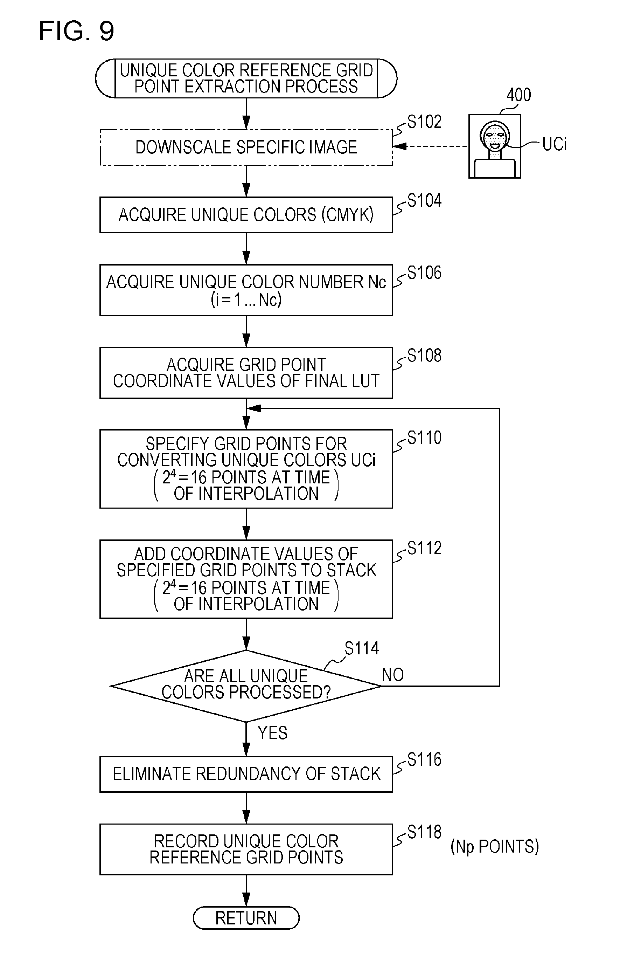

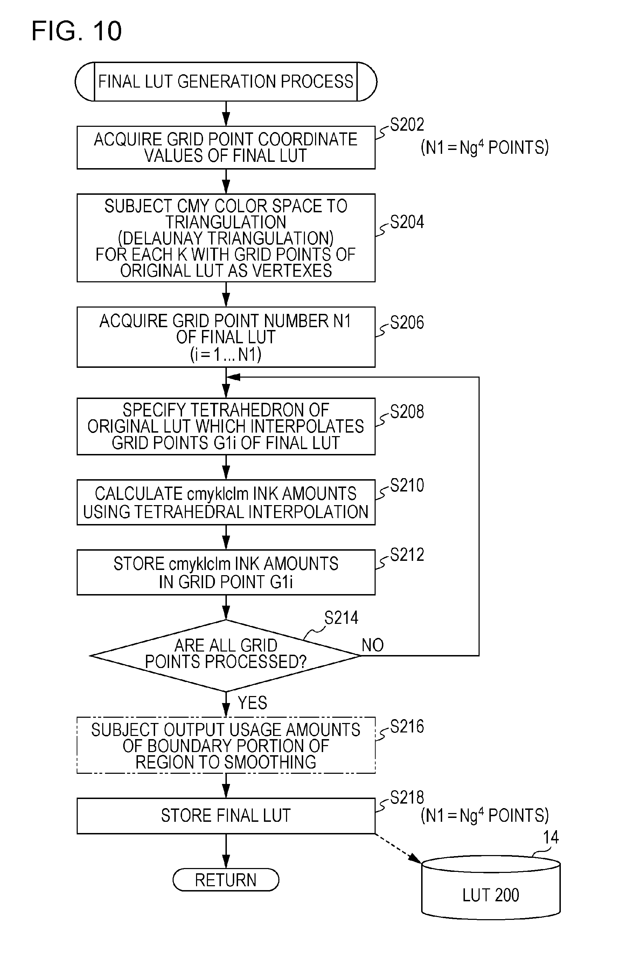

Fig. 8 exemplifies a flow chart of the LUT generation process which is performed by the computer 10 (the LUT generation apparatus U0). Fig. 9 exemplifies a flow chart of a unique color reference grid point extraction process which is performed in step S14. Fig. 10 exemplifies a flow chart of a final LUT generation process which is performed in step S20. Hereinafter, the wording "step" will be omitted.

When the LUT generation process starts, the computer 10 receives the condition settings of the LUT generation (S10).

Fig. 11 exemplifies the setting screen 500 which the computer 10 causes the display 40 to display. The setting screen 500 is provided with file display fields 511, 512, ... of the specific images 400, which are the targets for analyzing the color distribution, image selection buttons 521, 522, ..., selection fields 531, 532, ... of the output properties, a type selection field 541 of the main printing machine 300, a create button 550, and the like. When the specific image 400 which is the target for color distribution analysis is limited to one, the file display fields 512, ..., the image selection buttons 531, ..., and the output properties selection field 532, ... may be omitted. Since the LUT 200 which is generated finally is matched to the type of the target printed matter M1, a type selection field 542 of the target printed matter M1 may be provided on the setting screen 500.

In the selection field 541 of the main printing machine, it is possible to input by selecting the type of the main printing machine from within a plurality of items such as the offset printing machine and the gravure printing machine. In the selection field 542 of the target printed matter, it is possible to input by selecting the type of the target printed matter from among a plurality of items such as coated paper, and Kent paper.

The file names of specific images 400 for analyzing the color distribution, which are prepared in advance, are displayed in the file display fields 511, 512, .... The image selection buttons 521, 522, ... are operation buttons for selecting the file of the specific image 400, which is to be the target for color distribution analysis, from a plurality of specific image files. When the image selection buttons 521, 522, ... are operated by being selected, the plurality of specific image files is displayed, and when the operation of selecting the specific image file, which is to be the target for color distribution analysis, from the specific image files is performed, the file names of the selected specific images 400 are displayed on the file display fields 511, 512, .... The process of receiving the selection input of the specific image file, and reading the specific image 400 is the process of S11 in which the specific image 400 is selected.

In the output properties selection fields 531, 532, ..., it is possible to input a selection of the output properties which are associated with the first region R1 from items such as "F10-F2", "F8-F2", "C-D50", "D50", "low granularity", and "tone". In the example of Fig. 11, it is illustrated that the specific image 400 which is stored in a file called "ABC.tif" is associated with the first output properties, which are referred to as "F10-F2". A process in which the operation input to the output properties selection field is received, and the selected item is stored is a process of S12 in which the input which selects the output properties to be associated with the first region R1 is received. Due to the process of S12 being performed, subjectively high color precision is applied to the final LUT 200 in relation to the reproduction of the colors included in the specific image 400.

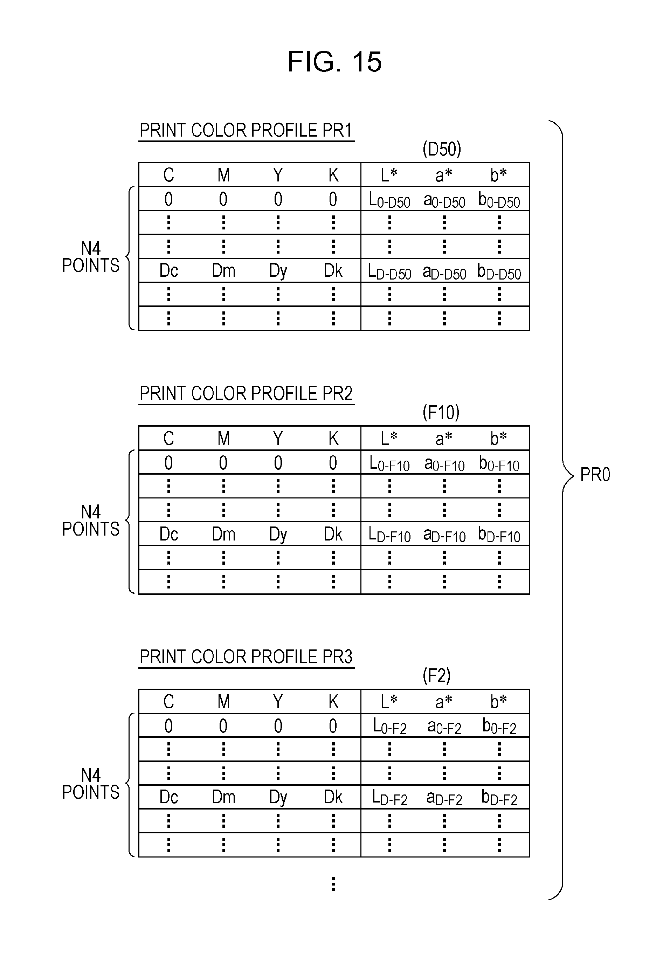

When the create button 550 is operated, the computer 10 performs the unique color reference grid point extraction process which specifies the unique color reference grid points G2 and G3 which are used in the conversion of the unique colors UCi included in the specific image 400 of the plurality of grid points G1 in the CMYK color space based on the color distribution of the specific image 400 (S14). In S16, the partial LUT 230 which defines the correlation in relation to the unique color reference grid points G2 and G3 so as to exhibit the first output properties in relation to the first region R1 is generated based on a print color profiles PR0 (described later) shown in Fig. 15. In S18, the few grid point LUT 210 which defines the correlation so as to exhibit the second output properties in relation to the second region R2 is generated based on the print color profiles PR0. Subsequently, the computer 10 performs a final LUT generation process in which the LUT 200 which defines the correlation in relation to N1 grid points G1 based on the partial LUT 230 and the few grid point LUT 210 is generated and stores the generated LUT 200 in the HDD 14 (S20); then, the computer 10 ends the LUT generation process.

(4-2) Unique Color Reference Grid Point Extraction Process:

Fig. 12 schematically illustrates an example of extracting the unique color reference grid points G2 and G3 according to the unique color reference grid point extraction process illustrated in Fig. 9. When the unique color reference grid point extraction process illustrated in Fig. 9 is started, the computer 10 generates a downscaled image 410 by scaling down the specific image 400 which is selected in S11 of Fig. 8 as necessary (S102). The downscaling process can be a process which averages the pixel values (C, M, Y, and K) of the plurality of pixels PX1 of the specific image 400, for example. In Fig. 12, taking the arithmetic mean, for example, of the pixel values of 2 x 2 pixels PX1 to render them as a pixel value of one pixel PX2 ($\sum C/4$, $\sum M / 4$, $\sum Y / 4$, $\sum K / 4$) is illustrated. Naturally, the average may be a weighted average or the like, the downscaling ratio is not limited to 50% vertical and 50% horizontal, and the vertical and horizontal downscaling ratios may be different. The process of S102 is an arbitrary process, may be omitted, and thus, for example, S102 may be omitted if subsequent processes do not take excessive time.

In S104, the unique colors UCi contained in the specific image 400 are extracted from the specific image 400. In the example illustrated in the top right of Fig. 12, of the unique colors UCi (where i is an integer of from 1 to 7) of the pixel values ($C_i$, $M_i$, $Y_i$, and $K_i$) are contained in each of the pixels PX2 of the downscaled image 410, there is only one pixel of each unique color UC1 and UC7, and there is a plurality of pixels of each unique color UC2 to UC6. Note that, when any of C, M, Y, and K of the pixel values is different in two of the unique colors, the unique colors are different. In the case of the example of Fig. 12, each of the unique colors UC2 to UC6 which is redundant is counted as one, and the unique color number Nc is obtained, where Nc = 7 of the unique colors UC1 to UC7. In other words, each unique color is only counted once. The list of unique colors UC1 to UC7 is the unique color list (the color distribution of the specific image) 420, and is stored in the RAM 12. In S106, the number Nc of extracted unique colors UCi is acquired.

In S108, the coordinate values of the grid points G1 of the final LUT 200 in the CMYK color space are acquired. In S110, of the plurality of grid points G1 in the CMYK color space, the unique color reference grid points G2 and G3, which are used in the conversion of the unique colors UCi which are extracted in S104, are specified. For the grid points G1 which interpolate the positions of the unique colors UCi in the CMYK color space, there are a total of $2^4$ = 16 points of two locations for each of CMYK. In the middle stage of Fig. 12, a portion of the CMYK color space is schematically represented on a two-dimensional plane, the grid points UG1 to UG9 are illustrated as the grid points G1 and indicate the position of the unique colors UCi. For example, the 16 points including the grid points UG1, UG2, UG4, and UG5 interpolate the unique color UC1 illustrated in Fig. 12. The 16 points including the grid points UG5, UG6, UG8, and UG9 interpolate the unique color UC7. Therefore, the grid point UG5 is a grid point which is used to interpolate both the unique colors UC1 and UC7. The 16 points including the grid points UG2, UG3, UG5, and UG6 interpolate the unique colors UC2 and UC3, which differ alternately. In S112, the coordinate values (C, M, Y, and K) of the grid points G1 which are specified in the unique colors UCi are stacked in the RAM 12. A unique color reference grid point stack 430 which is illustrated in Fig. 12 illustrates a portion of the grid points G1 for which the coordinate values are stacked with the reference numerals of the grid points UG1 to UG9. In S114, it is determined whether or not the processes S110 to S112 are performed in relation to all of the unique colors UCi. If unique colors UCi which are yet to be processed remain, the computer 10 returns the process to S110.

As described above, of the plurality of grid points G1 in the CMYK color space for each of the unique colors UCi contained in the specific image 400, one or more of the unique color reference grid points G2 and G3 which are used in the conversion of the unique colors UCi are extracted.

When the processes S110 to S112 have been performed in relation to all of the unique colors UCi, the computer 10 groups the coordinate values which are redundant among the grid point coordinate values which are stacked in the unique color reference grid point stack 430 into one (S116). In other words, where a grid point (eg UG5) is used to interpolate more than one unique color (eg UC1 and UC7), that grid point is only included in the finalized stack once. At the bottom of Fig. 12, a unique color reference grid point list 440 which stores the coordinate values of the unique color reference grid points G2 and G3 for which redundancy has been eliminated is illustrated. In this manner, the redundancy of the unique color reference grid points G2 and G3 which are extracted in S110 to S112 is eliminated. When Np unique color reference grid points G2 and G3 are specified based on the color distribution (420) of the specific image 400 in the S102 to S116 processes, the computer 10 records the Np unique color reference grid points G2 and G3 on the HDD 14 (S118) and ends the unique color reference grid point extraction process. In S16 of Fig. 8, which is performed subsequently, a process is performed in which the partial LUT 230 is generated by defining the correlation in relation to Np unique color reference grid points G2 and G3 so as to exhibit the first output properties in relation to the first region R1. In other words, the unique color reference grid points G2 and G3 are the color material amount prediction grid points with which the color material amounts of cmyklclm are predicted by the prediction unit U10. Detailed description will be given later of the partial LUT generation process.

(4-3) Structure of Few Grid Point Lookup Table:

In the few grid point LUT generation process which is performed in S18 of Fig. 8, as shown in Figs. 6A and 7, a process in which the few grid point LUT 210 is generated is performed by associating the usage amounts of the first and the second color materials CL1 and CL2 in relation to the N3 grid points (the third grid points) G5 in the few grid point LUT 210, which has less grid points than the final LUT 200. The grid points G5 are, together with the unique color reference grid points G2 and G3 of the partial LUT 230, the color material amount prediction grid points with which the color material amounts of cmyklclm are predicted by the prediction unit U10. Note that, when the grid points G5 are present in the range R1g of the unique color reference grid points G2 and G3, the prediction of the color material amounts need not be performed in relation to the grid points G5, and the final LUT 200 is generated using the predicted color material amounts of the unique color reference grid points G2 and G3 in the range R1g. The number N3 of the grid points G5 is a number obtained by subtracting the grid points in the range R1g.

As described above, since the CMYK color space is four-dimensional, when grid points of Ng levels are provided for the usage amounts of each of CMYK, the grid point number of the final LUT 200 is $N1 = Ng^4$, and if $Ng = 17$, then $N1 = 83521$. Therefore, there are N3 grid points G5 of the few grid point LUT 210, where N3 is fewer than the grid point number N1 of the final LUT 200.

It is also conceivable to set the number N3 of the grid points G5 of the few grid point LUT 210 to $Ns^4$, where there are Ns levels (where Ns is an integer which satisfies $2 \leq Ns < Ng$) for the color material usage amounts of each of CMYK. This concept is included in the present technology; however, where the color material usage amounts of any one color of CMYK (set to a selected color) are fixed, a three-dimensional color space gamut is formed using the remaining three colors, and the gamut changes according to the color material usage amounts of the selected color, $N3 < Ns^4$ may be adopted. The term "gamut" refers to the magnitude of the volume of the color reproduction region, and is represented by the magnitude or the volume in the L*a*b* color space, for example. For example, the K color material CL3 is a color material which effects a reduction in the lightness and the saturation; thus, the colors of CMYK, where (C, M, Y, and K) = (50%, 30%, 10%, and 100%), are reproduced darker and with a lower saturation than the colors of CMY, where (C, M, Y, and K) = (50%, 30%, 10%, and 0%). This being the case, a CMYK color space gamut in which the K color material usage amounts are fixed at a limited value (for example, K = 10%) is smaller than a CMY color space gamut in which K is not used at all. It can be said that, by adding a fixed amount of the K color material, the gamut becomes smaller than when the K color material is not added.

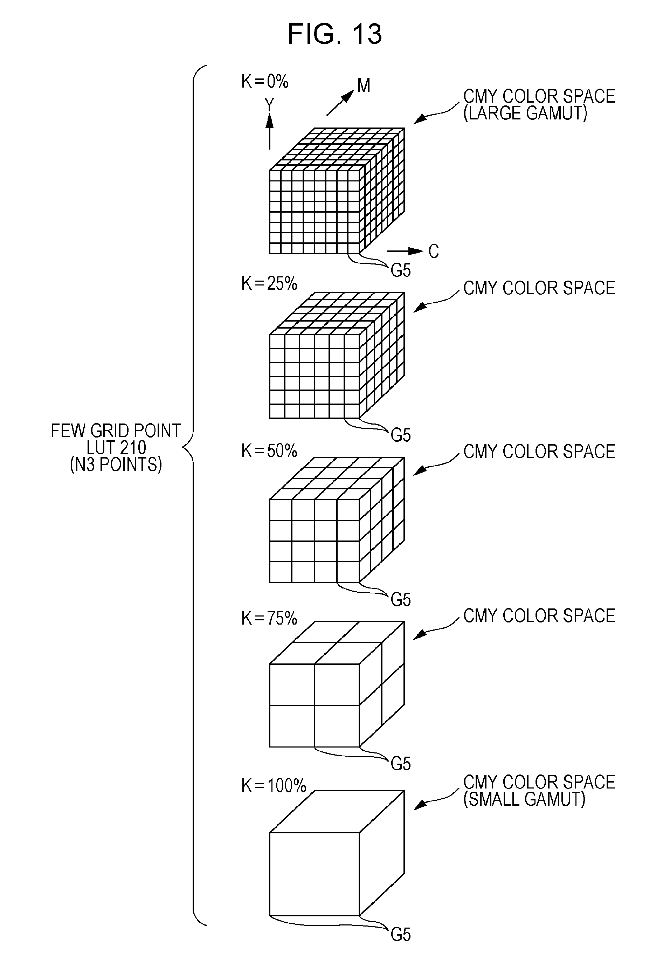

From the above description, it is not necessary to cause a CMY color space in which the K color material usage amount is great and which only has a small gamut to hold many grid points. Conversely, it is necessary to cause a CMY color space which does not use K, a CMY color space in which the K color material usage amount is little and which has a large gamut, and the like to hold many grid points in order to accurately depict the colors in the color space in discrete grid points. Therefore, as in the example of Fig. 13, a number of the grid points G5 corresponding to the usage amounts of the K color material CL3 are provided in the CMY color space which is represented by the CMY color materials CL4 in relation to each of the usage amounts of the K color materials CL3 corresponding to the grid points G1 of the final LUT 200, that is, each position of the K axis of the grid points G1. Specifically, since the gamut is large when the K color material usage amount is little, the number of grid points in the CMY color space is increased, and since the gamut is small when the K color material usage amount is great, the number of grid point in the CMY color space is decreased.

Fig. 13 is schematically illustrates an arrangement example of the color material amount prediction grid points (the third grid points) G5 for usage amounts of the K color material CL3. When there are Ng levels of the K color material usage amounts of the grid points G1 of the final LUT 200, there are Ng CMY three-dimensional color spaces. In Fig. 13, when the K color material usage amount is 0%, the CMY color space gamut is a comparatively wide range. When the K color material usage amount is 25%, the CMY color space gamut is a narrower range than the case of K = 0%. Therefore, the number of the third grid points G5 corresponding to K = 0% (the first usage amount example) is greater than the number of the third grid points G5 corresponding to K = 25% (the second usage amount example). When the K color material usage amount is 50%, the CMY color space gamut is a narrower range than the case of K = 25%. Therefore, the number of the third grid points G5 corresponding to K = 0% and K = 25% (the first usage amount example) is greater than the number of the third grid points G5 corresponding to K = 50% (the second usage amount example). Furthermore, the CMY color space gamut becomes progressively narrower in the order of the K color material usage amount being 75%, and 100%. Therefore, the greater the K color material usage amount, the more the number of the third grid points G5 of the CMY color space is reduced. Note that, a minimum of $2^3 = 8$ grid points G5 are provided in the CMY color space for the interpolation operation.

Note that, since the first and the second usage amounts are relative in relation to K, for example, the first usage amount may be set to K = 75% and the second usage amount may be set to K = 100%. Naturally, the grid points G5 which are provided in each CMY color space may be arranged uniformly; however the grid points G5 may be arranged in a non-uniform manner.

When each position of the grid points G5 of CMY are determined in relation to each final position of the grid points G1, as shown in the example of Fig. 7, the arrangement of the color material amount prediction grid points G5 which will be the few grid point LUT 210 is determined. When the color material amount prediction grid points G5 fall within the range R1g of the unique color reference grid points (the color material amount prediction grid points of the partial LUT 230) G2 and G3, it is possible not to perform the prediction of the color material amounts in relation to the color material amount prediction grid points G5 in the range R1g. In S18 of Fig. 8, a process is performed in which the few grid point LUT 210 is generated by defining the correlation in relation to N3 color material amount prediction grid points G5 so as to exhibit the second output properties in relation to the second region R2. Detailed description will be given later of the few grid point LUT generation process.

(4-4) Generation Example of Print Color Profile:

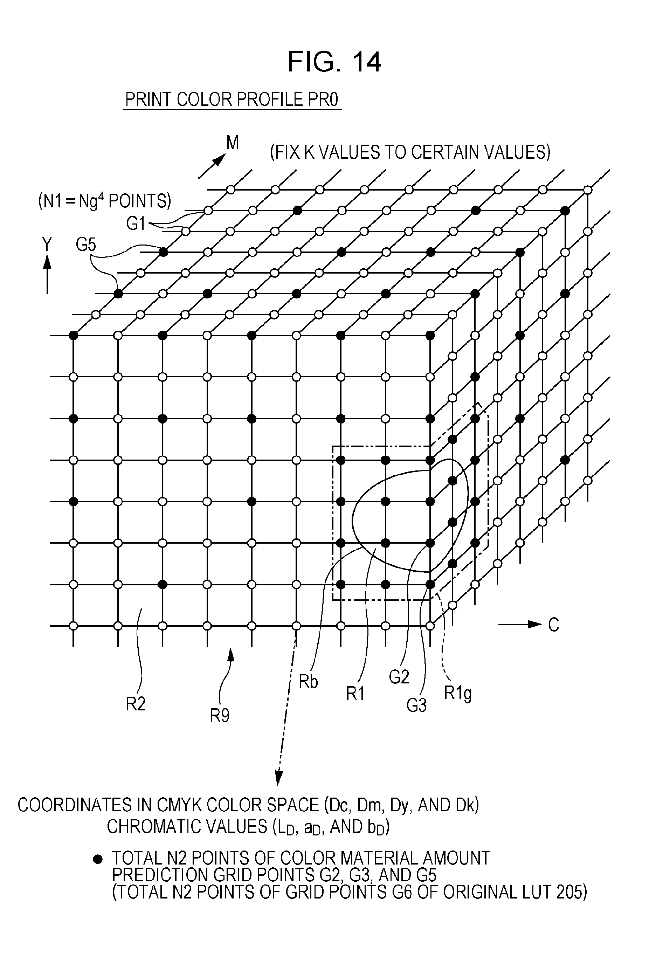

Figs. 14 and 15 illustrate the print color profiles PR0 which define the correlations between the usage amounts of the first color materials CL1 and the target chromatic values. In Fig. 14, the print color profile for generating the partial LUT 230 and the print color profile for generating the few grid point LUT 210 are illustrated together. In other words, the print color profiles PR0 illustrated in Fig. 14 include the unique color reference grid points (the color material amount prediction grid points) G2 and G3 which will become the partial LUT 230, and the color material amount prediction grid points G5 which will become the few grid point LUT 210. The color material amount prediction grid points G2, G3, and G5 are N2 second grid points G6, where N2 is a number less than the number N1 of the first grid points G1 which are provided in the final LUT 200, and are the grid points G6 of the original LUT 205 for generating the final LUT 200.

The print color profiles PR0 define the correlations between the usage amount $D_c$, $D_m$, Dy, and $D_k$ of the first color materials CL1 and the target chromatic values $L_D$, $a_D$, and $b_D$ under the observation light source L0 of the first color materials CL1 of the usage amounts $D_c$, $D_m$, Dy, and $D_k$ which are formed on the printed matter 350. When the usage amounts of the second color materials CL2 are predicted so as to be similar to the target chromatic values in relation to each of the plurality of observation light sources L0, each of the observation light sources L0 may be provided with the print color profiles PR1, PR2, PR3, ....

Here, it is preferable that the target chromatic values which are defined in the print color profiles PR0, and the chromatic values of the second color materials CL2 which are formed on the color reproduction image 160 be device-independent color spaces, and be chromatic values of uniform color spaces; however, it is possible to adopt chromatic values of device dependent color spaces, and it is possible to adopt chromatic values of a color space which is not a uniform color space. In addition to the CIE L*a*b* color space, the device-independent uniform color space may be the CIE L*u*v* color space. The L* of the L*a*b* color space represents lightness, and the a* and the b* represent the chromaticity that indicates the hue and the saturation.

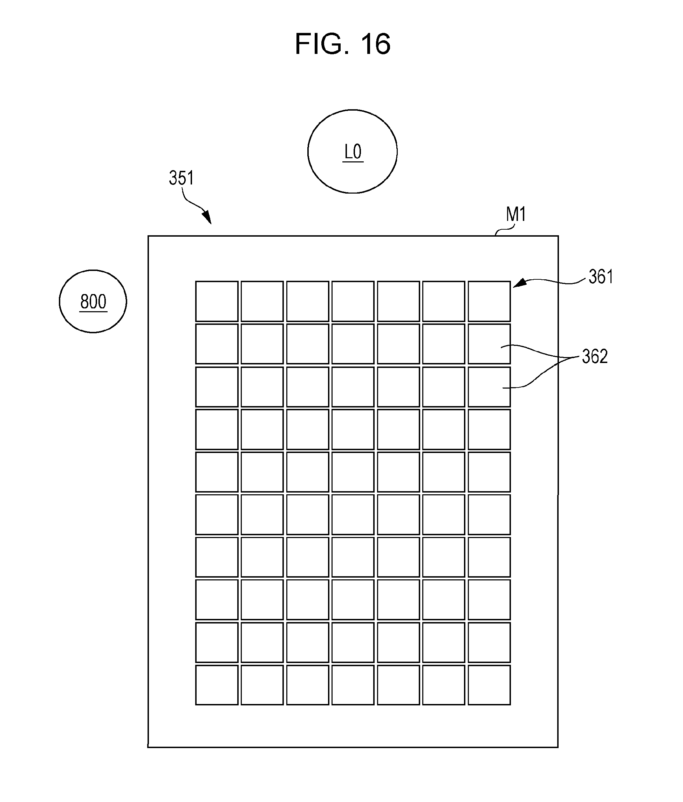

Fig. 16 schematically illustrates the method of generating the print color profiles PR0 for generating the few grid point LUT 210 and the partial LUT 230.

As exemplified in Fig. 16, the main printing machine 300 forms chart printed matter 351 for creating the print color profiles PR0. The printed matter 351 forms a color chart 361 on the target printed matter M1. A plurality of patches 362 are lined in two-dimensions in the chart 361. The patches 362 are also referred to as color chips, and mean a region which is the unit of the color measurement performed by a color measurement machine 800. The patches 362 correspond to the color material amount prediction grid points G2, G3, and G5 of the print color profiles PR0. Therefore, N2 patches 362 are arranged on the chart 361. When the print color profiles PR0 are generated for each of the observation light sources L0, the chart 361 may be subjected to color measurement by changing the observation light source and using the same printed matter 351. For example, when generating the few grid point LUT 210 in which the shades of the printed image 360 of the CMYK color space and the color reproduction image 160 of the CMYKlclm color space are matched as well as possible under many observation light sources such as the light sources D50, D55, D65, A, and F11, the chart 361 is subjected to color measurement while switching, in order, between the light sources D50, D55, D65, A, and F11 (including pseudo-light sources; same applies hereinafter), and the print color profiles PR0 which associate the usage amounts $D_c$, $D_m$, Dy, and $D_k$ of the first color material with the target chromatic values $L_D$, $a_D$, and $b_D$ may be generated in relation to each of the light sources D50, D55, D65, A, and F11.

For example, when the patches 362 are subjected to color measurement using the D50 light source L1 as the observation light source L0 and each of a plurality of sets of chromatic values $L_{D-D50}$, $a_{D-D50}$, and $b_{D-D50}$ is associated with the usage amounts $D_c$, $D_m$, Dy, and $D_k$ of the first color materials, it is possible to generate the print color profile PR1 illustrated in Fig. 15. The process may be performed in relation to all N4 grid points of the print color profile PR1; however, each of the plurality of sets of chromatic values $L_{D-D50}$, $a_{D-D50}$, and $b_{D-D50}$ may be associated with the usage amounts $D_c$, $D_m$, Dy, and $D_k$ of the first color materials in relation to a portion of the grid points G1, and, subsequently, the usage amounts $D_c$, $D_m$, Dy, and $D_k$ of the first color materials may be interpolated in relation to the remaining grid points using an interpolation operation. For example, the print color profile PR1 is used for generating the partial LUT 230 or the few grid point LUT 210 of the output properties "D50".

For example, when the patches 362 are subjected to color measurement using the F10 light source as the observation light source L0 and each of a plurality of sets of chromatic values $L_{D-F10}$, $a_{D-F10}$, and $b_{D-F10}$ is associated with the usage amounts $D_c$, $D_m$, Dy, and $D_k$ of the first color materials, it is possible to generate the print color profile PR2 illustrated in Fig. 15. For example, when the patches 362 are subjected to color measurement using the F2 light source as the observation light source L0 and each of a plurality of sets of chromatic values $L_{D-F2}$, $a_{D-F2}$, and $b_{D-F2}$ is associated with the usage amounts $D_c$, $D_m$, Dy, and $D_k$ of the first color materials, it is possible to generate the print color profile PR3 illustrated in Fig. 15. An interpolation operation may also be used in the generation of the print color profiles PR2 and PR3. For example, the print color profiles PR2 and PR3 are used for generating the partial LUT 230 or the few grid point LUT 210 of the output properties "F10-F2".

(4-5) Example of Predicting Usage Amounts of Second Color Materials:

The LUT generation apparatus U0 can calculate the ink amounts which reproduce the target chromatic values for the number of light sources which are determined using an optimal amount search method (an optimization algorithm) of the ink amounts. The prediction unit U10 predicts the usage amounts of the CMYKlclm color materials CL2 such that the chromatic values of the CMYKlclm color materials CL2 which are formed on the color reproduction image 160 are similar to the target chromatic values $L_D$, $a_D$, and $b_D$ for each observation light source based on the evaluation value I which evaluates the similarity of the target chromatic values $L_D$, $a_D$, and $b_D$ which are defined in the print color profile PR1 in relation to the plurality of observation light sources L0.

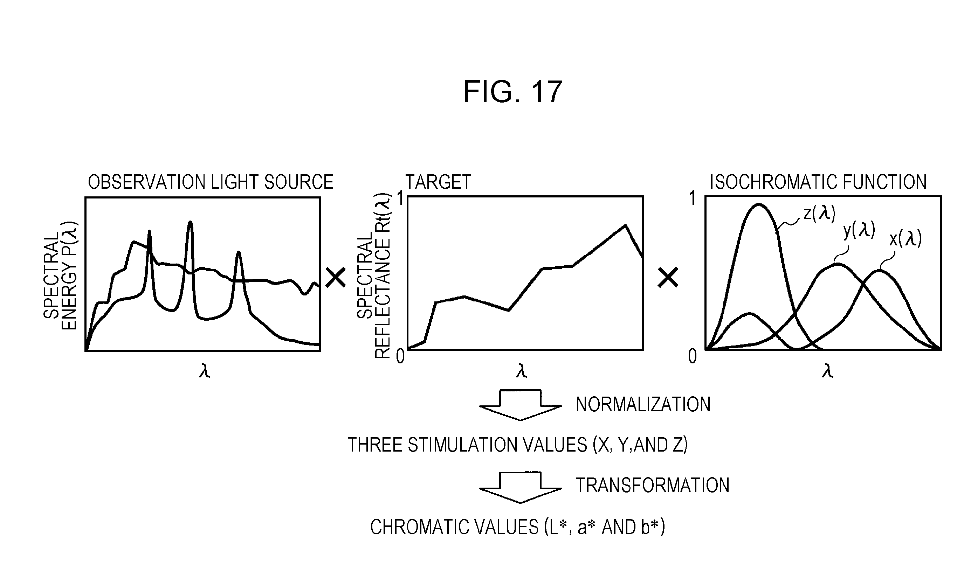

Fig. 17 schematically illustrates obtaining the chromatic values under each of the plurality of observation light sources from a target (a patch) which has a certain spectral reflectance. The spectral reflectance $R_t(\lambda)$ of the target normally has a non-uniform distribution over the entire visible light region. Each of the light sources has a different spectral energy $P(\lambda)$ distribution. The spectral energy of the reflected light of each wavelength when the light source radiates the target is a value obtained by multiplying the target spectral reflectance $R_t(\lambda)$ with the spectral energy $P(\lambda)$ for each wavelength. It is possible to obtain three stimulation values X, Y, and Z by obtaining the convolution integrals of each isochromatic function $x(\lambda)$, $y(\lambda)$, and $z(\lambda)$ corresponding to human spectral sensitivity properties in relation to the spectra of the spectral energy of the reflected light, and performing normalization using a function k.

$$X = k \int P(\lambda) R_t(\lambda) x(\lambda) d\lambda$$
$$Y = k \int P(\lambda) R_t(\lambda) y(\lambda) d\lambda \qquad \cdots (1)$$
$$Z = k \int P(\lambda) R_t(\lambda) z(\lambda) d\lambda$$

It is possible to obtain the chromatic values L*a*b* by transforming the three stimulation values X, Y, and Z using a predetermined transformation formula.

As illustrated in Fig. 17, since the spectra of the spectral energy $P(\lambda)$ is different for each light source, the target chromatic values which are obtained finally are also different according to the light source.

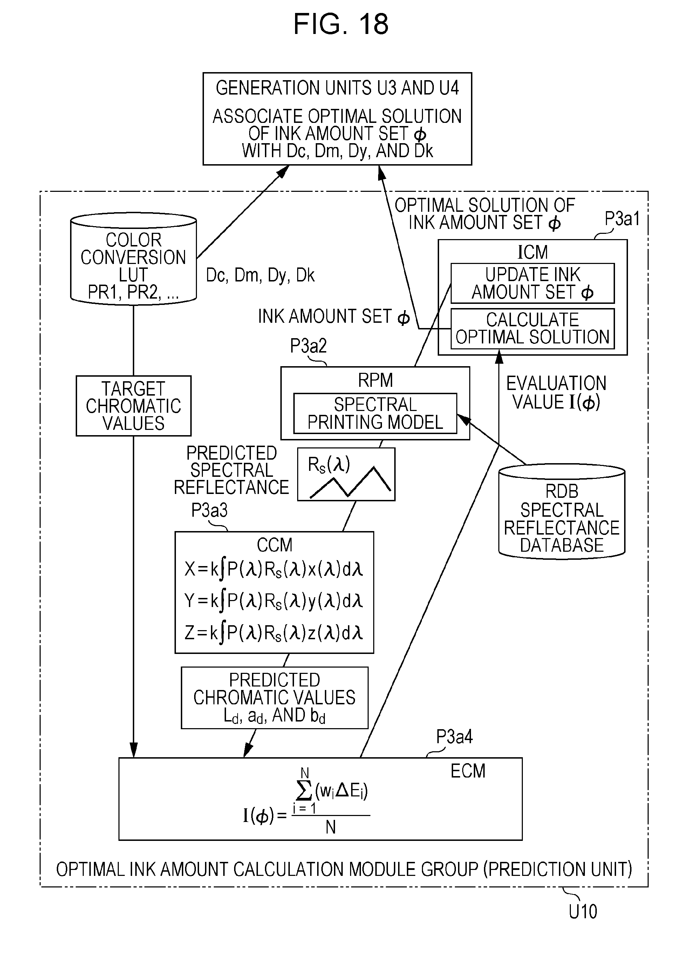

Fig. 18 schematically exemplifies the flow of the processes of an optimal ink amount calculation module group which calculates the ink amount set $\phi$ which is capable of reproducing the same colors as the target chromatic values $L_D$, $a_D$, and $b_D$. When the second color materials CL2 are the CMYKlclm color materials, the ink amount set $\phi$ refers to the combination of the usage amounts $d_c$, $d_m$, dy, $d_k$, $d_{lc}$, and $d_{lm}$ of the CMYKlclm inks which are ejected.

The optimal ink amount calculation module group (the prediction unit U10) is provided with an ink amount set calculation module (ICM) P3a1, a spectral reflectance prediction module (RPM) P3a2, a color calculation module (CCM) P3a3, and an evaluation value calculation module (ECM) P3a4.

The ink amount set calculation module (ICM) P3a1 selects one grid point G1 from the four-dimensional print color profile PR0, the input of which is the CMYK color material usage amounts, and acquires the target chromatic values $L_D$, $a_D$, and $b_D$ which are associated with the grid point G1. This point differs greatly from the printing system described in JP-A-2009-200820, the input of which is an RGB image output.

The spectral reflectance prediction module (RPM) P3a2 predicts a spectral reflectance $R(\lambda)$ of a case in which the proof machine 100 ejects ink onto the target printed matter M2 such as printing paper as a predicted spectral reflectance $R_s(\lambda)$ based on the ink amount set $\phi$ according to the input of the ink amount set $\phi$ from the ICM P3a1, specifically, according to the input of the ink usage amounts $d_c$, $d_m$, dy, $d_k$, $d_{lc}$, and $d_{lm}$. Since it is possible to predict the formation state of the ink dots on the target printed matter M2 if the ink amount set $\phi$ is specified, the RPM P3a2 can calculate the predicted spectral reflectance $R_s(\lambda)$ uniquely.

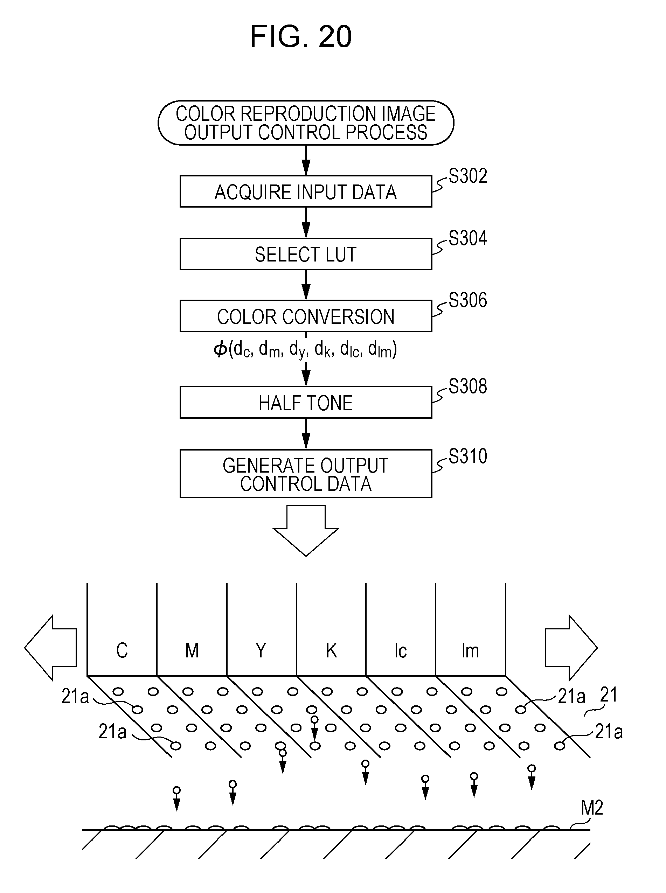

Here, description will be given of a prediction model (a spectral printing model) which is used in the RPM P3a2, with reference to Figs. 20 to 23C. Fig. 20 schematically exemplifies a recording head 21 of the proof machine 100. The recording head 21 is provided with a plurality of nozzles 21a for each ink of CMYKlclm. The proof machine 100 performs the control in which the usage amounts for each ink of CMYKlclm are set to the ink amount set $\phi$ ($d_c$, $d_m$, dy, $d_k$, $d_{lc}$, and $d_{lm}$). The ink droplets which are ejected from the nozzles 21a form a group of multiple dots on the target printed matter M2; accordingly, the color reproduction image 160 of an ink coverage rate corresponding to the ink amount set $\phi$ ($d_c$, $d_m$, dy, $d_k$, $d_{lc}$, and $d_{lm}$) is formed on the target printed matter M2.

The prediction model (the spectral printing model) which is used in the RPM P3a2 predicts the spectral reflect-

ance R($\lambda$) of a case in which the printing is performed using the arbitrary ink amount set $\phi$ ($d_c$, $d_m$, dy, $d_k$, $d_{lc}$, and $d_{lm}$) as the predicted spectral reflectance $R_s(\lambda)$. In the spectral printing model, color patches are printed for a plurality of representative points in an ink amount space, and a spectral reflectance database RDB which is obtained by measuring the spectral reflectance R($\lambda$) thereof using a spectro-reflectometer is prepared. The predicted spectral reflectance $R_s(\lambda)$ of a case in which printing is performed using the arbitrary ink amount set $\phi$ is accurately predicted by performing the prediction using a Cellular Yule-Nielsen Spectral Neugebauer Model which uses the spectral reflectance database RDB.

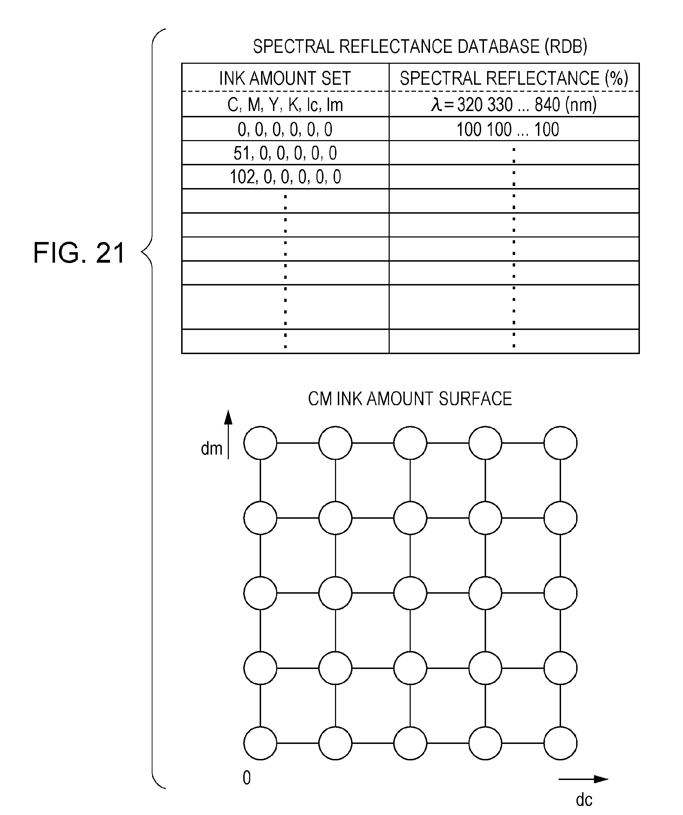

Fig. 21 schematically exemplifies the structure of the spectral reflectance database RDB. The ink amount space of the present embodiment is six-dimensional; however, only a CM plane is depicted in order to simplify the drawing. The spectral reflectance database RDB has a LUT in which the spectral reflectance R($\lambda$), which is obtained by actually printing and measuring in relation to the ink amount sets ($d_c$, $d_m$, dy, $d_k$, $d_{lc}$, and $d_{lm}$) of a plurality of grid points in the ink amount space, is denoted. The LUT includes grid points which divide each of the ink amount axes into a plurality. Note that, a configuration may be adopted in which only a portion of the grid points is actually printed and measured, and the spectral reflectance R($\lambda$) may be predicted based on the spectral reflectance R($\lambda$) of the grid points which are obtained by actually printing and measuring the other grid points. Accordingly, it is possible to reduce the number of color patches which are actually printed and measured.

The spectral reflectance database RDB is prepared for each type of target printed matter. The spectral reflectance R($\lambda$) is determined according to the spectral transmittance exhibited by an ink film (dots) which is formed on the target printed matter and the reflectance of the target printed matter; and, this is because the spectral reflectance R($\lambda$) is greatly influenced by the surface properties (upon which the dot shape depends) and the reflectance of the target printed matter.

The RPM P3a2 executes a prediction using the Cellular Yule-Nielsen Spectral Neugebauer Model which uses the spectral reflectance database RDB corresponding to the demands of the ICM P3a1. In the prediction, the prediction conditions are acquired from the ICM P3a1 and the prediction conditions are set. For example, the target printed matter and the ink amount set $\phi$ are set as the printing conditions. When glossy paper is used as the printing paper for prediction, the spectral reflectance database RDB which is created by printing the color patches onto the glossy paper is set.

When the setting of the spectral reflectance database RDB is achieved, the ink amount set $\phi$ ($d_c$, $d_m$, dy, $d_k$, $d_{lc}$, and $d_{lm}$) which is input from the ICM P3a1 is applied to the spectral printing mode. The Cellular Yule-Nielsen Spectral Neugebauer Model is based on the Spectral Neugebauer Model and the Yule-Nielsen model, which are well known. Description will be given of the model in a case in which ink of three types of CMY is used for simplicity; however it is possible to expand a similar model to a model which uses the CMYKlclm ink set of the present embodiment. In regard to the Cellular Yule-Nielsen Spectral Neugebauer Model, refer to Color Res Appl 25, 4-19, 2000 and R. Balasubramanian, Optimization of the spectral Neugebauer model for printer characterization, J. Electronic Imaging 8(2), 156-166 (1999).

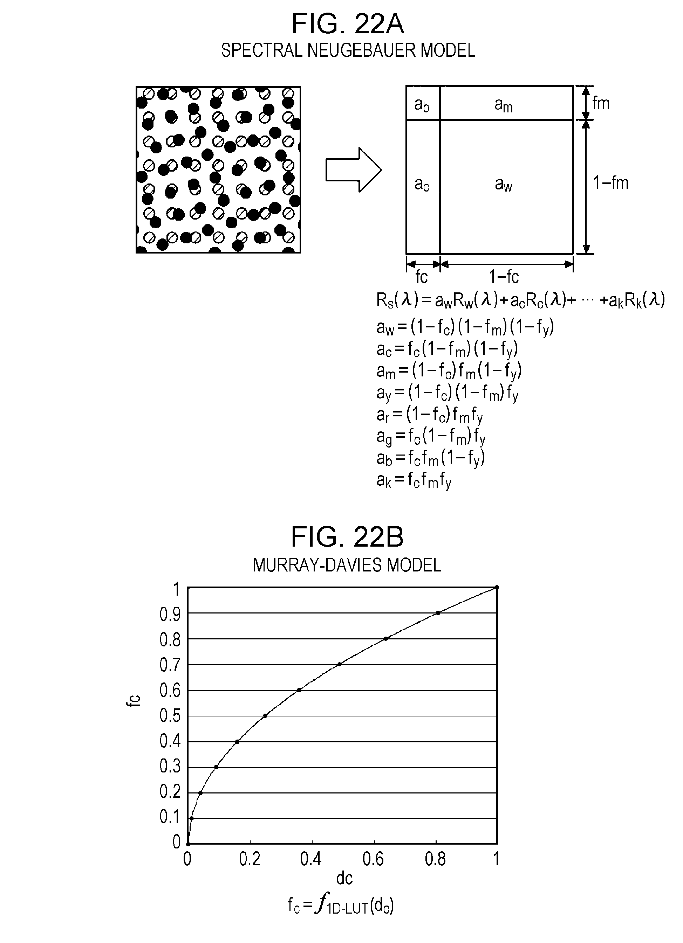

Fig. 22A is a diagram schematically exemplifying the Spectral Neugebauer Model. In the Spectral Neugebauer Model, the predicted spectral reflectance $R_s(\lambda)$ of the printed matter of a case in which printing is performed using an arbitrary ink amount set ($d_c$, $d_m$, and dy) is provided using the following equations.

$$R_s(\lambda) = a_w R_w(\lambda) + a_c R_c(\lambda) + a_m R_m(\lambda) + a_y R_y(\lambda)$$
$$+ a_r R_r(\lambda) + a_g R_g(\lambda) + a_b R_b(\lambda) + a_k R_k(\lambda) \qquad \cdots(2)$$

$$a_w = (1 - f_c)(1 - f_m)(1 - f_y)$$

$$a_c = f_c(1 - f_m)(1 - f_y)$$

$$a_m = (1 - f_c)f_m(1 - f_y)$$

$$a_y = (1 - f_c)(1 - f_m)f_y$$

$$a_r = (1-f_c)f_m f_y$$

$$a_g = f_c(1-f_m)f_y$$

$$a_b = f_c f_m(1-f_y)$$

$$a_k = f_c f_m f_y$$

Here, $a_i$ is the area ratio of the i-th region, and $R_i(\lambda)$ is the spectral reflectance of the i-th region. The subscript character i refers to a region with no ink (w), a region of only cyan ink (c), a region of only magenta ink (m), a region of only yellow ink (y), a region onto which magenta ink and yellow ink are ejected (r), a region onto which yellow ink and cyan ink are ejected (g), a region onto which cyan ink and magenta ink are ejected (b), and a region onto which the three inks of CMY are ejected (k), respectively. When only one type of the CMY inks is ejected, $f_c$, $f_m$, and fy are the proportion of the area covered by the ink thereof (referred to as "ink coverage rate (ink area coverage)").

The ink coverage rates $f_c$, $f_m$, and fy are provided using the Murray-Davies Model illustrated in Fig. 22B. In the Murray-Davies model, for example, the ink coverage rate $f_c$ of the cyan ink is a non-linear function of the cyan ink amount $d_c$; for example, it is possible to convert the ink amount $d_c$ into the ink coverage rate $f_c$ using a one-dimensional lookup table. The reason that the ink coverage rates $f_c$, $f_m$, and fy result in non-linear functions of the ink amounts $d_c$, $d_m$, and dy is that, when a small amount of the ink is ejected onto a unit area, the ink spreads sufficiently; however, when a large amount of the ink is ejected, since the ink overlaps, the area which is covered by the ink does not increase markedly. The same applies to the other types of the ink, MY.

When the Yule-Nielsen model relating to the spectral reflectance is applied, equation (2) is re-written as the following equation (3a) or (3b).

$$R_s(\lambda)^{1/n} = a_w R_w(\lambda)^{1/n} + a_c R_c(\lambda)^{1/n} + a_m R_m(\lambda)^{1/n} + a_y R_y(\lambda)^{1/n}$$
$$+ a_r R_r(\lambda)^{1/n} + a_g R_g(\lambda)^{1/n} + a_b R_b(\lambda)^{1/n} + a_k R_k(\lambda)^{1/n} \quad \cdots(3a)$$

$$R_s(\lambda) = \{a_w R_w(\lambda)^{1/n} + a_c R_c(\lambda)^{1/n} + a_m R_m(\lambda)^{1/n} + a_y R_y(\lambda)^{1/n}$$
$$+ a_r R_r(\lambda)^{1/n} + a_g R_g(\lambda)^{1/n} + a_b R_b(\lambda)^{1/n} + a_k R_k(\lambda)^{1/n}\}^n \quad \cdots(3b)$$

Here, n is a predetermined coefficient of 1 or greater, and, for example, it is possible to set n = 10. The equations (3a) and (3b) represent the Yule-Nielsen Spectral Neugebauer Model.

The Cellular Yule-Nielsen Spectral Neugebauer Model which is adopted in the present embodiment is a model in which the ink amount space of the Yule-Nielsen Spectral Neugebauer Model described above is divided into a plurality of cells.

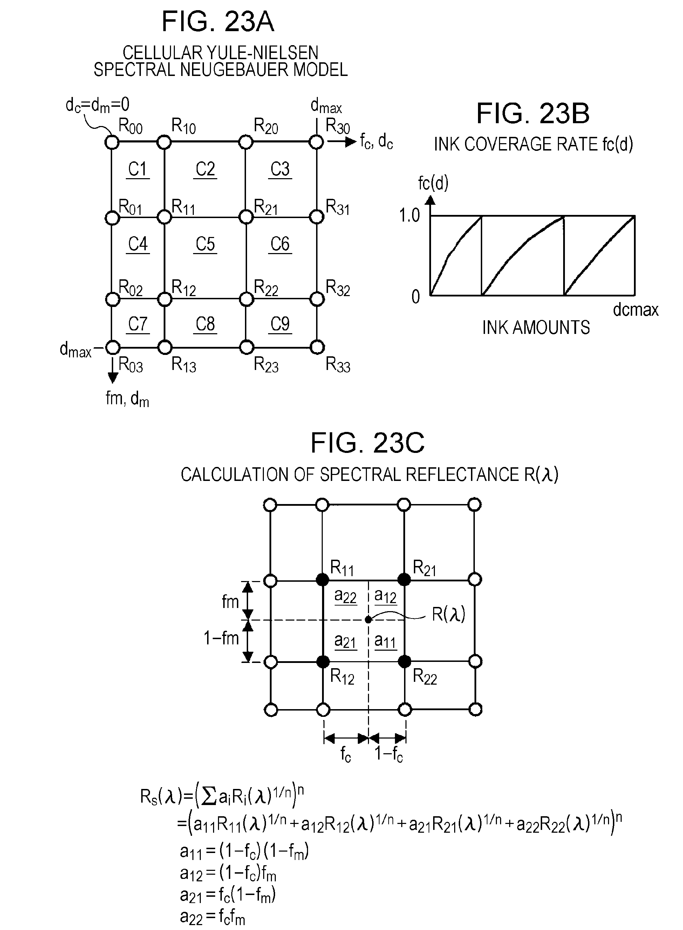

Fig. 23A illustrates an example of cell division in the Cellular Yule-Nielsen Spectral Neugebauer Model. Here, the cell division is depicted in a two-dimensional ink amount space including two axes of the ink amounts $d_c$ and $d_m$ of the CM inks to simplify description. Since the ink coverage rates $f_c$ and $f_m$ are in unique relationships with the ink amounts $d_c$ and $d_m$ in the Murray-Davies Model described above, it is possible to consider the ink coverage rates $f_c$ and $f_m$ to be axes indicating the ink coverage rates $f_c$ and $f_m$. The white circles are cell division grid points, and the two-dimensional ink amount (coverage rate) space is divided into nine cells C1 to C9. The ink amount sets ($d_c$, $d_m$) corresponding to each of the grid points are the ink amount sets which correspond to the grid points which are defined in the spectral reflectance database RDB. In other words, it is possible to obtain the spectral reflectance $R(\lambda)$ of each of the grid points by referring to the spectral reflectance database RDB described above. Therefore, it is possible to acquire the spectral

reflectance $R(\lambda)_{00}$, $R(\lambda)_{10}$, $R(\lambda)_{20}$, ..., $R(\lambda)_{33}$ of each of the grid points from the spectral reflectance database RDB.

In the present embodiment, the cell division is performed in the CMYKlclm six-dimensional ink amount space, and the coordinates of each grid point are also represented by a six-dimensional ink amount set $\phi$ ($d_c$, $d_m$, dy, $d_k$, $d_{lc}$, and $d_{lm}$). The spectral reflectance $R(\lambda)$ of the grid points which correspond to the ink amount sets $\phi$ of each of the grid points is acquired from the spectral reflectance database RDB (for example, that of coated paper).

Fig. 23B illustrates a relationship between the ink coverage rate $f_c$ and the ink amount $d_c$, which is used in the cellular model. Here, a range 0 to $d_{cmax}$ of the ink amounts of the first type of ink is also divided into three sections, and a virtual ink coverage rate $f_c$ which is used in the cellular model is obtained using a non-linear curve which accelerates uniformly from 0 to 1 for each section is obtained. The ink coverage rates $f_m$ and fy are also obtained in the same manner in relation to the other inks.

Fig. 23C illustrates the calculation method of the predicted spectral reflectance $R_s(\lambda)$ of a case in which the printing is performed using an arbitrary ink amount set ($d_c$ and $d_m$) in a cell C5 of the center of Fig. 23A. The predicted spectral reflectance $R_s(\lambda)$ of a case in which the printing is performed using the ink amount set ($d_c$ and $d_m$) is provided using the following equation.

$$R_s(\lambda) = \left(\sum a_i R_i(\lambda)^{1/n}\right)^n$$
$$= \left(a_{11}R_{11}(\lambda)^{1/n} + a_{12}R_{12}(\lambda)^{1/n} + a_{21}R_{21}(\lambda)^{1/n} + a_{22}R_{22}(\lambda)^{1/n}\right)^n \quad \cdots(4)$$
$$a_{11} = (1-f_c)(1-f_m)$$
$$a_{12} = (1-f_c)f_m$$
$$a_{21} = f_c(1-f_m)$$
$$a_{22} = f_c f_m$$

Here, the ink coverage rates $f_c$ and $f_m$ in equation (4) are the values provided by the graph of Fig. 23B. It is possible to acquire the spectral reflectance $R(\lambda)_{11}$, $(\lambda)_{12}$, $(\lambda)_{21}$, and $(\lambda)_{22}$ corresponding to the four grid points which surround the cell C5 by referring to the spectral reflectance database RDB. Accordingly, it is possible to determine all the values which configure the right-hand side of equation (4), and it is possible to calculate the predicted spectral reflectance $R_s(\lambda)$ of a case in which the printing is performed using an arbitrary ink amount set $\phi$ ($d_c$ and $d_m$) as the computation result. It is possible to obtain the predicted spectral reflectance $R_s(\lambda)$ in the visible light region by sequentially shifting the wavelength $\lambda$ in the visible wavelength region. If the ink amount space is divided into a plurality of cells, it is possible to calculate the predicted spectral reflectance $R_s(\lambda)$ with more precision in comparison to a case in which the ink amount space is not divided.

As described above, the RPM P3a2 predicts the predicted spectral reflectance $R_s(\lambda)$ according to the demands of the ICM P3a1.

When the predicted spectral reflectance $R_s(\lambda)$ is obtained, the predicted chromatic values of a case in which the color calculation module (CCM) P3a3 radiates an object with the predicted spectral reflectance $R_s(\lambda)$ using the plurality of observation light sources L0 are calculated. The L*a*b* values of the CIE L*a*b* color space are used for the predicted chromatic values. The flow of calculating the predicted chromatic values is the same as that illustrated in Fig. 17 and equation (1).

$$X = k \int P(\lambda) R_s(\lambda) x(\lambda) d\lambda$$
$$Y = k \int P(\lambda) R_s(\lambda) y(\lambda) d\lambda \qquad \cdots(5)$$
$$Z = k \int P(\lambda) R_s(\lambda) z(\lambda) d\lambda$$

As illustrated in equation (5), the predicted chromatic values $L_d$, $a_d$, and $b_d$ are obtained by multiplying the predicted spectral reflectance $R_s(\lambda)$ by the spectra of the spectral energy of each of the light sources, obtaining the convolution integrals of the isochromatic functions, and further converting the three stimulation values into L*a*b* values.

The predicted chromatic values are calculated for each of the observation light sources L0.

The evaluation calculation module (ECM) P3a4 calculates the color differences ΔE between the target chromatic values $L_D$, $a_D$, and $b_D$ and the predicted chromatic values $L_d$, $a_d$, and $b_d$ in relation to each of the observation light sources. The color differences may be calculated using $\Delta E = \{(L_d - L_D)^2 + (a_d - a_D)^2 + (b_d - b_D)^2\}^{1/2}$, and may be calculated based on a CIE DE2000 color difference formula ($\Delta E_{2000}$). When the light sources D50, D65, and A are selected as the observation light source L0, the color differences of each light source are denoted as $\Delta E_{D50}$, $\Delta E_{D65}$, and $\Delta E_A$. The evaluation value I(φ) which evaluates the similarity to the target chromatic values $L_D$, $a_D$, and $b_D$ is an evaluation function that depends on the ink usage amounts $d_c$, $d_m$, dy, $d_k$, $d_{lc}$, and $d_{lm}$; and, for example, it is possible to calculate the evaluation value I(φ) using the following equation.

$$I(\phi) = \frac{\sum_{i=1}^{N}\left(w_i \Delta E_i\right)}{N} \qquad \cdots (6)$$

Here, i represents the observation light source. In the example described above, i = 1 represents the D50 light source, i = 2 represents the D65 light source, and i = 3 represents the A light source. The term N represents the number of selected observation light sources. The term $\Delta E_i$ represents the color difference between the target chromatic values $L_d$, $a_D$, and $b_D$, and the predicted chromatic values $L_d$, $a_d$, and $b_d$ under the observation light source i. The term $w_i$ represents the weight in relation to the color difference $\Delta E_i$ under each observation light source. In the present embodiment, description is given of a case in which the weight $w_i$ is uniform; however, the weight $w_i$ may not be uniform.

The evaluation value I(φ) becomes small when the color differences ΔEi become small, and has a characteristic of becoming smaller the closer the target chromatic values and the predicted chromatic values are overall in each of the observation light sources. The calculation of the evaluation value I(φ) is returned to the ICM P3a1 finally due to the ICM P3a1 outputting the ink amount set φ to the RPM P3a2, the CCM P3a3, and the ECM P3a4. The ICM P3a1 calculates an optimal solution of the ink amount set φ such that the evaluation value I(φ), which is the objective function, is as small as possible by repeating the calculating of the evaluation values I(φ) corresponding to the ink amount set φ. It is possible to use a non-linear optimization method such as the gradient method, for example, as the method of calculating the optimal solution.

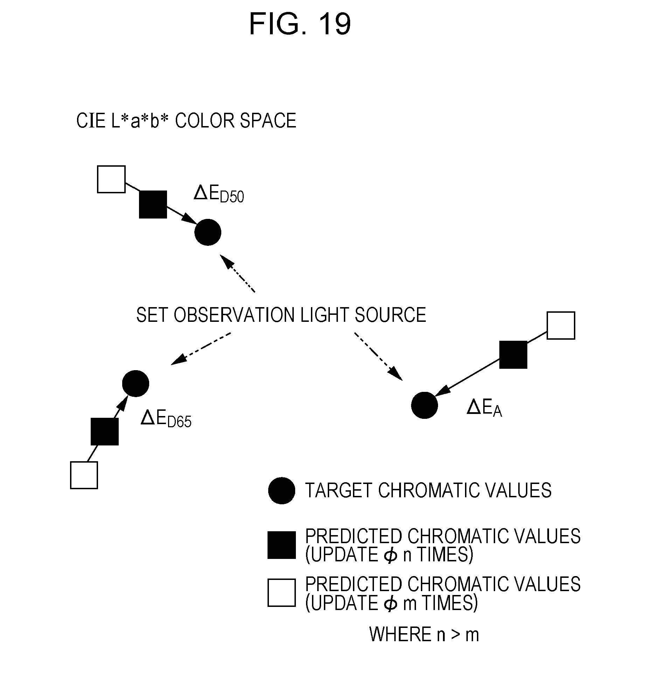

Fig. 19 illustrates the transition of the predicted chromatic values $L_d$, $a_d$, and $b_d$ under each of the observation light sources when the target chromatic values $L_D$, $a_D$, and $b_D$ and the ink amount set φ are optimized under each of the observation light sources in the CIE L*a*b* color spaces. The ink amount set φ ($d_c$, $d_m$, dy, $d_k$, $d_{lc}$, and $d_{lm}$) is optimized as each of the color differences $\Delta E_i$ becomes progressively smaller. In this manner, the ink amount set φ which is capable of reproducing colors of chromatic values which are similar to the target chromatic values $L_D$, $a_D$, and $b_D$ for each of the observation light sources in the color reproduction image 160 is calculated.

The ending condition of the optimization process can be set to when the color difference $\Delta E_i$ is less than or equal to a threshold $TE_i$. The thresholds $TE_i$ are provided for each of the observation light sources i, and are not only the same value, but may also be different values from each other. When $\Delta E_i \leq TE_i$ is satisfied for all of the observation light sources i, the optimization process ends. In this manner, the prediction unit U10 predicts the usage amounts of the second color materials CL2. In relation to the first region R1 including the unique colors UCi contained in the specific image 400 in the CMYK color space, the partial LUT generation unit U3 generates the partial LUT 230 by associating the usage amounts $d_c$, $d_m$, dy, $d_k$, $d_{lc}$, and $d_{lm}$ of the second color materials CL2, which exhibit the first output properties, with the usage amounts $D_c$, $D_m$, Dy, and $D_k$ of the first color materials CL1. In relation to the second region R2, which is different from the first region R1 in the CMYK color space, the few grid point LUT generation unit U4 generates the few grid point LUT 210 by associating the predicted usage amounts $d_c$, $d_m$, dy, $d_k$, $d_{lc}$, and $d_{lm}$ of the second color materials CL2, which exhibit the second output properties, with the usage amounts $D_c$, $D_m$, Dy, and $D_k$ of the first color materials CL1.

When describing the specific examples hereinafter, the first region R1 has the first output properties of "F10-F2" in which the shades of both the images 360 and 160 match under the light sources F10 and F2, and the second region R2 has the second output properties of "D50" in which the shades of both the images 360 and 160 match under the light sources D50. In this case, the light sources F10 and F2 are the first observation light source and the D50 light source is the second observation light source. The thresholds $TE_1$ and $TE_2$ in relation to the color differences $\Delta E_1$ and $\Delta E_2$ under the light sources F10 and F2 are set to $TE_1 = TE_2$, which exhibits a combination ratio of 1:1. The second output properties may be output properties in which the shades of both the image 360 and the image 160 are matched under multiple observation light sources (for example, the light sources D50, D55, D65, A and F11) while prioritizing the metameric matching of the D50 light source. In this case, the color differences $\Delta E_{D50}$ under the D50 light source may be smaller than the color differences under the other light sources.

(4-6) Final Lookup Table Generation Process:

In the final LUT generation process illustrated in Fig. 10, the final LUT 200 is generated by defining the correlation in relation to the N1 (where N1 > N2) first grid points G1 based on the correlation relating to the N2 second grid points G6 (refer to Figs. 2, 7, and 14) of the original LUT 205 which is the color material amount prediction grid points G2, G3, and G5. Note that, the grid points G5 of the range R1g of the unique color reference grid points G2 and G3 are not included in the original LUT 205 such that the first output properties are exhibited in relation to the first region R1.

When the final LUT generation process illustrated in Fig. 10 is started, the computer 10 first secures a storage region of the color material usage amounts $d_c$, $d_m$, dy, $d_k$, $d_{lc}$, and $d_{lm}$ of the final LUT 200 in the RAM 12, and acquires the coordinate values ($C_i$, $M_i$, $Y_i$, and $K_i$) of the grid points G1 of the final LUT 200 (S202). In S204, each of the usage amounts of the K color material CL3 is divided into a triangle with the grid points G6 of the original LUT 205 as the vertexes by subjecting the CMY three-dimensional color space, which is represented by the CMY color materials CL4, to Delaunay Triangulation. When there are Ng levels of the K usage amount, triangulation for performing tetrahedral interpolation in the CMY three-dimensional color space in relation to the Ng of a CMY three-dimensional color space such as those illustrated in Figs. 2 and 7 is performed. Essentially, the triangulation is performed such that the smallest angle of the post-division triangle is as large as possible. In S206, the number N1 of the grid points G1 of the final LUT 200 is acquired. Here, a variable for identifying each of the grid points G1 of the final LUT 200 is i. The variable i is an integer from 1 to N1.

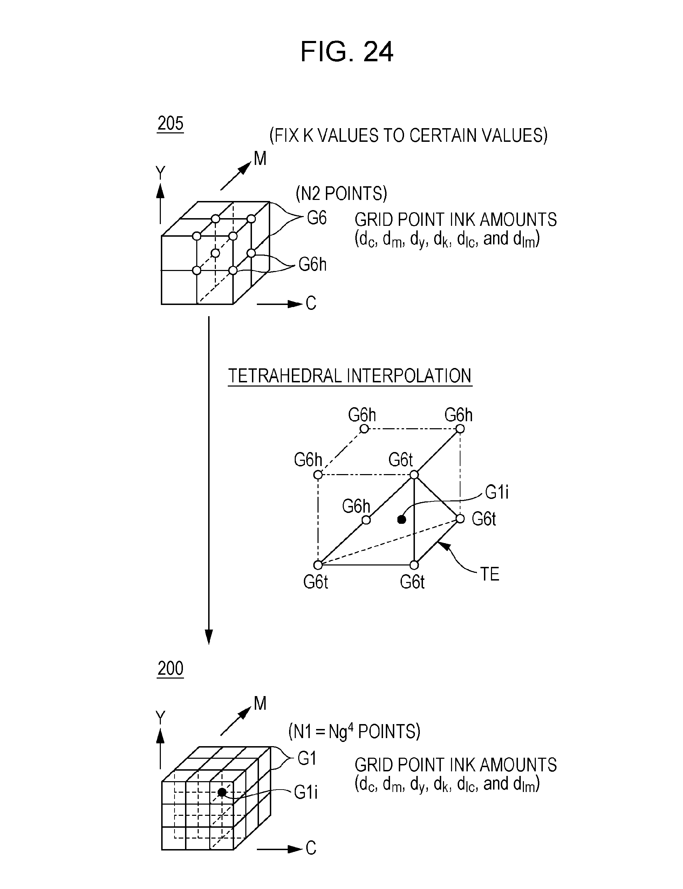

Fig. 24 is diagram schematically illustrating an example in which the grid points G1 of the final LUT 200 are interpolated from the grid points G6 of the original LUT 205 in the processes S208 to S210. The usage amounts $d_c$, $d_m$, dy, $d_k$, $d_{lc}$, and $d_{lm}$ of the second color material CL2 are stored in each of the grid points G6. In S208, the tetrahedron TE of the original LUT 205 which interpolates the grid points G1i of the final LUT 200 is specified. In Fig. 24, eight grid points G6h in the original LUT 205 indicate the vertexes of a minimum hexahedron surrounding the grid point G1i in the CMY color space, and four grid points G6t in the original LUT 205 indicate the vertexes of a minimum tetrahedron surrounding the grid point G1i among the eight grid points G6h of a case in which the CMY color space is triangulated. The tetrahedron TE is a tetrahedron which interpolates the grid point G1i. In S210, well known tetrahedral interpolation (an interpolation operation) is performed using the correlation between the usage amounts $D_c$, $D_m$, Dy, and $D_k$ of the first color materials CL1 and the usage amounts $d_c$, $d_m$, dy, $d_k$, $d_{lc}$, and $d_{lm}$ of the second color materials CL2 in relation to the four grid points G6t, and the usage amounts $d_c$, $d_m$, dy, $d_k$, $d_{lc}$, and $d_{lm}$ of the second color materials CL2 are calculated in relation to the grid point G1i. In this manner, the correlations of the final LUT 200 are defined in relation to the first grid points G1 by performing an interpolation operation which uses the correlation between K and CMY color material usage amounts in relation to the plurality of second grid points G6 surrounding the first grid points G1 in the CMY color space, in relation to each of the K color material usage amounts.

In S212, the color material usage amounts $d_c$, $d_m$, dy, $d_k$, $d_{lc}$, and $d_{lm}$ are stored in the grid point G1i of the final LUT 200. Naturally, when the position of the grid point G1i matches the position of the grid point G6 of the original LUT, the color material usage amounts $d_c$, $d_m$, dy, $d_k$, $d_{lc}$, and $d_{lm}$ of the grid point G6 may be stored as they are in the grid point G1i without performing the processes S208 to S210. In S214, it is determined whether or not the processes S208 to S212 are performed in relation to all of the grid points G1i. If grid points G1i which are yet to be processed remain, the computer 10 returns the process to S208.

In the manner described above, the correlations of the final LUT 200 are defined in relation to the first grid points G1 by performing an interpolation operation which uses the correlation between the usage amounts of the color materials CL1 and CL2 in relation to the plurality of second grid points G6 of the original LUT surrounding the first grid points G1 of the final LUT in the CMYK color space.

When the processes S208 to S212 are performed in relation to all of the grid points G1i, the computer 10 subjects the color material usage amounts $d_c$, $d_m$, dy, $d_k$, $d_{lc}$, and $d_{lm}$ which are defined in the boundary portion Rb (refer to Fig. 2) of the first region R1 in the CMYK color space to smoothing, as necessary (S216). The smoothing process of S216 is an arbitrary process and may be omitted.

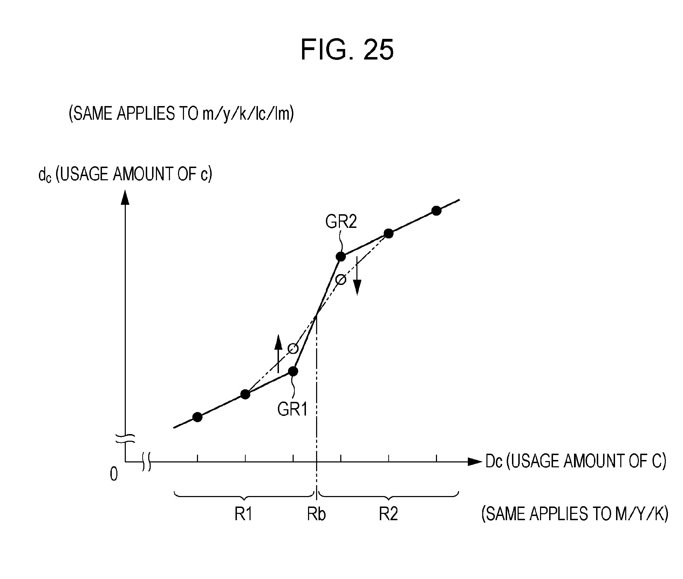

Fig. 25 schematically exemplifies the smoothing process. In order to facilitate understanding, the input usage amounts $D_c$ of C of the CMYK color space, that is, the coordinates of the C of the grid points, are illustrated on the horizontal axis, and the output usage amounts $d_c$ of c of the cmyklclm color space, that is, the usage amounts of the second color material CL2 of c which are stored in the grid points are illustrated on the vertical axis. Naturally, it is possible to apply the input usage amounts $D_m$, Dy, and $D_k$ of M, Y, and K of the CMYK color space to the horizontal axis, and it is possible to apply the output usage amounts $d_m$, dy, $d_k$, $d_{lc}$, and $d_{lm}$ of m, y, k, lc, and lm of the cmyklclm color space to the vertical axis. In the example of Fig. 25, it is shown that the output usage amounts $d_c$ in the grid points GR1 in the first region R1 and the output usage amounts $d_c$ in the grid points GR2 in the second region R2 are not smoothly connected in the boundary portion Rb. In this case, when the output usage amounts $d_c$ and $d_c$ of the grid points GR1 and GR2 are smoothly connected by being subjected to smoothing, it is possible to improve the image quality of the color reproduction image 160.

The smoothing process can be a process in which a similar function f (for example, $d_c = f (D_c)$) for obtaining the usage amounts of the second color materials CL2 from the corresponding usage amounts of the first color materials CL1 is obtained using the least squares method or the like, and the usage amounts of the second color materials CL2 are replaced with a value of the function f. The smoothing process may be performed by color such as for the output usage amounts $d_c$ in relation to the input usage amounts $D_c$, the output usage amount $d_m$ in relation to the input usage amounts $D_m$, the output usage amount dy in relation to the input usage amounts Dy, and the output usage amount $d_k$ in relation to the input usage amounts $D_k$. A process of changing the usage amounts (for example, $d_c$) of the second color materials CL2 of the boundary portion Rb such that the changes of the usage amounts (for example, $d_c$) of the second color materials CL2 fluctuate as little as possible in relation to the usage amounts (for example, $D_c$) of the first color material CL1 without using the function f may be performed.

When the usage amounts of the second color materials CL2 which are defined by the boundary portions Rb of the first regions R1 are subjected to smoothing, the color reproduction target intended by the user is favorably realized.

When the usage amounts $d_c$, $d_m$, dy, $d_k$, $d_{lc}$, and $d_{lm}$ of the second color materials CL2 are stored in all of the grid points of a LUT storage region, the final LUT 200 in which the correlation relating to the N1 grid points G1 is defined is generated. The computer 10 stores the final LUT 200, which is stored in the RAM 12, in the HDD 14 (S218), and ends the final LUT generation process.

In the final LUT 200 which is generated according to the specific example described above, as illustrated in Fig. 3, the correlation is defined relating to the first region R1 including the unique colors UCi contained in the specific image 400 in the CMYK color space so as to exhibit the first output properties of "F10-F2" for example, and the correlation is defined relating to the second region R2, which is different from the first region R1, in the CMYK color space so as to exhibit the second output properties of "D50", for example, which differ from the first output properties. The output usage amounts $d_c$, $d_m$, dy, $d_k$, $d_{lc}$, and $d_{lm}$ of the grid points which convert the colors of the first region R1 are based on the output usage amounts which are defined in the partial LUT 230. The output usage amounts $d_c$, $d_m$, dy, $d_k$, $d_{lc}$, and $d_{lm}$ of the grid points which convert the colors of the second region R2 are based on the output usage amounts which are defined in the few grid point LUT 210.

From the above description, as illustrated in Fig. 3, the first region R1 contained in the final LUT 200 has the first output properties in which the color differences $\Delta E_{F10\text{-}F2}$ between the chromatic values of the printed image 360 and the chromatic values of the color reproduction image 160 are less than or equal to the positive threshold TH1 (within the first range) under a light source in which F10 and F2 are combined in a 1:1 ratio. The second region R2 contained in the final LUT 200 has the second output properties in which the color differences $\Delta E_{D50}$ between the chromatic values of both the images 360 and 160 are less than or equal to the positive threshold TH2 (within the second range) under the D50 light source. The thresholds TH1 and TH2 are not particularly limited; however, it is possible to set them to approximately 1.0 to 2.0, for example, and other values may be used. Note that, "within the first range" includes $\Delta E_{F10\text{-}F2}$ < TH1, and "within the second range" includes $\Delta E_{D50}$ < TH2.

In the first region R1, as a result of considering it important that $\Delta E_{F10\text{-}F2} \leq$ TH1 be satisfied in relation to each of the grid points G2 and G3, there are grid points in which $\Delta E_{D50} >$ TH2 (outside of the second range) is satisfied. However, a portion of the grid points may satisfy $\Delta E_{D50} \leq$ TH2 (within the second range). In the second region R2, as a result of considering it important that $\Delta E_{D50} \leq$ TH2 be satisfied in relation to each of the grid points G2 and G3, there are grid points in which $\Delta E_{DF10\text{-}F2} >$ TH1 (within the first range) is satisfied. However, a portion of the grid points may satisfy $\Delta E_{F10\text{-}F2} \leq$ TH1 (within the first range).

In other words, as shown in Fig. 3, the output usage amounts $d_c$, $d_m$, dy, $d_k$, $d_{lc}$, and $d_{lm}$ of the first region R1 are set such that $\Delta E_{F10\text{-}F2} \leq$ TH1 (within the first range), which exhibits the first output properties, is satisfied, and is set such that $\Delta E_{D50} >$ TH2 (outside of the second range) is satisfied in at least a portion. The output usage amounts $d_c$, $d_m$, dy, $d_k$, $d_{lc}$, and $d_{lm}$ of the second region R2 are set such that $\Delta E_{D50} \leq$ TH2 (within the second range), which exhibits the second output properties, is satisfied, and is set such that $\Delta E_{F10\text{-}F2} >$ TH1 (outside of the first range) is satisfied in at least a portion.

As described above, in one LUT 200, the correlation is defined to exhibit different output properties in the first region R1 including the colors (UCi) contained in the specific image 400 in the CMYK color space and the second region R2 which is different from the region R1. Therefore, color reproduction of a high precision in relation to the colors of the specific image 400 is realized using one LUT 200 which defines the correlation between the color material usage amounts $D_c$, $D_m$, Dy, and $D_k$ which are matched to the CMYK color materials CL1 of the main printing machine 300 and the color material usage amounts $d_c$, $d_m$, dy, $d_k$, $d_{lc}$, and $d_{lm}$ which are matched to the cmyklclm color materials CL2 of the proof machine 100. As a result, for example, subjectively high color precision is realized in relation to the reproduction of the colors included in the specific image, and objectively high color precision is realized in relation to the reproduction of the colors not included in the specific image.

Since, among the grid points G6 of the original LUT 205, the grid points G2 and G3 which convert the colors included in the specific image are arranged at a higher density than the grid points G5, it is possible to perform the color reproduction of the specific image at high precision from this perspective, also.

Meanwhile, since the grid points G5 of the original LUT 205 are arranged at a lower density than the grid points G1 of the final LUT 200, the number of color patches to be subjected to color measurement is small, and the number of grid points for which to predict the amounts of the cmyklclm color materials is small. Therefore, the present technology can simplify the generation of the final LUT.

That is, the term "output properties" refers to the overall output tendencies in the regions R1 and R2. Therefore, the output properties may be set such that an average such as the arithmetic mean of the color differences $\Delta E_{F10\text{-}F2}$ between the printed image 360 and the color reproduction image 160 in the colors of a plurality of locations in the first region R1 contained in the final LUT 200 is less than or equal to the positive threshold TH1' (within the first range), and may be set such that the average of the color differences $\Delta E_{D50}$ between both the images 360 and 160 is greater than the positive threshold TH2' (outside of the second range). The output properties may be set such that an average such as the arithmetic mean of the color differences $\Delta E_{D50}$ between both the images 360 and 160 in the colors of a plurality of locations in the second region R2 contained in the final LUT 200 is less than or equal to the threshold TH2' (within the second range), and may be set such that the average of the color differences $\Delta E_{F10\text{-}F2}$ between both the images 360 and 160 is greater than the threshold TH1' (outside of the first range).

(4-7) Example of Forming Color Reproduction Image:

Fig. 20 exemplifies the color reproduction image output control process which is performed by the proof machine (the image forming apparatus) 100 in which the LUT 200 is stored. The process starts when the proof machine 100 receives a forming request of the color reproduction image 160, for example.

When the process starts, the proof machine 100 acquires input data corresponding to the usage amounts $D_c$, $D_m$, Dy, and $D_k$ of the CMYK color materials CL1 which are used by the main printing machine 300 in the formation of the printed matter 350 (S302). In S304, the LUT 200 used in the color conversion process is selected, as necessary.

In S306, the data of the CMYK color material usage amounts $D_c$, $D_m$, Dy, and $D_k$ is converted into the data of the usage amounts $d_c$, $d_m$, dy, $d_k$, $d_{lc}$, and $d_{lm}$ of the CMYKlclm color materials CL2 which are used by the proof machine 100 in the formation of the color reproduction image 160, with reference to LUT 200. When there are no input points of the LUT 200 which match the color material usage amounts $D_c$, $D_m$, Dy, and $D_k$, using the CMYKlclm color material usage amounts $d_c$, $d_m$, dy, $d_k$, $d_{lc}$, and $d_{lm}$ corresponding to each of the plurality of input points which are adjacent to the color material usage amounts $D_c$, $D_m$, Dy, and $D_k$ in the CMYK color space, $d_c$, $d_m$, dy, $d_k$, $d_{lc}$, and $d_{lm}$ which correspond to $D_c$, $D_m$, Dy, and $D_k$ may be interpolated. In this manner, it is possible to convert the CMYK color material usage amounts $D_c$, $D_m$, Dy, and $D_k$ into the CMYKlclm color material usage amounts $d_c$, $d_m$, dy, $d_k$, $d_{lc}$, and $d_{lm}$ according to LUT 200.

In S308, the data of the color material usage amounts $d_c$, $d_m$, dy, $d_k$, $d_{lc}$, and $d_{lm}$ is subjected to a half tone process, and multi-value data indicating the formation state of the dots corresponding to the usage amounts $d_c$, $d_m$, dy, $d_k$, $d_{lc}$, and $d_{lm}$ is generated. It is possible to use a dithering method, an error diffusion method, a concentration pattern method, or the like for the half tone process. In S310, the multi-value data indicating the formation state of the obtained dots is allocated to each of the scan passes and each of the nozzles 21a of the recording head 21, and the output control data is generated. The recording head 21 forms ink dots on the target printed matter M2 according to the output control data, and forms the proof 150, which includes the color reproduction image 160.

Here, the chromatic values, which are obtained by subjecting the printed image 360 to color measurement under a light source in which F10 and F2 are combined in a 1:1 ratio using a color measurement machine, are set to $L_{D1}$, $a_{D1}$, and $b_{D1}$, and the chromatic values, which are obtained by subjecting the color reproduction image 160 to color measurement under a light source in which F10 and F2 are combined in a 1:1 ratio using a color measurement machine, are set to $L_{d1}$, $a_{d1}$, and $b_{d1}$. In relation to the first region R1 (a region including the unique colors UCi of the specific image) of both the images 360 and 160, the color differences $\Delta E_{F10\text{-}F2}$ which are obtained from $L_{D1}$, $a_{D1}$, and $b_{D1}$, and $L_{d1}$, $a_{d1}$, and $b_{d1}$ are less than or equal to TH1 (within the first range). In relation to the second region R2 of both the images 360 and 160, at least a portion of the color differences $\Delta E_{F10\text{-}F2}$ are greater than TH1 (outside of the first range).

The chromatic values, which are obtained by subjecting the printed image 360 to color measurement under the D50 light source using a color measurement machine, are set to $L_{D2}$, $a_{D2}$, and $b_{D2}$, and the chromatic values, which are obtained by subjecting the color reproduction image 160 to color measurement under the D50 light source using a color measurement machine, are set to $L_{d2}$, $a_{d2}$, and $b_{d2}$. In relation to the second region R2 of both the images 360 and 160, the color differences $\Delta E_{D50}$ which are obtained from $L_{D2}$, $a_{D2}$, and $b_{D2}$, and $L_{d2}$, $a_{d2}$, and $b_{d2}$ are less than or equal to TH2 (within the second range). In relation to the first region R1 (a region including the unique colors UCi of the specific image) of both the images 360 and 160, there is a case in which at least a portion of the color differences $\Delta E_{D50}$ are greater than TH2 (outside of the second range).

As described above, the correlation is defined in one LUT 200 so as to exhibit the first output properties in relation to the first region R1 in the input color space, and the correlation is defined in the one LUT 200 so as to exhibit the second output properties which differ from the first output properties in relation to the second region R2 in the input color space. Therefore, the present technology is capable of realizing high-precision color reproduction in relation to the colors of the specific image 400 using one LUT 200 which defines the correlation between the color material usage amounts which are matched to the color materials CL1 of the main printing machine 300 and the color material usage amounts which are matched to the color materials CL2 of the proof machine 100.

(4-8) Example Represented by Granularity Index Value IN1 in which Output Properties Indicate Granularity of Color Reproduction Image:

Other than being indicated by the color differences ΔE described above, the output properties which are exhibited in relation to the region contained in the input color space are also indicated by the granularity index values IN1, the tone index values IN2 and the like.

The granularity index value IN1 is an index value in which, as the value decreases, the perceptible granularity of the color reproduction image 160 decreases. In a photographic image or the like, it is possible to improve the image quality when color conversion is carried out such that the perceptible granularity is generally decreased. Meanwhile, there is a likelihood that the image quality will be improved when a direction is adopted in which the perceptible granularity is strong for the color conversion in order to render vivid colors in a graph image or the like.

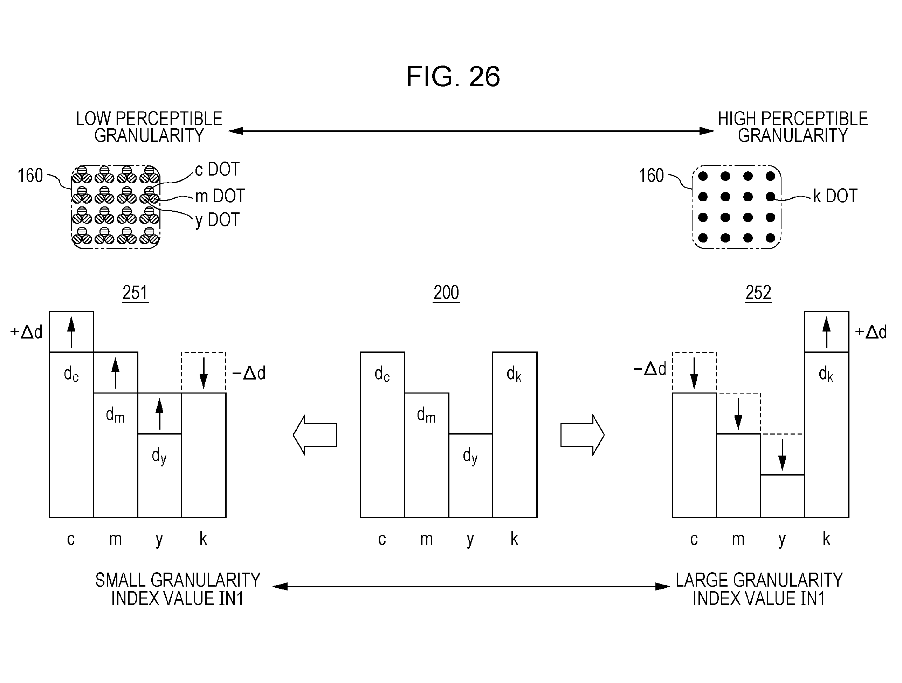

Fig. 26 schematically exemplifies the changing of the granularity of the color reproduction image 160.

The final LUT in which the granularity of the color reproduction image 160 is changed can be generated by changing the output usage amounts $d_c$, $d_m$, dy, $d_k$, $d_{lc}$, and $d_{lm}$ of the LUT 200 described above, for example. In order to facilitate understanding, the example illustrated in Fig. 26 shows the exchanging of at least a portion of the k usage amount $d_k$ and at least a portion of the cmy usage amounts when one dot of k is equivalent to one dot of c, one dot of m and one dot of y. When at least a portion Δd of the k usage amount $d_k$ of the first region R1 or the second region R2 is replaced with the cmy usage amounts, it is possible to generate a final LUT 251 in which, in relation to the first region R1 or the second region R2, the granularity index value IN1 is small, that is, the color reproduction image 160 in which there are few or no k dots with a comparatively low lightness and there are many cmy dots with a comparatively high lightness with low perceptible granularity is formed. When at least a portion Δd of the cmy usage amount $d_c$, $d_m$, and dy of the first region R1 or the second region R2 are replaced with the k usage amount, it is possible to generate a final LUT 252 in which, in relation to the first region R1 or the second region R2, the granularity index value IN1 is high, that is, the color reproduction image 160 in which there are few or no cmy dots with a comparatively high lightness and there are many k dots with a comparatively low lightness with high perceptible granularity is formed.

In order to change the perceptible granularity of the color reproduction image 160, one dot of c and two of more dots of lc may be exchanged, one dot of m and two or more dots of lm may be exchanged or the like. When at least a portion Δd of the c usage amount $d_c$ of the first region R1 or the second region R2 is replaced with the lc usage amount, or at least a portion Δd of the m usage amount $d_m$ is replaced with the lm usage amount, it is possible to generate the final LUT 251 in which, in relation to the first region R1 or the second region R2, the granularity index value IN1 is small, that is, the color reproduction image 160 in which there are few or no cm dots with a comparatively low lightness and there are many lclm dots with a comparatively high lightness with low perceptible granularity is formed.

The LUTs 251 and 252 may be generated based on the granularity index value IN1.

It is possible to represent the granularity index value IN1 which quantifies the granularity of the color reproduction image 160 using the following equation, for example.

$$IN1 = a_L \int \sqrt{WS(u)} VTF(u) du \qquad \cdots (7)$$

Here, $a_L$ is a lightness correcting term, WS(u) is a Wiener spectrum of the image, VTF is visual spatial frequency properties, and u is the spatial frequency. The concept of the granularity index value IN1 is described in Makoto Fujino, Image Quality Evaluation of Inkjet Prints, Japan Hardcopy '99, p.291-294, for example. Note that, equation (7) is illustrated one-dimensionally; however, it is easy to calculate the spatial frequency of a two-dimensional image as the function of spatial frequencies u and v.

The granularity index value IN1 is the perceptible granularity (or the degree of noise) which an observer can perceive when the observer views the color reproduction image. The smaller IN1 is, the less perceptible the granularity is to the observer. Naturally, IN1 may be an index value which evaluates the granularity when the color reproduction image is formed, and it is also possible to use other equations. The details of obtaining the granularity index value IN1 are described in JP-T-2007-516663, for example.

It is possible to calculate the granularity index value IN1 based on multi-value data for forming the color reproduction image 160, which is obtained using the half tone process of S308 of Fig. 20, that is, based on multi-value data representing the formation state of the dots corresponding to the color material usage amounts $d_c$, $d_m$, dy, $d_k$, $d_{lc}$, and $di_m$, for example. If the multi-value data is present, it is possible to obtain IN1 by simulating the formation state of the dots, even if the color reproduction image 160 is not actually formed on the target printed matter M2. Therefore, when IN1 is obtained from the multi-value data which is obtained by subjecting solid images (images which are macroscopically uniform) of the output usage amounts $d_c$, $d_m$, dy, $d_k$, $d_{lc}$, and $d_{lm}$ which are associated with each of the grid points G1 that configure the LUT 200 to the half tone process, it is possible to associate the granularity index values IN1 with each of the grid points G2 and G3. Naturally, the color reproduction image 160 which is formed on the target printed matter M2 may be read using an image reading apparatus such as a scanner, the multi-value data for forming the color reproduction image 160 may be acquired based on the read information, and IN1 may be calculated based on the multi-value data.

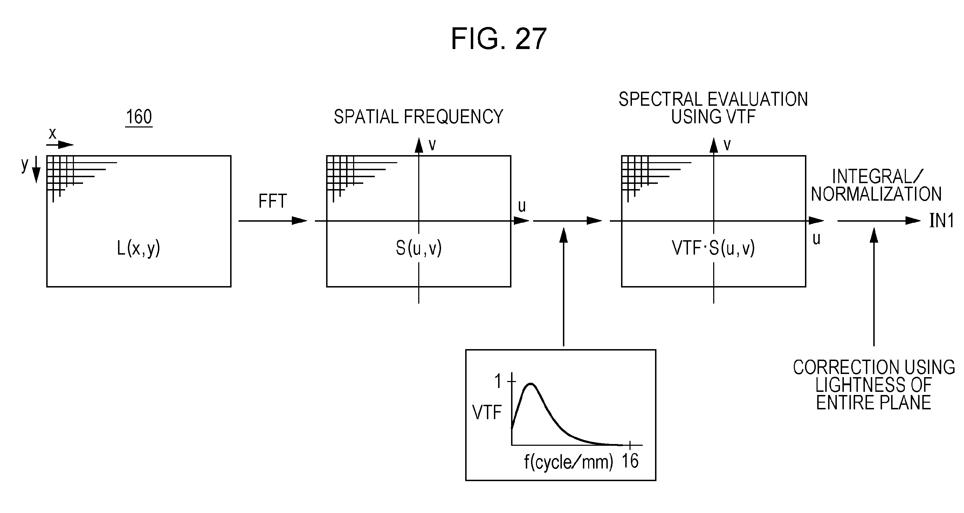

Fig. 27 schematically exemplifies the calculation of the granularity index value IN1. First, the lightness L(x, y) for each pixel of the color reproduction image 160 is obtained based on the multi-value data for forming the color reproduction image 160. When a dot is not formed at the coordinate (x, y), the lightness of the target printed matter M2 itself becomes L(x, y). When a dot is formed at the coordinate (x, y), the lightness L(x, y) is calculated based on the area ratio of the dot in relation to the pixel, the lightness of the dot portion, and the lightness of the printed matter M2 itself (for example, based on the proportional distribution of the lightness). When the lightness L(x, y) illustrated leftmost in Fig. 27 is obtained, the lightness L(x, y) is subjected to a Fast Fourier Transformation (FFT) to obtain the spectrum S(u, v) of the spatial frequency. The spectrum S(u, v) is formed of a real portion Re(u, v) and a virtual portion lm(u, v), and S(u, v) = Re(u, v) + jlm(u, v). The spectrum S(u, v) corresponds to the Wiener spectrum described above.

Next, the lowest frequency of the color reproduction image 160 which is the simulation target is calculated in order to calculate the magnitude f(u, v) of the spatial frequency (cycle/mm) corresponding to the coordinate (u, v). The lowest frequency is the frequency in which one oscillation occurs in the color reproduction image 160 which is formed using the multi-value data of the simulation target, and is defined for both the main scanning direction (the X direction) and the sub-scanning direction (the Y direction). For example, where one inch is 25.4 mm, the lowest frequency $e_u$ of the main scanning direction is defined as X resolution / (number of pixels in the X direction x 25.4), and the lowest frequency $e_v$ of the sub-scanning direction is defined as Y resolution / (number of pixels in the Y direction x 25.4). It is possible to calculate the magnitude f(u, v) of the spatial frequency at an arbitrary coordinate(u, v) as $\{(e_u \cdot u)^2 + (e_v \cdot v)^2\}^{1/2}$.

Meanwhile, the sensitivity to lightness of the human eye changes according to the magnitude f(u, v) of the spatial frequency. The visual spatial frequency properties exhibit properties such as those of VTF(f) illustrated in the lower center of Fig. 27. VTF(f) is defined as VTF(f) = 5.05 x exp($-0.138 \cdot d \cdot \pi \cdot f$ / 180) x {1 - exp($-0.1 \cdot d \cdot \pi \cdot f$ / 180)}. Here, d is the distance between the color reproduction image and the eye, and f is the magnitude f of the spatial frequency. Since f is expressed as a function of (u, v), the visual spatial frequency properties VTF can be set to the function VTF(u, v) of (u, v). Once VTF is obtained, the square of the VTF and the square of the spectrum S(u, v) are multiplied by each other, and the integral is obtained for all the pixels (u, v). When the square root of the obtained integrated value (set to Pow) is divided by the total number of pixels and is normalized, an objective index (set to Int) which does not depend on the number of pixels in the original multi-value data is calculated. Int = $Pow^{1/2}$ / total number of pixels

Note that, if the granularity is evaluated with the number of pixels of the multi-value data always set to the same number of pixels, it may not be necessary to perform the normalization.

The granularity index value IN1 need not take the influence of the lightness on the entire color reproduction image 160 into account. Even if the spectra of the spatial frequencies are the same, a case in which the entire color reproduction image is bright and a case in which the entire color reproduction image is dark have different impressions for the human eye; thus, correction may be performed with the assumption that it is easy to sense granularity when the entirety is bright. Therefore, the average (set to Ave) of the lightness of all the pixels of the color reproduction image 160 may be calculated, and the correction coefficient, which is derived from the brightness of the entire color reproduction image, a(L) = $\{(Ave + 16) / 116\}^{0.8}$ may be multiplied by the Int, and the value obtained may be used as the granularity index value IN1.

$$IN1 = a(L) \cdot Int$$

The correction coefficient a(L) corresponds to the lightness correction term $a_L$ described above.

From the above, in the setting screen 500 illustrated in Fig. 11, "low granularity" may be selected for the first region R1. For example, the first region R1 of the LUT 251 has the "low granularity" first output properties in which the granularity index value IN1 of the color reproduction image 160 is less than or equal to the positive threshold TH3 (within the third range). In relation to the second region R2 of the LUT 251, as a result of considering it to be important to keep the color differences of the chromatic values of both the images 360 and 160 within a predetermined range under the D50 light source, for example, and not considering the granularity to be important, the second output properties in which there is a case in which the granularity index value IN1 of the color reproduction image 160 is larger than the threshold TH3 (outside of the third range) are exhibited. Note that "within the third range" includes satisfying IN1 < TH3.

When giving a description with reference to Fig. 3, the output usage amounts $d_c$, $d_m$, dy, $d_k$, $d_{lc}$, and $d_{lm}$ of the first region R1 contained in the LUT 251 are set so as to exhibit the "low granularity" first output properties in which IN1 $\leq$ TH3 (within the third range). At least a portion of the output usage amounts $d_c$, $d_m$, dy, $d_k$, $d_{lc}$, and $d_{lm}$ of the second region R2 contained in the LUT 251 are set to exhibit the second output properties in which IN1 > TH3 (outside of the third range).

Here, the granularity index value IN1 of the color reproduction image 160 which is converted according to the LUT 251 from the colors (UCi) contained in the specific image 400 is less than or equal to TH3 (within the third range). The granularity index value IN1 of the color reproduction image 160 which is converted according to the LUT 251 from the colors not contained in the specific image 400 is greater than TH3 (outside of the third range).

Note that, when forming the color reproduction image 160 which has a gradation in which the usage amounts (for example, $D_c$, $D_m$, Dy, and $D_k$) of the first color materials CL1 are gradually increased or decreased, the granularity index value IN1 of a region within a density range in the color reproduction image 160 is less than or equal to TH3, and if the granularity index value IN1 is greater than TH3 in a region in another density range, a region which exhibits the "low granularity" output properties and a region which exhibits the output properties other than "low granularity" are present in one LUT 251.

As described above, the correlation is defined in one LUT 251 such that the granularity index value IN1 of a region in the input color space falls within the third range, and the correlation is defined so as to exhibit different output properties from "low granularity" in a region other than in the input color space. Therefore, the present technology is capable of realizing the color reproduction target of granularity intended by the user for each region of the input color space using one LUT 251 in which the correlation between the color material usage amounts matched to the color materials CL1 of the main printing machine 300 and the color material usage amounts matched to the color materials CL2 of the proof machine 100 is defined.

(4-9) Example Represented by Tone Index Value IN2 in which Output Properties Indicate Tone of Color Reproduction Image:

The tone index value IN2 is an index value in which, as the value decreases, the tone change of the color reproduction image 160 becomes smoother. In a photographic image or the like, it is possible to improve the image quality when color conversion is carried out such that the tone change is generally smoothened. Meanwhile, there is a likelihood that the image quality will be improved when a direction is adopted in which the tone change is rough for the color conversion in order to render vivid colors in a graph image or the like.

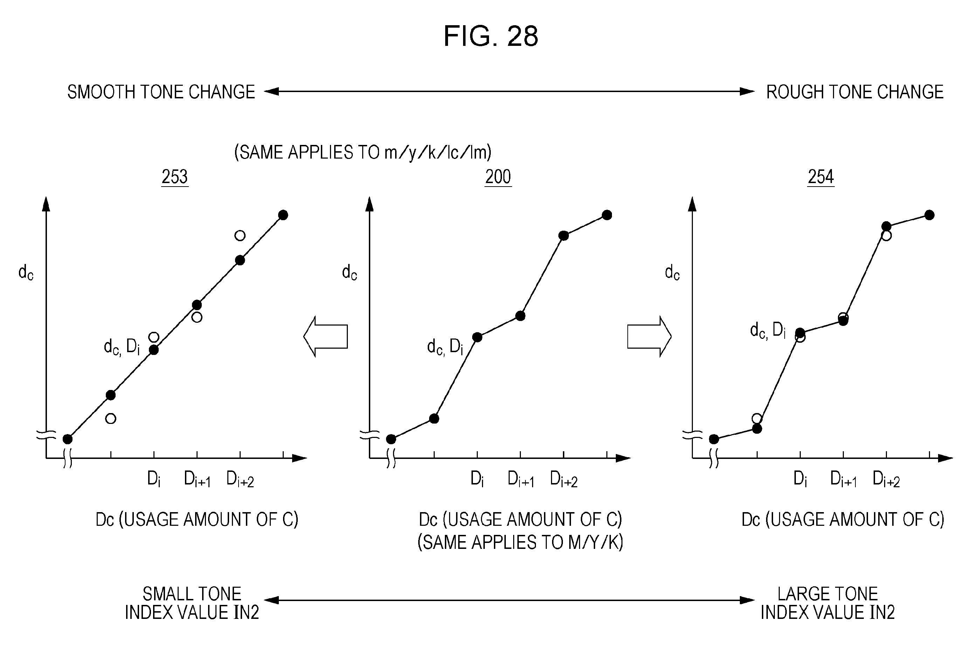

Fig. 28 is schematically exemplifies the changing of tone of the color reproduction image 160.

The final LUT in which the tone of the color reproduction image 160 is changed can be generated by changing the output usage amounts $d_c$, $d_m$, dy, $d_k$, $d_{lc}$, and $d_{lm}$ of the LUT 200 described above, for example. In order to facilitate understanding, the example illustrated in Fig. 28 shows that the input usage amounts $D_c$ of C of the CMYK color space, that is, the coordinates of the C of the grid points, are illustrated on the horizontal axis, and the output usage amounts $d_c$ of c of the cmyklclm color space, that is, the usage amounts of the second color material CL2 of c which are stored in the grid points are illustrated on the vertical axis. Naturally, it is possible to apply the input usage amounts $D_m$, Dy, and $D_k$ of M, Y, and K of the CMYK color space to the horizontal axis, and it is possible to apply the output usage amounts $d_m$, dy, $d_k$, $d_{lc}$, and $d_{lm}$ of m, y, k, lc, and lm of the cmyklclm color space to the vertical axis. In Fig. 28, the white circles illustrated in final LUTs 253 and 254 illustrate the output usage amounts $d_c$ in the original LUT 200. In the example of Fig. 28, an input usage amount variable $D_i$ (where i is an integer from 1 to n, and n is an integer greater than or equal to 3) is provided at an equal interval on the $D_c$ axis, and the output usage amount function $d_c(D_i)$ corresponding to $D_i$ is illustrated.

The tone change being smooth means that the fluctuation of a minute change $\Delta d_c(D_i) = \{d_c(D_{i+1}) - d_c(D_i)\} / \Delta D$ of the output usage amount function $d_c(D_i)$ is small. The tone change being rough means that the fluctuation of the minute change $\Delta d_c(D_i)$ is great. Therefore, the tone index value IN2 may be defined as the average of the absolute value of a minute change $\Delta d_c(D_i) = \{\Delta d_c(D_{i+1}) - \Delta d_c(D_i)\} / \Delta D$ of the minute change $\Delta\Delta d_c(D_i)$.

$$IN2 = \Sigma\{|\Delta\Delta d_c(D_i)|\} / (n - 2)$$

Where $\sum$ is the sum of $\{|\Delta\Delta d_c(D_i)|\}$ from i = 1 to i = n - 2.

The obtained tone index value IN2 means that, as the value decreases, the tone change becomes smoother, and also means that, as the value increases, the tone change becomes rougher. Therefore, when the usage amounts (for example, $d_c$) of the second color materials CL2 are changed such that the change of the usage amounts (for example, $d_c$) of the second color materials CL2 fluctuates as little as possible in relation to the change of the usage amounts (for example, $D_c$) of the first color materials CL1, it is possible to generate the final LUT 253 in which the color reproduction image 160 in which the tone index value IN2 is small, that is, the tone change is smooth is formed. When the usage amounts (for example, $d_c$) of the second color materials CL2 are changed such that the change of the usage amounts (for example, $d_c$) of the second color materials CL2 fluctuates as little as possible in relation to the change of the usage amounts (for example, $D_c$) of the first color materials CL1, it is possible to generate the final LUT 254 in which the color reproduction image 160 in which the tone index value IN2 is large, that is, the tone change is rough is formed.

The LUTs 253 and 254 may be generated based on the tone index value IN2.

From the above, in the setting screen 500 illustrated in Fig. 11, "tone" may be selected for the first region R1. For example, the first region R1 of the LUT 253 has the "tone" first output properties in which the tone index value IN2 of the color reproduction image 160 is less than or equal to the positive threshold TH4 (within the fourth range). In relation to the second region R2 of the LUT 253, as a result of considering it to be important to keep the color differences of the chromatic values of both the images 360 and 160 within a predetermined range under the D50 light source, for example, and not considering the change in tone to be important, the second output properties in which there is a case in which the tone index value IN2 of the color reproduction image 160 is larger than the threshold TH4 (outside of the fourth range) are exhibited. Note that "within the fourth range" includes satisfying IN2 < TH4.

When giving a description with reference to Fig. 3, the output usage amounts $d_c$, $d_m$, dy, $d_k$, $d_{lc}$, and $d_{lm}$ of the first region R1 contained in the LUT 253 are set so as to exhibit the "tone" first output properties in which IN2 $\leq$ TH4 (within the fourth range). At least a portion of the output usage amounts $d_c$, $d_m$, dy, $d_k$, $d_{lc}$, and $d_{lm}$ of the second region R2 contained in the LUT 253 are set to exhibit the second output properties in which IN2 > TH4 (outside of the fourth range).

Here, the tone index value IN2 of the color reproduction image 160 which is converted according to the LUT 253 from the colors (UCi) contained in the specific image 400 is less than or equal to TH4 (within the fourth range). The tone index value IN2 of the color reproduction image 160 which is converted according to the LUT 253 from the colors not contained in the specific image 400 is greater than TH4 (outside of the fourth range).

Note that, when forming the color reproduction image 160 which has a gradation in which the usage amounts (for example, $D_c$, $D_m$, Dy, and $D_k$) of the first color materials CL1 are gradually increased or decreased, the tone index value IN2 of a region within a density range in the color reproduction image 160 is less than or equal to TH4, and if the tone index value IN2 is greater than TH4 in a region in another density range, a region which exhibits the "tone" output properties and a region which exhibits the output properties other than "tone" are present in one LUT 253.

As described above, the correlation is defined in one LUT 253 such that the tone index value IN2 of a region in the input color space falls within the fourth range, and the correlation is defined so as to exhibit the second output properties, which are different from those of "tone" in a region other than in the input color space. Therefore, the present technology is capable of realizing the color reproduction target of tone intended by the user for each region of the input color space using one LUT 253 in which the correlation between the color material usage amounts matched to the color materials CL1 of the main printing machine 300 and the color material usage amounts matched to the color materials CL2 of the proof machine 100 is defined.

(5) Modification Example:

Various modification examples can be conceived for the invention.

For example, a recording apparatus such as a printer is connected to computer which stores the LUT 200, and when the usage amounts of the second color materials are obtained from the usage amounts of the first color materials according to the LUT 200, and the color reproduction image is formed using the recording apparatus so as to achieve the obtained usage amounts of the second color materials, the computer and the recording apparatus configure the image forming apparatus. Other than the recording apparatus, examples of the image forming apparatus include an image output apparatus or the like such as a display. Examples of the color reproduction image include an image on a screen of the image output apparatus.

The first color materials which are used by the printing machine in the formation of the printed matter may be, in addition to the CMYK combination, a combination of five colors, a combination of three colors or the like. The second color materials which are used by the image forming apparatus in the formation of the color reproduction image may be, in addition to a combination of CMYKlclm, a combination of seven or more colors or a combination of five or less colors. Examples of colors of color material which can be used as the second color material include, in addition to cmyklclm, or (orange), gr (green), b (blue), v (violet), dy (dark yellow), lk (light black), llk (light light black), and color free. Examples of color free color materials include a color material which applies glossiness to the target printed matter, and a color material which protects the colored color materials.

The combination of the third color materials and the fourth color materials included in the first color materials may be, in addition to the combination of K and CYM, a combination of K densities, a combination of C densities, a combination of M densities, or a combination of Y densities.

The processes described above can be changed as appropriate by changing the order or the like. For example, in the LUT generation process of Fig. 8, the few grid point LUT generation process of S18 may be performed before the partial LUT generation process of S16.

(6) Conclusion:

As described above, according to the invention, it is possible to provide technology or the like capable of realizing high-precision color reproduction in relation to colors of a specific image using one lookup table which defines a correlation between color material usage amounts which are matched to color materials of a printing machine, and color material usage amounts which are matched to color materials of an image forming apparatus. Naturally, the general actions and effects described above can be obtained even by a technology or the like formed only of constituent elements according to the independent claims without the constituent elements according to the dependent claims.

It is also possible to embody a configuration in which the components disclosed in the embodiments and the modification examples are replaced by each another or the combinations thereof are changed, a configuration in which the components of the related art and those disclosed in the embodiments and the modification example which are described above are replaced by each another or the combinations thereof are changed, and the like. These configurations and the like are included in the invention.

The foregoing description has been given by way of example only and it will be appreciated by a person skilled in the art that modifications can be made without departing from the scope of the present invention.

**Claims**

1. A lookup table generation method, comprising:

generating a lookup table (200) which defines a correlation between usage amounts (Dc, Dm, Dy, Dk) of first color materials (CL1) used by a printing machine (300) in formation of printed matter (350) and usage amounts ($d_c$, $d_m$, $dy$, $d_k$, $d_{lc}$, $d_{lm}$) of second color materials (CL2) used by an image forming apparatus (100) in formation of a color reproduction image (160),

wherein the lookup table is generated to define the correlation so as to exhibit first output properties in relation to a first region (R1) including colors (UCi) contained in a specific image in an input color space which is represented by colors of the first color materials, and to define the correlation so as to exhibit second output properties, which differ from the first output properties, in relation to a second region (R2), which is different from the first region, in the input color space.

2. The lookup table generation method according to Claim 1,

wherein grid points (G2) used in conversion of colors contained in the specific image, of a plurality of grid points (G1) in the input color space, are specified based on color distribution of the specific image, and the correlation relating to the specified grid points (G2) is defined so as to exhibit the first output properties in relation to the first region (R1).

3. The lookup table generation method according to Claim 2,

wherein colors (UCi) contained in the specified image are extracted from the specified image (400),

of the plurality of grid points (G1) in the input color space, the extracted grid points (G2, G3) used in the conversion of the colors are specified, and

the correlation relating to the specified grid points is defined so as to exhibit the first output properties in relation to the first region (R1).

4. The lookup table generation method according to Claim 2 or Claim 3,

wherein, for each of the colors (UCi) contained in the specified image (400), of the plurality of grid points (G1) in the input color space, one or more grid points (G2, G3) used in the conversion of the colors are extracted, redundancy of the extracted grid points is eliminated, and the correlation relating to grid points after redundancy elimination is defined so as to exhibit the first output properties in relation to the first region (R1).

5. The lookup table generation method according to any one of the preceding claims,
wherein the correlation relating to N2 second grid points (G5), which are fewer than N1 first grid points (G1) provided in the lookup table, is defined, and the correlation relating to the N1 first grid points is defined based on the correlation relating to the second grid points.

6. The lookup table generation method according to Claim 5,
wherein, for each of a plurality of observation light sources (L0) under which the printed matter (350) is observed, target chromatic values in the observation light source of the first color materials (CL1) which are formed on the printed matter are associated with the second grid points (G1),
wherein the usage amounts ($d_c$, $d_m$, dy, $d_k$, $d_{lc}$, $d_{lm}$) of the second color materials (CL2) are predicted for the second grid points (G5) based on evaluation values which evaluate similarity to target chromatic values which are associated in the second grid points for the plurality of observation light sources such that chromatic values of the second color materials which are formed on the color reproduction image are similar to the target chromatic values for each of the observation light sources, and
wherein the usage amounts of the predicted second color materials are associated with the second grid points (G5), and a correlation of the lookup table relating to the N1 grid points (G1) is defined based on the correlation between the usage amounts of the first and the second color materials for the second grid points.

7. The lookup table generation method according to Claim 5 or Claim 6,
wherein a correlation of the lookup table relating to the first grid points (G1) is defined by performing an interpolation operation using the correlation between the usage amounts of the first and the second color materials relating to the plurality of second grid points (G5) which surround the first grid points in the input color space.

8. The lookup table generation method according to any one of claims 5 to 7,
wherein the first color materials include a third color material (CL3) and a fourth color material (CL4),
wherein the second grid point (G5) is provided in the color space which is represented by the fourth color material for each usage amount of the third color material corresponding to the first grid points (G1), and
wherein a correlation of the lookup table relating to the first grid points is defined by performing an interpolation operation using the correlation between the usage amounts of the first and the second color materials relating to the plurality of second grid points which surround the first grid points in the color space which is represented by the fourth color material in relation to each usage amount of the third color material.

9. The lookup table generation method according to any one of claims 5 to 8,
wherein the first color materials include a third color material (CL3) and a fourth color material (CL4),
wherein a number of third grid points (G6t) which are included in the second grid points and correspond to usage amounts of the third color material is provided in the input color space for each usage amount of the third color material corresponding to the first grid points (G1i), and
wherein the correlation relating to each of the provided third grid points is defined.

10. The lookup table generation method according to Claim 9,
wherein usage amounts of the third color material corresponding to the first grid points include first usage amounts and second usage amounts which are greater than the first usage amounts, and
wherein the number of the third grid points corresponding to the first usage amounts of the third color materials is greater than the number of the third grid points corresponding to the second usage amounts of the third color materials.

11. The lookup table generation method according to any one of the preceding claims, wherein the first and the second output properties exhibited in first and the second regions contained in the input color space are represented by at least one of color differences ($\Delta E$) between the chromatic values of the first color materials and chromatic values of the second color materials in a predetermined observation light source (L0), index values (IN1) which indicate granularity of the color reproduction image, and index values (IN2) which indicate tonality of the color reproduction image.

12. A lookup table generation apparatus (U0) configured to:

generate a lookup table (200) which defines a correlation between usage amounts (Dc, Dm, Dy, Dk) of first color materials (CL1) used by a printing machine (300) in formation of printed matter (350) and usage amounts ($d_c$, $d_m$, dy, $d_k$, $d_{lc}$, $d_{lm}$) of second color materials (CL2) used by an image forming apparatus (100) in formation of a color reproduction image (160),

wherein the lookup table is generated to define the correlation so as to exhibit first output properties in relation to a first region (R1) including colors (UCi) contained in a specific image in an input color space which is represented by colors of the first color materials, and to define the correlation so as to exhibit second output properties, which differ from the first output properties, in relation to a second region (R2), which is different from the first region, in the input color space.

13. A color conversion apparatus (10), comprising:

a memory unit (U21) which stores a lookup table (200) which defines a correlation between usage amounts (Dc, Dm, Dy, Dk) of first color materials (CL1) used by a printing machine (300) in formation of printed matter (m1) and usage amounts ($d_c$, $d_m$, dy, $d_k$, $d_{lc}$, $d_{lm}$) of second color materials (CL2)used by an image forming apparatus (300) in formation of a color reproduction image (160), where the lookup table is generated to define the correlation so as to exhibit first output properties in relation to a first region (R1) including colors contained in a specific image in an input color space which is represented by colors of the first color materials, and to define the correlation so as to exhibit second output properties, which differ from the first output properties, in relation to a second region (R2), which is different from the first region, in the input color space; and
a color conversion unit (U22) configured to refer to the lookup table and perform color conversion.

14. The color conversion apparatus according to Claim 13,
wherein the first and the second output properties exhibited in the first and the second regions contained in the input color space are each represented by at least one of the color differences ($\Delta E$) between the chromatic values of the first color materials and the chromatic values of the second color materials in a predetermined observation light source (L0), index values (IN1) which indicate granularity of the color reproduction image, and index values (IN2) which indicate tonality of the color reproduction image.

# FIG. 1

# FIG. 2

200

M (FIX K VALUES TO CERTAIN VALUES)

$(N1 = Ng^4$ POINTS)

G1

Y

R2 R9 Rb R1 G2 G3 R1g

C

400

UCi

COORDINATES IN CMYK COLOR SPACE (Dc, Dm, Dy, AND Dk)
GRIND POINT INK AMOUNTS ($d_c$, $d_m$, $d_y$, $d_k$, $d_{lc}$, AND $d_{lm}$)

● COLOR MATERIAL AMOUNT PREDICTION
GRID POINTS G2 AND G3 OF PARTIAL LUT 230
(PORTION OF GRID POINTS G6 OF ORIGINAL LUT 205)

# FIG. 3

EP 2 884 731 A1

200

INDEX VALUES

IN1, IN2, ···

| USAGE AMOUNTS OF FIRST COLOR MATERIALS | | | | USAGE AMOUNTS OF SECOND COLOR MATERIALS | | | | | | $\Delta E$ | | | |
|---|---|---|---|---|---|---|---|---|---|---|---|---|---|
| C | M | Y | K | C | M | Y | K | Ic | Im | D50 | F10 | F2 | ··· |
| ⋮ | ⋮ | ⋮ | ⋮ | ⋮ | ⋮ | ⋮ | ⋮ | ⋮ | ⋮ | ⋮ | ⋮ | ⋮ | ⋮ |
| | | | | ··· | ··· | ··· | ··· | ··· | ··· | 0.5 | 0.4 | 1.0 | ··· |
| | | | | ··· | ··· | ··· | ··· | ··· | ··· | 1.3 | 0.5 | 0.9 | ··· |
| (FIRST REGION R1) | | | | ··· | ··· | ··· | ··· | ··· | ··· | 1.0 | 0.7 | 0.5 | ··· |
| | | | | ··· | ··· | ··· | ··· | ··· | ··· | 1.6 | 0.8 | 0.6 | ··· |
| | | | | ··· | ··· | ··· | ··· | ··· | ··· | 0.7 | 0.9 | 1.0 | ··· |
| ⋮ | ⋮ | ⋮ | ⋮ | ⋮ | ⋮ | ⋮ | ⋮ | ⋮ | ⋮ | ⋮ | ⋮ | ⋮ | ⋮ |
| Dc | Dm | Dy | Dk | $d_c$ | $d_m$ | $d_y$ | $d_k$ | $d_{lc}$ | $d_{lm}$ | $\Delta E_{D50}$ | $\Delta E_{F10}$ | $\Delta E_{F2}$ | ··· |
| ⋮ | ⋮ | ⋮ | ⋮ | ⋮ | ⋮ | ⋮ | ⋮ | ⋮ | ⋮ | ⋮ | ⋮ | ⋮ | ⋮ |
| ··· | ··· | ··· | ··· | ··· | ··· | ··· | ··· | ··· | ··· | 0.5 | 0.9 | 1.4 | ··· |
| ··· | ··· | ··· | ··· | ··· | ··· | ··· | ··· | ··· | ··· | 0.7 | 1.1 | 1.5 | ··· |
| ··· | ··· | ··· | ··· | ··· | ··· | ··· | ··· | ··· | ··· | 0.9 | 1.2 | 1.0 | ··· |
| ··· | ··· | ··· | ··· | ··· | ··· | ··· | ··· | ··· | ··· | 0.8 | 1.6 | 0.9 | ··· |
| ··· | ··· | ··· | ··· | ··· | ··· | ··· | ··· | ··· | ··· | 0.7 | 1.4 | 1.2 | ··· |
| ⋮ | ⋮ | ⋮ | ⋮ | ⋮ | ⋮ | ⋮ | ⋮ | ⋮ | ⋮ | ⋮ | ⋮ | ⋮ | ⋮ |

G1

UCi  400

N1 POINTS

SECOND REGION R2

$N1 = Ng^4$

FOR EXAMPLE, ALL $\Delta E_{F10\text{-}F2} \leq TH1$ SUBSET $\Delta E_{D50} > TH2$

FOR EXAMPLE, ALL $\Delta E_{D50} \leq TH2$ SUBSET $\Delta E_{F10\text{-}F2} > TH1$

# FIG. 4

# FIG. 5

## FIG. 6A

FEW GRID POINT LUT 210 (PORTION OF ORIGINAL LUT 205)

| USAGE AMOUNTS OF FIRST COLOR MATERIALS | | | | USAGE AMOUNTS OF SECOND COLOR MATERIALS | | | | | |
|---|---|---|---|---|---|---|---|---|---|
| C | M | Y | K | C | M | Y | K | lc | lm |
| ... | ... | ... | ... | ... | ... | ... | ... | ... | ... |
| ... | ... | ... | ... | ... | ... | ... | ... | ... | ... |
| Dc | Dm | Dy | Dk | $d_c$ | $d_m$ | $d_y$ | $d_k$ | $d_{lc}$ | $d_{lm}$ |
| ... | ... | ... | ... | ... | ... | ... | ... | ... | ... |
| ... | ... | ... | ... | ... | ... | ... | ... | ... | ... |

G5, N3 POINTS

## FIG. 6B

PARTIAL LUT 230 (PORTION OF ORIGINAL LUT 205)
(SKIN-COLOR REGION F10-F2)

| USAGE AMOUNTS OF FIRST COLOR MATERIALS | | | | USAGE AMOUNTS OF SECOND COLOR MATERIALS | | | | | | INDEX VALUES ΔE | | | |
|---|---|---|---|---|---|---|---|---|---|---|---|---|---|
| C | M | Y | K | C | M | Y | K | lc | lm | D50 | F10 | F2 | |
| 0 | 57 | 75 | 0 | ... | ... | ... | ... | ... | ... | 0.5 | 0.4 | 1.0 | ... |
| 20 | 57 | 75 | 0 | ... | ... | ... | ... | ... | ... | 1.3 | 0.5 | 0.9 | ... |
| 38 | 57 | 75 | 0 | ... | ... | ... | ... | ... | ... | 1.0 | 0.7 | 0.5 | ... |
| 0 | 75 | 75 | 0 | ... | ... | ... | ... | ... | ... | 1.6 | 0.8 | 0.6 | ... |
| 20 | 75 | 75 | 0 | ... | ... | ... | ... | ... | ... | 0.7 | 0.9 | 1.0 | ... |
| ... | ... | ... | ... | ... | ... | ... | ... | ... | ... | ... | ... | ... | ... |
| Dc | Dm | Dy | Dk | $d_c$ | $d_m$ | $d_y$ | $d_k$ | $d_{lc}$ | $d_{lm}$ | $\Delta E_{D50}$ | $\Delta E_{F10}$ | $\Delta E_{F2}$ | ... |
| ... | ... | ... | ... | ... | ... | ... | ... | ... | ... | ... | ... | ... | ... |

G2, G3, Np POINTS

# FIG. 7

200

M

(FIX K VALUES TO CERTAIN VALUES)

(N1 = Ng$^4$ POINTS)

G1

Y

G5

C

R9

● COLOR MATERIAL AMOUNT PREDICTION GRID POINTS G5
(N3 POINTS) OF FEW GRID POINT LUT 210
(PORTION OF GRID POINTS G6 OF ORIGINAL LUT 205)

# FIG. 8

```
            ( LUT GENERATION PROCESS )
                        │
                        ▼
        ┌───────────────────────────────────┐ ⟋S10
        │ SET LUT GENERATION CONDITIONS     │
        │ · SELECT SPECIFIC IMAGE (S11)     │
        │ · SELECT OUTPUT PROPERTIES (S12)  │
        └───────────────────────────────────┘
                        │
                        ▼                         400
        ┌───────────────────────────────────┐ ⟋S14    ┌──────┐
        │ UNIQUE COLOR REFERENCE GRID       │◄- - - - │ ◠    │─UCi
        │ POINT EXTRACTION PROCESS          │         └──────┘
        └───────────────────────────────────┘
                        │
                        ▼
        ┌───────────────────────────────────┐ ⟋S16   ← PRINT COLOR PROFILE
        │ GENERATE PARTIAL LUT              │        ⎛EXHIBIT FIRST OUTPUT⎞
        │ (GRID POINT NUMBER Np)            │        ⎝      PROPERTIES     ⎠
        └───────────────────────────────────┘
                        │
                        ▼
        ┌───────────────────────────────────┐ ⟋S18   ← PRINT COLOR PROFILE
        │ GENERATE FEW GRID POINT LUT       │        ⎛EXHIBIT SECOND OUTPUT⎞
        │ (GRID POINT NUMBER N3)            │        ⎝      PROPERTIES      ⎠
        └───────────────────────────────────┘
                        │
                        ▼
        ┌───────────────────────────────────┐ ⟋S20
        │ FINAL LUT GENERATION              │        $(N1 = Ng^4$ POINTS)
        │ PROCESS                           │
        └───────────────────────────────────┘                        14
                        │                                    ┌──────────┐
                        ▼                                    │          │
                  (   END   )                                │  LUT 200 │
                                                             └──────────┘
```

# FIG. 9

UNIQUE COLOR REFERENCE GRID POINT EXTRACTION PROCESS

DOWNSCALE SPECIFIC IMAGE — S102

400 — UCi

ACQUIRE UNIQUE COLORS (CMYK) — S104

ACQUIRE UNIQUE COLOR NUMBER Nc ($i = 1 \ldots Nc$) — S106

ACQUIRE GRID POINT COORDINATE VALUES OF FINAL LUT — S108

SPECIFY GRID POINTS FOR CONVERTING UNIQUE COLORS UCi ($2^4 = 16$ POINTS AT TIME OF INTERPOLATION) — S110

ADD COORDINATE VALUES OF SPECIFIED GRID POINTS TO STACK ($2^4 = 16$ POINTS AT TIME OF INTERPOLATION) — S112

ARE ALL UNIQUE COLORS PROCESSED? — S114    NO

YES

ELIMINATE REDUNDANCY OF STACK — S116

RECORD UNIQUE COLOR REFERENCE GRID POINTS — S118    (Np POINTS)

RETURN

## FIG. 10

FINAL LUT GENERATION PROCESS

ACQUIRE GRID POINT COORDINATE
VALUES OF FINAL LUT — S202
($N1 = Ng^4$ POINTS)

SUBJECT CMY COLOR SPACE TO
TRIANGULATION
(DELAUNAY TRIANGULATION)
FOR EACH K WITH GRID POINTS OF
ORIGINAL LUT AS VERTEXES — S204

ACQUIRE GRID POINT NUMBER N1
OF FINAL LUT
($i = 1 ... N1$) — S206

SPECIFY TETRAHEDRON OF
ORIGINAL LUT WHICH INTERPOLATES
GRID POINTS G1i OF FINAL LUT — S208

CALCULATE cmyklclm INK AMOUNTS
USING TETRAHEDRAL INTERPOLATION — S210

STORE cmyklclm INK AMOUNTS
IN GRID POINT G1i — S212

ARE ALL GRID
POINTS PROCESSED? — S214   NO

YES

SUBJECT OUTPUT USAGE AMOUNTS
OF BOUNDARY PORTION OF
REGION TO SMOOTHING — S216

STORE FINAL LUT — S218
($N1 = Ng^4$ POINTS)

RETURN

LUT 200   14

# FIG. 11

<u>500</u>

| | ☒ |

TARGET IMAGE FOR ANALYSIS  ⌐511  ABC.tif    ⌐521 IMAGE SELECTION

OUTPUT PROPERTIES  ⌐531  F10−F2  ▽

TARGET IMAGE FOR ANALYSIS  ⌐512  ABC.tif    ⌐522 IMAGE SELECTION

OUTPUT PROPERTIES  ⌐532  F10−F2  ▽

⋮

TARGET PRINTING MACHINE  ⌐541  OFFSET PRINTING MACHINE  ▽    ⌐550 CREATE

PAPER  ⌐542  COATED PAPER  ▽

F10−F2  ▽

F10−F2
F8−F2
C−D50
D50
···
LOW GRANULARITY
TONE
···

OFFSET PRINTING MACHINE  ▽

OFFSET PRINTING MACHINE
GRAVURE PRINTING MACHINE
···

## FIG. 12

400

PX1

FOR EXAMPLE, AVERAGE

410

(C, M, Y, K)

PX2

DOWNSCALE

$(C_1, M_1, Y_1, K_1)$
$(C_2, M_2, Y_2, K_2)$

PX2

| UC1 | UC2 | UC3 | UC4 |
|-----|-----|-----|-----|
| UC2 | UC3 | UC4 | UC5 |
| UC3 | UC4 | UC5 | UC6 |
| UC4 | UC5 | UC6 | UC7 |

UNIQUE COLOR EXTRACTION

| UCi | UNIQUE COLORS $(C_i, M_i, Y_i, K_i)$ |
|-----|------------------------------------|
| UC1 | $(C_1, M_1, Y_1, K_1)$ |
| UC2 | $(C_2, M_2, Y_2, K_2)$ |
| UC3 | $(C_3, M_3, Y_3, K_3)$ |
| UC4 | $(C_4, M_4, Y_4, K_4)$ |
| UC5 | $(C_5, M_5, Y_5, K_5)$ |
| UC6 | $(C_6, M_6, Y_6, K_6)$ |
| UC7 | $(C_7, M_7, Y_7, K_7)$ |

420

(Nc = 7)

UC1  UC2
UG1  UG2  UG3
UG4  UG5  UG6
UC3
UC4
UC5  UC7
UG7  UG8  UG9
UC6  (C, M, Y, K)

UNIQUE COLOR REFERENCE GRID POINT STACK

| UCi | UNIQUE COLOR REFERENCE GRID POINTS G2 AND G3 (GRID POINTS USED IN CONVERSION OF UCi) |
|-----|--------------------------------------------------------------------------------------|
| UC1 | UG1, UG2, UG4, UG5, ...(TOTAL 16 POINTS) |
| UC2 | UG2, UG3, UG5, UG6, ...(TOTAL 16 POINTS) |
| UC3 | UG2, UG3, UG5, UG6, ...(TOTAL 16 POINTS) |
| UC4 | UG4, UG4, UG7, UG8, ...(TOTAL 16 POINTS) |
| UC5 | UG4, UG4, UG7, UG8, ...(TOTAL 16 POINTS) |
| UC6 | UG4, UG4, UG7, UG8, ...(TOTAL 16 POINTS) |
| UC7 | UG5, UG6, UG8, UG9, ...(TOTAL 16 POINTS) |

430

ELIMINATE REDUNDANCY

UG1, UG2, UG3, UG4, UG5, UG6, UG7, UG8, UG9, ...

440
(Np POINTS)

# FIG. 13

K=0%

Y M C

CMY COLOR SPACE (LARGE GAMUT)

G5

K=25%

CMY COLOR SPACE

G5

FEW GRID POINT LUT 210 (N3 POINTS)

K=50%

CMY COLOR SPACE

G5

K=75%

CMY COLOR SPACE

G5

K=100%

CMY COLOR SPACE (SMALL GAMUT)

G5

# FIG. 14

PRINT COLOR PROFILE PR0

COORDINATES IN CMYK COLOR SPACE (Dc, Dm, Dy, AND Dk)
CHROMATIC VALUES ($L_D$, $a_D$, AND $b_D$)

● TOTAL N2 POINTS OF COLOR MATERIAL AMOUNT
PREDICTION GRID POINTS G2, G3, AND G5
(TOTAL N2 POINTS OF GRID POINTS G6 OF ORIGINAL LUT 205)

# FIG. 15

PRINT COLOR PROFILE PR1

(D50)

| | C | M | Y | K | L* | a* | b* |
|---|---|---|---|---|---|---|---|
| | 0 | 0 | 0 | 0 | $L_{0\text{-}D50}$ | $a_{0\text{-}D50}$ | $b_{0\text{-}D50}$ |
| N4 POINTS | ⋮ | ⋮ | ⋮ | ⋮ | ⋮ | ⋮ | ⋮ |
| | ⋮ | ⋮ | ⋮ | ⋮ | ⋮ | ⋮ | ⋮ |
| | Dc | Dm | Dy | Dk | $L_{D\text{-}D50}$ | $a_{D\text{-}D50}$ | $b_{D\text{-}D50}$ |
| | ⋮ | ⋮ | ⋮ | ⋮ | ⋮ | ⋮ | ⋮ |
| | ⋮ | ⋮ | ⋮ | ⋮ | ⋮ | ⋮ | ⋮ |

PRINT COLOR PROFILE PR2

(F10)

| | C | M | Y | K | L* | a* | b* |
|---|---|---|---|---|---|---|---|
| | 0 | 0 | 0 | 0 | $L_{0\text{-}F10}$ | $a_{0\text{-}F10}$ | $b_{0\text{-}F10}$ |
| N4 POINTS | ⋮ | ⋮ | ⋮ | ⋮ | ⋮ | ⋮ | ⋮ |
| | ⋮ | ⋮ | ⋮ | ⋮ | ⋮ | ⋮ | ⋮ |
| | Dc | Dm | Dy | Dk | $L_{D\text{-}F10}$ | $a_{D\text{-}F10}$ | $b_{D\text{-}F10}$ |
| | ⋮ | ⋮ | ⋮ | ⋮ | ⋮ | ⋮ | ⋮ |
| | ⋮ | ⋮ | ⋮ | ⋮ | ⋮ | ⋮ | ⋮ |

PRINT COLOR PROFILE PR3

(F2)

| | C | M | Y | K | L* | a* | b* |
|---|---|---|---|---|---|---|---|
| | 0 | 0 | 0 | 0 | $L_{0\text{-}F2}$ | $a_{0\text{-}F2}$ | $b_{0\text{-}F2}$ |
| N4 POINTS | ⋮ | ⋮ | ⋮ | ⋮ | ⋮ | ⋮ | ⋮ |
| | ⋮ | ⋮ | ⋮ | ⋮ | ⋮ | ⋮ | ⋮ |
| | Dc | Dm | Dy | Dk | $L_{D\text{-}F2}$ | $a_{D\text{-}F2}$ | $b_{D\text{-}F2}$ |
| | ⋮ | ⋮ | ⋮ | ⋮ | ⋮ | ⋮ | ⋮ |
| | ⋮ | ⋮ | ⋮ | ⋮ | ⋮ | ⋮ | ⋮ |

PR0

⋮

# FIG. 16

# FIG. 17

OBSERVATION LIGHT SOURCE

SPECTRAL ENERGY P($\lambda$)

$\lambda$

×

TARGET

SPECTRAL REFLECTANCE Rt($\lambda$)

$\lambda$

×

ISOCHROMATIC FUNCTION

z($\lambda$)   y($\lambda$)   x($\lambda$)

$\lambda$

⇩ NORMALIZATION

THREE STIMULATION VALUES (X, Y, AND Z)

⇩ TRANSFORMATION

CHROMATIC VALUES (L*, a* AND b*)

EP 2 884 731 A1

# FIG. 18

GENERATION UNITS U3 AND U4

ASSOCIATE OPTIMAL SOLUTION OF INK AMOUNT SET φ WITH Dc, Dm, Dy, AND Dk

COLOR CONVERSION LUT PR1, PR2, ...

Dc, Dm, Dy, Dk

OPTIMAL SOLUTION OF INK AMOUNT SET φ

P3a1

ICM

UPDATE INK AMOUNT SET φ

CALCULATE OPTIMAL SOLUTION

INK AMOUNT SET φ

TARGET CHROMATIC VALUES

P3a2

RPM

SPECTRAL PRINTING MODEL

EVALUATION VALUE $I(\phi)$

PREDICTED SPECTRAL REFLECTANCE

$R_s(\lambda)$

P3a3

RDB SPECTRAL REFLECTANCE DATABASE

CCM

$X = k \int P(\lambda) R_s(\lambda) x(\lambda) d\lambda$

$Y = k \int P(\lambda) R_s(\lambda) y(\lambda) d\lambda$

$Z = k \int P(\lambda) R_s(\lambda) z(\lambda) d\lambda$

PREDICTED CHROMATIC VALUES $L_d$, $a_d$, AND $b_d$

P3a4

ECM

$$I(\phi) = \frac{\sum\limits_{i=1}^{N}(w_i \Delta E_i)}{N}$$

OPTIMAL INK AMOUNT CALCULATION MODULE GROUP (PREDICTION UNIT)

U10

# FIG. 19

CIE L*a*b* COLOR SPACE

$\Delta E_{D50}$

SET OBSERVATION LIGHT SOURCE

$\Delta E_{D65}$

$\Delta E_A$

● TARGET CHROMATIC VALUES

■ PREDICTED CHROMATIC VALUES
(UPDATE $\phi$ n TIMES)

□ PREDICTED CHROMATIC VALUES
(UPDATE $\phi$ m TIMES)

WHERE n > m

# FIG. 20

COLOR REPRODUCTION IMAGE
OUTPUT CONTROL PROCESS

ACQUIRE INPUT DATA — S302

SELECT LUT — S304

COLOR CONVERSION — S306

$\phi(d_c, d_m, d_y, d_k, d_{lc}, d_{lm})$

HALF TONE — S308

GENERATE OUTPUT
CONTROL DATA — S310

| C | M | Y | K | Ic | Im |

21a      21a   21

21a      21a

M2

## FIG. 21

SPECTRAL REFLECTANCE DATABASE (RDB)

| INK AMOUNT SET | SPECTRAL REFLECTANCE (%) |
|---|---|
| C, M, Y, K, Ic, Im | $\lambda$ = 320 330 ... 840 (nm) |
| 0, 0, 0, 0, 0, 0 | 100 100 ... 100 |
| 51, 0, 0, 0, 0, 0 | : |
| 102, 0, 0, 0, 0, 0 | : |
| : | : |
| | |
| | |
| | |
| : | : |
| | |
| | |

CM INK AMOUNT SURFACE

# FIG. 22A
## SPECTRAL NEUGEBAUER MODEL

$$R_S(\lambda) = a_w R_w(\lambda) + a_c R_c(\lambda) + \cdots + a_k R_k(\lambda)$$
$$a_w = (1-f_c)(1-f_m)(1-f_y)$$
$$a_c = f_c(1-f_m)(1-f_y)$$
$$a_m = (1-f_c)f_m(1-f_y)$$
$$a_y = (1-f_c)(1-f_m)f_y$$
$$a_r = (1-f_c)f_m f_y$$
$$a_g = f_c(1-f_m)f_y$$
$$a_b = f_c f_m(1-f_y)$$
$$a_k = f_c f_m f_y$$

# FIG. 22B
## MURRAY-DAVIES MODEL

$$f_c = f_{1D\text{-}LUT}(d_c)$$

## FIG. 23A

CELLULAR YULE-NIELSEN
SPECTRAL NEUGEBAUER MODEL

## FIG. 23B

INK COVERAGE RATE fc(d)

## FIG. 23C

CALCULATION OF SPECTRAL REFLECTANCE $R(\lambda)$

$$R_s(\lambda) = \left( \sum a_i R_i(\lambda)^{1/n} \right)^n$$

$$= \left( a_{11}R_{11}(\lambda)^{1/n} + a_{12}R_{12}(\lambda)^{1/n} + a_{21}R_{21}(\lambda)^{1/n} + a_{22}R_{22}(\lambda)^{1/n} \right)^n$$

$$a_{11} = (1-f_c)(1-f_m)$$

$$a_{12} = (1-f_c)f_m$$

$$a_{21} = f_c(1-f_m)$$

$$a_{22} = f_c f_m$$

# FIG. 24

205

(FIX K VALUES TO CERTAIN VALUES)

M

Y

(N2 POINTS)

G6

G6h

C

GRID POINT INK AMOUNTS
($d_c$, $d_m$, $d_y$, $d_k$, $d_{lc}$, and $d_{lm}$)

## TETRAHEDRAL INTERPOLATION

G6h          G6h

G6h          G6t

G6h          G1i

G6t          G6t          G6t

TE

200

M

Y

(N1 = $Ng^4$ POINTS)

G1

G1i

C

GRID POINT INK AMOUNTS
($d_c$, $d_m$, $d_y$, $d_k$, $d_{lc}$, and $d_{lm}$)

# FIG. 25

(SAME APPLIES TO m/y/k/lc/lm)

# FIG. 26

LOW PERCEPTIBLE GRANULARITY ⟷ HIGH PERCEPTIBLE GRANULARITY

160 — c DOT / m DOT / y DOT

160 — k DOT

251

$+\Delta d$

$d_c$  $d_m$  $d_y$  $-\Delta d$

c  m  y  k

200

$d_c$  $d_m$  $d_y$  $d_k$

c  m  y  k

252

$-\Delta d$  $d_k$  $+\Delta d$

c  m  y  k

SMALL GRANULARITY INDEX VALUE IN1 ⟷ LARGE GRANULARITY INDEX VALUE IN1

FIG. 27

FIG. 28

Europäisches
Patentamt
European
Patent Office
Office européen
des brevets

# EUROPEAN SEARCH REPORT

Application Number

EP 14 19 7175

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 779 736 A2 (DAINIPPON SCREEN MFG [JP]) 18 June 1997 (1997-06-18) * page 9, line 54 - page 14, line 27 * * page 20, lines 6-39 * ----- | 1-14 | INV. H04N1/60 |
| X | EP 1 560 418 A2 (FUJI PHOTO FILM CO LTD [JP] FUJIFILM CORP [JP]) 3 August 2005 (2005-08-03) * paragraphs [0038] - [0095] * ----- | 1,12,13 | |
| X | WO 96/08918 A1 (APPLE COMPUTER [US]; STOKES MICHAEL [US]) 21 March 1996 (1996-03-21) * page 5, line 7 - page 9, line 18 * ----- | 1,12,13 | |
| A | US 2012/243011 A1 (FUKUDA MASAMI [JP] ET AL) 27 September 2012 (2012-09-27) * paragraph [0074]; figure 3 * ----- | 14 | |
| A | US 2005/094169 A1 (BERNS ROY S [US] ET AL) 5 May 2005 (2005-05-05) * the whole document * ----- | 1-14 | TECHNICAL FIELDS SEARCHED (IPC) H04N |

The present search report has been drawn up for all claims

| Place of search | Date of completion of the search | Examiner |
|---|---|---|
| The Hague | 7 April 2015 | Hardell, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 19 7175

This annex lists the patent family members relating to the patent documents cited in the above-mentioned European search report.
The members are as contained in the European Patent Office EDP file on
The European Patent Office is in no way liable for these particulars which are merely given for the purpose of information.

07-04-2015

| Patent document cited in search report | | Publication date | Patent family member(s) | | Publication date |
|---|---|---|---|---|---|
| EP 0779736 | A2 | 18-06-1997 | DE | 69632621 D1 | 08-07-2004 |
| | | | DE | 69632621 T2 | 09-06-2005 |
| | | | EP | 0779736 A2 | 18-06-1997 |
| | | | JP | 3436851 B2 | 18-08-2003 |
| | | | JP | H09224158 A | 26-08-1997 |
| | | | US | 5881211 A | 09-03-1999 |
| EP 1560418 | A2 | 03-08-2005 | EP | 1560418 A2 | 03-08-2005 |
| | | | JP | 2005217758 A | 11-08-2005 |
| WO 9608918 | A1 | 21-03-1996 | AU | 3554595 A | 29-03-1996 |
| | | | US | 5627950 A | 06-05-1997 |
| | | | WO | 9608918 A1 | 21-03-1996 |
| US 2012243011 | A1 | 27-09-2012 | JP | 2012199831 A | 18-10-2012 |
| | | | US | 2012243011 A1 | 27-09-2012 |
| US 2005094169 | A1 | 05-05-2005 | JP | 4388553 B2 | 24-12-2009 |
| | | | JP | 2007516663 A | 21-06-2007 |
| | | | US | 2005094169 A1 | 05-05-2005 |
| | | | WO | 2005043884 A1 | 12-05-2005 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007516663 T
- JP 2007137021 A

- JP 2009200820 A

**Non-patent literature cited in the description**

- Cellular Yule-Nielsen Spectral Neugebauer Model, refer to Color Res Appl. *Cellular Yule-Nielsen Spectral Neugebauer Model, refer to Color Res Appl,* 2000, vol. 25, 4-19

- **R. BALASUBRAMANIAN.** Optimization of the spectral Neugebauer model for printer characterization. *J. Electronic Imaging,* 1999, vol. 8 (2), 156-166
- **MAKOTO FUJINO.** *Image Quality Evaluation of Inkjet Prints, Japan Hardcopy '99,* 1999, 291-294